# EUROPEAN PATENT APPLICATION

(11) **EP 4 796 346 A1**
(43) Date of publication of application: **26.08.2026**
(21) Application number: 26159427.9
(22) Date of filing: 18.02.2026
(51) Int. Cl.: B60C 1/00, C08L 9/00

(54) **TIRE TREAD RUBBER COMPOSITION AND RELATED METHODS**

(30) Priority: 19.02.2025 US 202519057257
(71) Applicant: BRIDGESTONE CORPORATION, Chuo-ku Tokyo 104-8340 (JP); Bridgestone Americas Tire Operations, LLC, Nashville, TN 37201 (US)
(72) Inventor: KARUTH, Anas, Cuyahoga Falls, 44221 (US); KUHEL III, James J., Stow, 44224 (US); SONE, Ryota, Fairlawn, 44333 (US); AHMED, Shammi, Copley, 44321 (US); MCINTYRE, Gabrielle L., Akron, 44320 (US); KOCSIS, Laura S., Akron, 44313 (US); RAZAVI, Masoud, Stow, 44224 (US)
(74) Representative: Marks & Clerk LLP

(57) **Abstract**

Disclosed herein are tire tread rubber compositions comprising a specified elastomer component, reinforcing silica filler, a specified hydrocarbon resin, liquid plasticizer, and a cure package. The elastomer component includes styrene-butadiene rubber and high cis linear polybutadiene. Use of the disclosed ingredients may result in a tire tread having particular properties, as discussed further herein.

## Description

### CROSS-REFERENCE TO RELATED APPLICATION

This application claims priority to U.S. Patent Application Serial No. 19/057,257, filed February 19, 2025, which is a continuation-in-part of PCT Application No. PCT/US2024/042198 filed August 14, 2024, which claims priority to and any other benefit of U.S. Provisional Patent Application Serial No. 63/519,812 filed August 15, 2023, and entitled "Tire Tread Rubber Composition And Related Methods," the entire disclosure of each of which is hereby incorporated by reference.

### FIELD

The present application is directed to tire tread rubber compositions and related methods.

### BACKGROUND

Tires comprise many components including a road-contacting tread. The particular ingredients used to prepare the rubber composition which comprises the tire tread may vary. Formulation of tire tread rubber compositions is a complex science since changes to the formulation which result in an improvement in one property (*e.g.,* wear) may result in deterioration of another property (*e.g.,* snow traction).

### SUMMARY

Disclosed herein are rubber compositions for tire treads and related methods.

In a first embodiment, a tire tread rubber composition is disclosed. The composition is made of ingredients comprising: (a) 100 parts of an elastomer component comprising (i) 45-20 parts, preferably 40-25 parts of styrene-butadiene rubber, and (ii) 55-80 parts, preferably 60-75 parts of linear polybutadiene rubber having a cis bond content of at least 95% and a Tg of less than -101 °C, preferably -101 to -110 °C, less than -105 °C, or -105 to -109 °C, wherein the linear polybutadiene rubber has a T80 value of about 5 to about 1.5, preferably about 3.5 to about 2, as measured using a viscometer, and preferably also a g ratio of at least 0.85, and a g' ratio of at least 0.95, as measured using gyration data and intrinsic viscosity data, respectively, using a GPC-MALS detector; at least one reinforcing silica filler in an amount of 85-110 phr, preferably 85-100 phr; (c) no more than 15 phr of carbon black filler, preferably 5-10 phr of carbon black filler; (d) 5-15 phr, preferably 5-12 phr, more preferably 7-10 phr of at least one hydrocarbon resin having a Tg of about 30 to about 50 °C; (e) 10-29 phr, preferably 15-25 phr of at least one liquid plasticizer; and (f) a cure package, wherein the total amount of (d) and (e) is no more than 40 phr, preferably 15-40 phr, more preferably 20-35 phr, even more preferably 25-35 phr.

In a second embodiment, a method for improving the wear resistance of a tire tread rubber composition which contains high cis polybutadiene as a majority amount by weight of 100 parts of an elastomer component, the method comprising incorporating a linear polybutadiene rubber having a cis bond content of at least 95% and a Tg of less than -101 °C, preferably -101 to -110 °C, less than -105 °C, or -105 to -109 °C, wherein the linear polybutadiene rubber has a T80 value of about 5 to about 1.5, preferably about 3.5 to about 2, as measured using a viscometer, and preferably also a g ratio of at least 0.85, and a g' ratio of at least 0.95, as measured using gyration data and intrinsic viscosity data, respectively, using a GPC-MALS detector, into the tire tread rubber composition according to the first embodiment disclosed herein, wherein the wear resistance is improved by at least 10%, preferably at least 15%, more preferably at least 20% as compared to a control tire tread rubber composition wherein the linear polybutadiene rubber is replaced with an equivalent amount of a branched polybutadiene rubber having a cis bond content of at least 95% and a Tg of less than -101 °C, preferably -101 to -110 °C, less than -105 °C, or -105 to -109 °C, wherein the branched polybutadiene rubber has a T80 value of at least 5, preferably at least 6, as measured using a viscometer and a gel content of at least 5.5%, preferably at least 6%, more preferably at least 6.5%, as measured using a toluene immersion test, wherein the Mooney viscosity of the linear polybutadiene rubber and the branched polybutadiene rubber differ by no more than 5%, preferably no more than 3%, more preferably no more than 2.5%, and wherein the wear resistance is measured by DIN abrasion.

In a third embodiment, a tire tread rubber composition is disclosed. The composition is made of ingredients comprising: (a) 100 parts of an elastomer component comprising (i) 40-25 parts of an oil-extended non-functionalized styrene-butadiene rubber having a styrene monomer content of about 25 to about 35 weight %, a vinyl bond content of no more than 20%, and a Tg of about -40 to about -50 °C, and (ii) 60-75 parts of a non-functionalized linear polybutadiene rubber having a cis bond content of at least 95% and a Tg of less than -101 °C, preferably -101 to -110 °C, less than -105 °C, or -105 to -109 °C, wherein the linear polybutadiene rubber has a T80 value of about 5 to about 1.5, preferably about 3.5 to about 2, as measured using a viscometer, and preferably also a g ratio of at least 0.85, and a g' ratio of at least 0.95, as measured using gyration data and intrinsic viscosity data, respectively, using a GPC-MALS detector; (b) at least one reinforcing silica filler in an amount of 85-110 phr, preferably 85-100 phr; (c) no more than 15 phr of carbon black filler, preferably 5-10 phr of carbon black filler; (d) 5-15 phr, preferably 5-12 phr, more preferably 7-10 phr of at least one aromatic hydrocarbon resin having a Tg of about 30 to about 50 °C; (e) 10-29 phr, preferably 15-25 phr of at least one liquid plasticizer; and (f) a cure package, wherein the total amount of (d) and (e) is no more than 40 phr, preferably 15-40 phr, more preferably 20-35 phr, even more preferably 25-35 phr, and wherein the rubber composition has a value for tan δ at 60 °C of 0.18 to 0.23 and meets at least one of the following, preferably each of the following: (u) has a value for tan δ at -30 °C of no more than 1.6 times actual value the tan δ at 60 °C value, preferably between 1.6 times and 1.3 times the tan δ at 60 °C value; (v) has a value for tan δ at 0 °C of at least 1.3 times the tan δ at 60 °C value, preferably between 1.3 times and 2 times the tan δ at 60 °C value; or (w) has a value for tan δ at 30 °C of at least 1.1 times the tan δ at 60 °C value, preferably between 1.1 times and 2 times the tan δ at 60 °C value

In a fourth embodiment, a tire tread rubber composition is disclosed. The composition is made of ingredients comprising: (a) 100 parts of an elastomer component comprising (i) 45-20 parts, preferably 40-25 parts, more preferably 39-25 parts, and (ii) 55-80 parts, preferably 60-75 parts, more preferably 61-75 parts of non-functionalized linear polybutadiene rubber having a cis bond content of at least 95% and a Tg of less than -101 °C, preferably -101 to -110 °C, more preferably less than -105 °C or -105 to -109 °C, wherein the non-functionalized linear polybutadiene rubber has a T80 value of about 1 to about 7, as measured using a viscometer, and preferably also a long chain branching (LCB) index of about 3 to about 9, about 3 to about 5, or about 5 to about 8.5, as measured using a rubber process analyzer; (b) at least one reinforcing silica filler in an amount of 80-120, preferably 85-110 phr, more preferably 85-100 phr; (c) no more than 15 phr of carbon black filler, preferably 5-10 phr of carbon black filler; (d) 5-20 phr, preferably 5-15 phr, more preferably 5-12 phr, even more preferably 7-10 phr, of at least one hydrocarbon resin having a Tg of about 20 to about 70 °C, preferably about 30 to about 50 °C; (e) 10-29 phr, preferably 15-25 phr, of at least one liquid plasticizer, and (f) a cure package, wherein the total amount of (d) and (e) is no more than 40 phr, preferably 15-40 phr, more preferably 20-35 phr, even more preferably 25-35 phr.

In a fifth embodiment, a method for improving the wear resistance of a tire tread rubber composition which contains high cis polybutadiene as a majority amount by weight of 100 parts of an elastomer component, the method comprising incorporating a non-functionalized linear polybutadiene rubber having a cis bond content of at least 95% and a Tg of less than -101 °C, preferably -101 to -110 °C, less than -105 °C, or -105 to -109 °C, wherein the non-functionalized linear polybutadiene rubber has a T80 value of about 1 to about 7, about 1 to about 3, or about 3.5 to about 7, as measured using a viscometer, and preferably also a long chain branching (LCB) index of about 3 to about 9, about 3 to about 5, or about 5 to about 8.5, as measured using a rubber process analyzer, into the tire tread rubber composition according to the fourth embodiment disclosed herein, wherein the wear resistance is improved by at least 10%, preferably at least 15%, more preferably at least 20% as compared to a control tire tread rubber composition wherein the non-functionalized linear polybutadiene rubber is replaced with an equivalent amount of a branched polybutadiene rubber having a cis bond content of at least 95% and a Tg of less than -101 °C, preferably -101 to -110 °C, more preferably less than -105 °C or -105 to -109 °C, wherein the branched polybutadiene rubber has a T80 value of at least 9, preferably at least 10, as measured using a viscometer, and preferably also a LCB index of at least 11, preferably at least 13 as measured using a rubber process analyzer, and wherein the wear resistance is measured by DIN abrasion.

Also disclosed herein are tires including a tread comprising the tire tread rubber composition according to the first, third, or fourth embodiments disclosed herein.

### DETAILED DESCRIPTION

Disclosed herein are rubber compositions for tire treads and related methods.

In a first embodiment, a tire tread rubber composition is disclosed. The composition is made of ingredients comprising: (a) 100 parts of an elastomer component comprising (i) 45-20 parts, preferably 40-25 parts of styrene-butadiene rubber, and (ii) 55-80 parts, preferably 60-75 parts of linear polybutadiene rubber having a cis bond content of at least 95% and a Tg of less than -101 °C, preferably -101 to -110 °C, less than -105 °C, or -105 to -109 °C, wherein the linear polybutadiene rubber has a T80 value of about 5 to about 1.5, preferably about 3.5 to about 2, as measured using a viscometer, and preferably also a g ratio of at least 0.85, and a g' ratio of at least 0.95, as measured using gyration data and intrinsic viscosity data, respectively, using a GPC-MALS detector; at least one reinforcing silica filler in an amount of 85-110 phr, preferably 85-100 phr; (c) no more than 15 phr of carbon black filler, preferably 5-10 phr of carbon black filler; (d) 5-15 phr, preferably 5-12 phr, more preferably 7-10 phr of at least one hydrocarbon resin having a Tg of about 30 to about 50 °C; (e) 10-29 phr, preferably 15-25 phr of at least one liquid plasticizer; and (f) a cure package, wherein the total amount of (d) and (e) is no more than 40 phr, preferably 15-40 phr, more preferably 20-35 phr, even more preferably 25-35 phr.

In a second embodiment, a method for improving the wear resistance of a tire tread rubber composition which contains high cis polybutadiene as a majority amount by weight of 100 parts of an elastomer component, the method comprising incorporating a linear polybutadiene rubber having a cis bond content of at least 95% and a Tg of less than -101 °C, preferably -101 to -110 °C, less than -105 °C, or -105 to -109 °C, wherein the linear polybutadiene rubber has a T80 value of about 5 to about 1.5, preferably about 3.5 to about 2, as measured using a viscometer, and preferably also a g ratio of at least 0.85, and a g' ratio of at least 0.95, as measured using gyration data and intrinsic viscosity data, respectively, using a GPC-MALS detector, into the tire tread rubber composition according to the first embodiment disclosed herein, wherein the wear resistance is improved by at least 10%, preferably at least 15%, more preferably at least 20% as compared to a control tire tread rubber composition wherein the linear polybutadiene rubber is replaced with an equivalent amount of a branched polybutadiene rubber having a cis bond content of at least 95% and a Tg of less than -101 °C, preferably -101 to -110 °C, less than -105 °C, or -105 to -109 °C, wherein the branched polybutadiene rubber has a T80 value of at least 5, preferably at least 6, as measured using a viscometer and a gel content of at least 5.5%, preferably at least 6%, more preferably at least 6.5%, as measured using a toluene immersion test, wherein the Mooney viscosity of the linear polybutadiene rubber and the branched polybutadiene rubber differ by no more than 5%, preferably no more than 3%, more preferably no more than 2.5%, and wherein the wear resistance is measured by DIN abrasion.

In a third embodiment, a tire tread rubber composition is disclosed. The composition is made of ingredients comprising: (a) 100 parts of an elastomer component comprising (i) 40-25 parts of an oil-extended non-functionalized styrene-butadiene rubber having a styrene monomer content of about 25 to about 35 weight %, a vinyl bond content of no more than 20%, and a Tg of about -40 to about -50 °C, and (ii) 60-75 parts of a non-functionalized linear polybutadiene rubber having a cis bond content of at least 95% and a Tg of less than -101 °C, preferably -101 to -110 °C, less than -105 °C, or -105 to -109 °C, wherein the linear polybutadiene rubber has a T80 value of about 5 to about 1.5, preferably about 3.5 to about 2, as measured using a viscometer, and preferably also a g ratio of at least 0.85, and a g' ratio of at least 0.95, as measured using gyration data and intrinsic viscosity data, respectively, using a GPC-MALS detector; (b) at least one reinforcing silica filler in an amount of 85-110 phr, preferably 85-100 phr; (c) no more than 15 phr of carbon black filler, preferably 5-10 phr of carbon black filler; (d) 5-15 phr, preferably 5-12 phr, more preferably 7-10 phr of at least one aromatic hydrocarbon resin having a Tg of about 30 to about 50 °C; (e) 10-29 phr, preferably 15-25 phr of at least one liquid plasticizer; and (f) a cure package, wherein the total amount of (d) and (e) is no more than 40 phr, preferably 15-40 phr, more preferably 20-35 phr, even more preferably 25-35 phr, and wherein the rubber composition has a value for tan δ at 60 °C of 0.18 to 0.23 and meets at least one of the following, preferably each of the following: (u) has a value for tan δ at -30 °C of no more than 1.6 times actual value the tan δ at 60 °C value, preferably between 1.6 times and 1.3 times the tan δ at 60 °C value; (v) has a value for tan δ at 0 °C of at least 1.3 times the tan δ at 60 °C value, preferably between 1.3 times and 2 times the tan δ at 60 °C value; or (w) has a value for tan δ at 30 °C of at least 1.1 times the tan δ at 60 °C value, preferably between 1.1 times and 2 times the tan δ at 60 °C value.

In a fourth embodiment, a tire tread rubber composition is disclosed. The composition is made of ingredients comprising: (a) 100 parts of an elastomer component comprising (i) 45-20 parts, preferably 40-25 parts, more preferably 39-25 parts, and (ii) 55-80 parts, preferably 60-75 parts, more preferably 61-75 parts of non-functionalized linear polybutadiene rubber having a cis bond content of at least 95% and a Tg of less than -101 °C, preferably -101 to -110 °C, more preferably less than -105 °C or -105 to -109 °C, wherein the non-functionalized linear polybutadiene rubber has a T80 value of about 1 to about 7, as measured using a viscometer, and preferably also a long chain branching (LCB) index of about 3 to about 9, about 3 to about 5, or about 5 to about 8.5, as measured using a rubber process analyzer; (b) at least one reinforcing silica filler in an amount of 80-120, preferably 85-110 phr, more preferably 85-100 phr; (c) no more than 15 phr of carbon black filler, preferably 5-10 phr of carbon black filler; (d) 5-20 phr, preferably 5-15 phr, more preferably 5-12 phr, even more preferably 7-10 phr, of at least one hydrocarbon resin having a Tg of about 20 to about 70 °C, preferably about 30 to about 50 °C; (e) 10-29 phr, preferably 15-25 phr, of at least one liquid plasticizer, and (f) a cure package, wherein the total amount of (d) and (e) is no more than 40 phr, preferably 15-40 phr, more preferably 20-35 phr, even more preferably 25-35 phr.

In a fifth embodiment, a method for improving the wear resistance of a tire tread rubber composition which contains high cis polybutadiene as a majority amount by weight of 100 parts of an elastomer component, the method comprising incorporating a non-functionalized linear polybutadiene rubber having a cis bond content of at least 95% and a Tg of less than -101 °C, preferably -101 to -110 °C, less than -105 °C, or -105 to -109 °C, wherein the non-functionalized linear polybutadiene rubber has a T80 value of about 1 to about 7, about 1 to about 3, or about 3.5 to about 7, as measured using a viscometer, and preferably also a long chain branching (LCB) index of about 3 to about 9, about 3 to about 5, or about 5 to about 8.5, as measured using a rubber process analyzer, into the tire tread rubber composition according to the fourth embodiment disclosed herein, wherein the wear resistance is improved by at least 10%, preferably at least 15%, more preferably at least 20% as compared to a control tire tread rubber composition wherein the non-functionalized linear polybutadiene rubber is replaced with an equivalent amount of a branched polybutadiene rubber having a cis bond content of at least 95% and a Tg of less than -101 °C, preferably -101 to -110 °C, more preferably less than -105 °C or -105 to -109 °C, wherein the branched polybutadiene rubber has a T80 value of at least 9, preferably at least 10, as measured using a viscometer, and preferably also a LCB index of at least 11, preferably at least 13 as measured using a rubber process analyzer, and wherein the wear resistance is measured by DIN abrasion.

Also disclosed herein are tires including a tread comprising the tire tread rubber composition according to the first, third, or fourth embodiments disclosed herein.

### Definitions

The terminology as set forth herein is for description of the embodiments only and should not be construed as limiting the invention as a whole.

As used herein, the term "majority" refers to more than 50%.

As used herein, the abbreviation Mn is used for number average molecular weight.

As used herein, the abbreviation Mp is used for peak molecular weight.

As used herein, the abbreviation Mw is used for weight average molecular weight.

Unless otherwise indicated herein, the term "Mooney viscosity" refers to the Mooney viscosity, ML₁₊₄. As those of skill in the art will understand, a rubber composition's Mooney viscosity is measured prior to vulcanization or curing.

As used herein, the term "natural rubber" means naturally occurring rubber such as can be harvested from sources such as *Hevea* rubber trees and *non-Hevea* sources *(e.g.,* guayule shrubs and dandelions such as TKS). In other words, the term "natural rubber" should be construed so as to exclude synthetic polyisoprene.

As used herein, the term "phr" means parts per one hundred parts rubber. The one hundred parts rubber is also referred to herein as 100 parts of an elastomer component.

As used herein the term "polyisoprene" means synthetic polyisoprene. In other words, the term is used to indicate a polymer that is manufactured from isoprene monomers, and should not be construed as including naturally occurring rubber (*e.g., Hevea* natural rubber, guayule-sourced natural rubber, or dandelion-sourced natural rubber). However, the term polyisoprene should be construed as including polyisoprenes manufactured from natural sources of isoprene monomer.

As used herein, the term "tread," refers to both the portion of a tire that comes into contact with the road under normal inflation and load as well as any subtread.

### Tire Tread Rubber Composition

As mentioned above, the first, third and fourth embodiments disclosed herein are directed to tire tread rubber compositions made of specified ingredients and to methods for improving the wear resistance of a tire tread rubber composition according to the first, third or fourth embodiments (*i.e.,* the second and fifth embodiments). The subject rubber compositions are used in preparing treads for tires, generally by a process which includes forming of a tread pattern by molding and curing one of the subject rubber compositions. Thus, the tire treads will contain a cured form of one of the tire tread rubber compositions. The tire tread rubber compositions may be present in the form of a tread which has been formed but not yet incorporated into a tire and/or they may be present in a tread which forms part of a tire.

According to the first-third and fourth-fifth embodiments disclosed herein, the Tg of the overall rubber composition may vary. The Tg of the overall rubber composition may be referred to as a compound Tg or as a rubber composition Tg. In certain embodiments of the first-third and fourth-fifth embodiments, the rubber composition has a compound Tg of -45 to -60 °C (*e.g.,* -45, -46, -47, -48, -49, -50, -51, -52, -53, -54, -55, -56, -57, -58, -59, or -60 °C ), preferably - 45 to -55 °C (*e.g.,* -45, -46, -47, -48, -49, -50, -51, -52, -53, -54, or -55°C ). The compound Tg of a rubber composition can be measured using a dynamic mechanical thermal spectrometer (such as the Gabo instrument described below, operating in tension mode) generally following the guidelines of ASTM D5992-96 (2011) and using a temperature sweep (from -70 to 65 °C), under specified test conditions (*i.e.,* frequency 52 Hz, static strain of 6%, dynamic strain of 0.1%, sample geometry 4.75 mm wide x 29 mm long x 2 mm deep), with the measurement made on the sample after curing for 15 minutes at 170 °C, and using a vibratory method to estimate the Tg from the curve that results.

According to the fourth and fifth embodiments disclosed herein, the Mooney viscosity ML₁₊₄ at 130 °C (compound Mooney) of the tire tread rubber composition may vary. In certain embodiments of the fourth and fifth embodiments disclosed herein, the rubber composition has a Mooney viscosity ML₁₊₄ at 130 °C of 75 to 90 (*e.g.,* 75, 76, 77, 78, 79, 80, 81, 82, 83, 84, 85, 86, 87, 88, 89, or 90), preferably 78 to 88 (*e.g.,* 78, 79, 80, 81, 82, 83, 84, 85, 86, 87, or 88), more preferably 80 to 85 (*e.g.,* 80, 81, 82, 83, 84, or 85). The compound Mooney of the tire tread rubber composition according to the fourth and fifth embodiments may vary depending upon the amount of polybutadiene (ii) present in the composition. For example, compositions having relatively less polybutadiene (*e.g.,* 55-59 parts) may in certain embodiments of the fourth and fifth embodiments, have a Mooney viscosity ML₁₊₄ at 130 °C of about 75 to about 85 or 75 to 80 (*e.g.,* 75, 76, 77, 78, 79, or 80), preferably about 78 to about 83 or 78 to 83 (*e.g.,* 78, 79, 80, 81, 82, or 83); compositions have an intermediate amount of polybutadiene (*e.g.,* 60-70 parts) may in certain embodiments of the fourth and fifth embodiments, have a Mooney viscosity ML₁₊₄ at 130 °C of about 78 to about 88 or 78 to 88 (*e.g.,* 78, 79, 80, 81, 82, 83, 84, 85, 86, 87, or 88), preferably about 80 to about 85 or 80 to 85 (*e.g.,* 80, 81, 82, 83, 84, or 85); and compositions having a larger amount of polybutadiene (*e.g.,* 71-80 phr) may in certain embodiments of the fourth and fifth embodiments, have a Mooney viscosity ML₁₊₄ at 130 °C of about 82 to about 92 or 82 to 92 (*e.g.,* 82, 83, 84, 85, 86, 87, 88, 89, 90, 91, or 92), preferably about 84 to about 90 or 84 to 90 (*e.g.,* 84, 85, 86, 87, 88, 89, or 90). The Mooney viscosity (ML1+4) at 130 °C is determined at 130 °C by using an Alpha Technologies Mooney viscometer with a large rotor, a one-minute warm-up time, and a four-minute running time.

### Elastomer Component

As mentioned above, according to the first-third and fourth-fifth embodiments, the tire tread rubber composition is made of ingredients comprising (including) 100 parts of an elastomer component. The ingredients of the elastomer component include styrene-butadiene rubber and linear polybutadiene rubber. The total amount of 100 parts of elastomer or rubber is used so that the amount of other ingredients may be listed in amounts of phr or the number of parts per hundred parts of rubber (or 100 parts of the elastomer component). As a non-limiting example, for a rubber composition containing 35 parts of styrene-butadiene rubber, 65 parts of polybutadiene rubber, and 110 parts of reinforcing silica filler, the amount of silica filler can also be described as 110 phr.

As mentioned above, according to the first embodiment and in certain embodiments of the second embodiment, the 100 parts of elastomer component comprises (includes) (i) 45-20 parts (*e.g.,* 45, 44, 43, 42, 41, 40, 39, 38, 37, 36, 35, 34, 33, 32, 31, 30, 29, 28, 27, 26, 25, 24, 23, 22, 21, or 20 parts), preferably 40-25 parts (*e.g.,* 40, 39, 38, 37, 36, 35, 34, 33, 32, 31, 30, 29, 28, 27, 26, or 25 parts), more preferably 39-25 parts (*e.g.,* 39, 38, 37, 36, 35, 34, 33, 32, 31, 30, 29, 28, 27, 26, or 25 parts) of styrene-butadiene rubber; and (ii) 55-80 parts (*e.g.,* 55, 56, 57, 58, 59, 60, 61, 62, 63, 64, 65, 66, 67, 68, 69, 70, 71, 72, 73, 74, 75, 76, 77, 78, 79, or 80 parts), preferably 60-75 parts (*e.g.,* 60, 61, 62, 63, 64, 65, 66, 67, 68, 69, 70, 71, 72, 73, 74, or 75 parts), more preferably 61-75 parts (*e.g.,* 61, 62, 63, 64, 65, 66, 67, 68, 69, 70, 71, 72, 73, 74, or 75 parts) of a linear polybutadiene (as discussed *infra*) having a cis bond content of at least 95%, a Tg of less than -101 °C., preferably -101 or -110 °C, less than -105 °C, or -105 to -109 °C. As mentioned above, according to the third embodiment and in certain embodiments of the second embodiment, the 100 parts of elastomer component comprises (includes) 40-25 parts (*e.g.,* 40, 39, 38, 37, 36, 35, 34, 33, 32, 31, 30, 29, 28, 27, 26, or 25 parts) of styrene-butadiene rubber; and (ii) 60-75 parts (*e.g.,* 60, 61, 62, 63, 64, 65, 66, 67, 68, 69, 70, 71, 72, 73, 74, or 75 parts) of a linear (as discussed *infra*) polybutadiene having a cis bond content of at least 95%, a Tg of less than - 101 °C., preferably -101 or -110 °C, less than -105 °C, or -105 to -109 °C.

As mentioned above, according to the fourth embodiment and fifth embodiments, the 100 parts of elastomer component comprises (includes) (i) 45-20 parts (*e.g.,* 45, 44, 43, 42, 41, 40, 39, 38, 37, 36, 35, 34, 33, 32, 31, 30, 29, 28, 27, 26, 25, 24, 23, 22, 21, or 20 parts), preferably 40-25 parts (*e.g.,* 40, 39, 38, 37, 36, 35, 34, 33, 32, 31, 30, 29, 28, 27, 26, or 25 parts) of styrene-butadiene rubber, more preferably 39-25 parts (*e.g.,* 39, 38, 37, 36, 35, 34, 33, 32, 31, 30, 29, 28, 27, 26, or 25 parts); and (ii) 55-80 parts (e.g., 55, 56, 57, 58, 59, 60, 61, 62, 63, 64, 65, 66, 67, 68, 69, 70, 71, 72, 73, 74, 75, 76, 77, 78, 79, or 80 parts), preferably 60-75 parts (e.g., 60, 61, 62, 63, 64, 65, 66, 67, 68, 69, 70, 71, 72, 73, 74, or 75 parts), more preferably 61-75 parts *(e.g.,* 61, 62, 63, 64, 65, 66, 67, 68, 69, 70, 71, 72, 73, 74, or 75 parts) of a non-functionalized linear polybutadiene (as discussed *infra)* having a cis bond content of at least 95%, a Tg of less than -101 °C., preferably -101 or -110 °C, less than -105 °C, or -105 to -109 °C.

In certain embodiments of the first-third and fourth-fifth embodiments, the total amount of (i) and (ii) is 90-100 parts (e.g., 90, 95, 99 or 100 parts) or even 100 parts. In certain embodiments of the first-third and fourth-fifth embodiments, the elastomer component includes (iii) natural rubber or polyisoprene in an amount of 10 parts or less (*e.g.,* 0-10 parts, 1-10 parts, 1 part, 2 parts, 3 parts, 4 parts, 5 parts, 6 parts, 7 parts, 8 parts, 9 parts, or 10 parts). In certain preferred embodiments of the first-third and fourth-fifth embodiments, the elastomer component is free of (*i.e.,* contains 0 parts of) natural rubber and polyisoprene. In preferred embodiments of the first-third and fourth-fifth embodiments, any natural rubber and/or polyisoprene that is present in the tread rubber composition is non-epoxidized; in certain such embodiments, the tread rubber composition contains no more than 5 phr of epoxidized natural rubber or epoxidized polyisoprene, more preferably 0 phr of epoxidized natural rubber or epoxidized polyisoprene. In certain embodiments of the first-third and fourth-fifth embodiments, the 100 parts of elastomer component consists (only) of (i) and (ii), in amounts as discussed above. In other embodiments of the first-third and fourth-fifth embodiments, the 100 parts of elastomer component consists (only) of (i), (ii), and (iii), in amounts as discussed above. In yet other embodiments of the first-third and fourth-fifth embodiments, the 100 parts of elastomer component includes in addition to (i), (ii) and (iii), one or more additional rubbers (iv). According to the first-third and fourth-fifth embodiments, when one or more additional rubbers (iv) is present, the amount will generally be limited to no more than 10 parts, or no more than 5 parts. In certain embodiments of the first-third and fourth-fifth embodiments, one or more additional rubbers (iv) are selected from diene monomer-containing rubbers; in certain such embodiments, the one or more additional rubbers (iv) are selected from the group consisting of styrene-isoprene rubber, butadiene-isoprene-rubber, styrene-isoprene-butadiene rubber, butyl rubber (both halogenated and non-halogenated), neoprene (polychloroprene), ethylene-propylene rubber, ethylene-propylene-diene rubber (EPDM), and combinations thereof. In yet other embodiments of the first-third and fourth-fifth embodiments, the one or more additional rubbers are selected from one or more styrene-butadiene rubbers other than the styrene-butadiene rubber (i), *e.g.,* a SBR that has a Tg of greater than -40 °C or less than -50 °C; from one or more polybutadiene rubbers other than the polybutadiene rubber (ii), *e.g.,* a BR having a cis bond content of less than 95% *e.g.,* a polybutadiene having a low cis 1, 4 bond content (*e.g*., a polybutadiene having a cis 1,4 bond content of less than 50%, less than 45%, less than 40%, etc.) and/or a Tg of greater than -101 °C; from a diene-monomer containing rubber other than the natural rubber or polyisoprene (iii); or a combination thereof.

The Tg values referred to herein for elastomers represent a Tg measurement made upon the elastomer without any oil-extension. In other words, for an oil-extended elastomer, the Tg values above refer to the Tg prior to oil extension or to a non-oil-extended version of the same elastomer. Elastomer or polymer Tg values may be measured using a differential scanning calorimeter (DSC) instrument, such as manufactured by TA Instruments (New Castle, Delaware), where the measurement is conducted using a temperature elevation of 10°C/minute after cooling at -120 °C. Thereafter, a tangent is drawn to the base lines before and after the jump of the DSC curve. The temperature on the DSC curve (read at the point corresponding to the middle of the two contact points) can be used as Tg.

In certain embodiments of the first-third and fourth-fifth embodiments, the average Tg of the elastomer component is -75 to -95 °C (*e.g.,* -75, -76, -77, -78, -79, -80, -81, -82, -83, -84, -85, -86, -87, -88, -89, or -90 °C), preferably -80 to -90 °C (*e.g.,* -80, -81, -82, -83, -84, -85, -86, -87, -88, -89, or -90°C). The average Tg of the elastomer component can be calculated using the Tg of each rubber present in the 100 parts of elastomer component and accounting for their relative weight percentage in the elastomer component. When one (or more) of the rubbers is oil-extended, only the amount of rubber (*i.e.,* excluding any amount of oil) is utilized in calculating the average Tg of the elastomer component. Additionally, when one (or more) of the rubbers is oil-extended, the Tg of the oil-extended rubber in its non-oil-extended form (*i.e.,* rubber only) is utilized in calculating the average Tg of the elastomer component.

### Styrene-Butadiene Rubber (i)

As mentioned above, according to the first embodiment and in certain embodiments of the second embodiment, the 100 parts of elastomer component comprises (includes) (i) 45-20 parts (*e.g.,* 45, 44, 43, 42, 41, 40, 39, 38, 37, 36, 35, 34, 33, 32, 31, 30, 29, 28, 27, 26, 25, 24, 23, 22, 21, or 20 parts), preferably 40-25 parts (*e.g.,* 40, 39, 38, 37, 36, 35, 34, 33, 32, 31, 30, 29, 28, 27, 26, or 25 parts) of styrene-butadiene rubber. In certain embodiments of the first and second embodiments, the styrene-butadiene rubber (i) has a Tg of about -40 to about -50 °C or -40 to -50 °C (*e.g.,* -40, -41, -42, -43, -44, -45, -46, -47, -48, -49, or -50 °C). As also mentioned above, according to the third embodiment and in certain embodiments of the second embodiment, the 100 parts of elastomer component comprises (includes) (i) 40-25 parts (*e.g.,* 40, 39, 38, 37, 36, 35, 34, 33, 32, 31, 30, 29, 28, 27, 26, or 25 parts) of styrene-butadiene rubber. According to the third embodiment and in certain embodiments of the first and second embodiments, the styrene-butadiene rubber (i) has a styrene monomer content of about 25 to about 35 weight % or 25-35 weight % *(e.g.,* 25, 26, 27, 28, 29, 30, 31, 32, 33, 34, or 35 weight %), a vinyl bond content of no more than 20% *(e.g.,* 20%, 19%, 18%, 17%, 16%, 15%, 14%, 13%, 12%, 10% or less) and a Tg of about -40 to about -50 °C or -40 to -50 °C (*e.g.,* -40, -41, -42, -43, -44, - 45, -46, -47, -48, -49, or -50 °C). The Tg values referred to herein for elastomers represent a Tg measurement made upon the elastomer without any oil-extension (when the elastomer or rubber is oil-extended). In other words, for an oil-extended elastomer, the Tg values above refer to the Tg prior to oil extension or to a non-oil-extended version of the same elastomer. Elastomer or polymer Tg values may be measured using a differential scanning calorimeter (DSC) instrument, such as manufactured by TA Instruments (New Castle, Delaware), where the measurement is conducted using a temperature elevation of 10°C/minute after cooling at -120°C. Thereafter, a tangent is drawn to the base lines before and after the jump of the DSC curve. The temperature on the DSC curve (read at the point corresponding to the middle of the two contact points) can be used as Tg.

As mentioned above, according to the fourth and fifth embodiment disclosed herein, the 100 parts of elastomer component includes (i) 45-20 parts (*e.g.,* 45, 44, 43, 42, 41, 40, 39, 38, 37, 36, 35, 34, 33, 32, 31, 30, 29, 28, 27, 26, 25, 24, 23, 22, 21, or 20 parts), preferably 40-25 parts (*e.g.,* 40, 39, 38, 37, 36, 35, 34, 33, 32, 31, 30, 29, 28, 27, 26, or 25 parts), more preferably (*e.g.,* 39, 38, 37, 36, 35, 34, 33, 32, 31, 30, 29, 28, 27, 26, or 25 parts) of styrene-butadiene rubber. In certain embodiments of the fourth and fifth embodiments, the styrene-butadiene rubber (i) has a styrene monomer content of about 25 to about 35 weight % or 25-35 weight % (*e.g.,* 25, 26, 27, 28, 29, 30, 31, 32, 33, 34, or 35 weight %), a vinyl bond content of no more than 20% (*e.g.,* 20%, 19%, 18%, 17%, 16%, 15%, 14%, 13%, 12%, 10% or less) and a Tg of about -40 to about -50 °C or -40 to -50 °C (*e.g.,* -40, -41, -42, -43, -44, -45, -46, -47, -48, -49, or - 50 °C). As mentioned above, the Tg values referred to herein for elastomers represent a Tg measurement made upon the elastomer without any oil-extension (when the elastomer or rubber is oil-extended). In other words, for an oil-extended elastomer, the Tg values above refer to the Tg prior to oil extension or to a non-oil-extended version of the same elastomer. Elastomer or polymer Tg values may be measured using DSC, according to the method discussed above.

According to the first-third and fourth-fifth embodiments, the elastomer component comprises (includes) as (i) styrene-butadiene rubber. According to the first-third and fourth-fifth embodiments, (i) of the elastomer component consists of (only) styrene-butadiene rubber. According to the first-third and fourth-fifth embodiments, one or more than one (*e.g.,* two, three, or more) styrene-butadiene rubbers may be used as (i). In preferred embodiments of the first-third and fourth-fifth embodiments, only one styrene-butadiene rubber is used as (i). According to the first-third and fourth-fifth embodiments, the styrene-butadiene rubber(s) of (i) may be prepared by either solution polymerization or by emulsion polymerization. In certain preferred embodiments of the first-third and fourth-fifth embodiments, the only styrene-butadiene rubber(s) used in (i) are prepared by solution polymerization. In other embodiments of the first-third and fourth-fifth embodiments, the only styrene-butadiene rubbers used in (i) are prepared by emulsion polymerization. In certain embodiments of the first-third and fourth-fifth embodiments, when more than one styrene-butadiene rubber is used for (i) the rubbers are a combination of solution polymerized SBR and emulsion polymerized SBR (*e.g.,* one solution SBR and one emulsion SBR). In certain preferred embodiments of the first-third and fourth-fifth embodiments, the elastomer component contains less than 20 parts (*e.g.,* 19, 18, 17, 16, 15, 14, 13, 12, 11, 10, 9, 8, 7, 6, 5, 4, 3, 2, 1, or 0 parts) of emulsion SBR, less than 15 parts of emulsion SBR, less than 10 parts of emulsion SBR, no more than 5 parts of emulsion SBR (*e.g.,* 5, 4, 3, 2, 1 or 0 parts), or 0 parts of emulsion SBR. In certain embodiments of the first-third and fourth-fifth embodiments, limitation of the amount of emulsion SBR (as discussed above) can be advantageous to the stiffness of the rubber composition and to achieving satisfactory rolling resistance performance.

According to the first-third and fourth-fifth embodiments disclosed herein, the styrene-butadiene rubber(s) present in the elastomer component as (i), may have varying Mw, Mn and polydispersity (Mw/Mn). In certain embodiments of the first-third and fourth-fifth embodiments, (i) of the elastomer component includes a styrene-butadiene rubber having a Mw of about 350,000 to about 550,000 grams/mole or 350,000 to 550,000 (*e.g.,* 350,000; 375,000; 400,000; 425,000; 450,000; 475,000; 500,000; 525,000; or 550,000 grams/mole), preferably a Mw of about 400,000 to about 500,000 grams/mole or 400,000 to 500,000 grams/mole (*e.g.,* 400,000; 425,000; 450,000; 475,000; or 500,000 grams/mole); in certain such embodiments, (i) includes only one SBR (which is preferably a solution polymerized SBR) and it has a Mw within one of the foregoing ranges. The Mw values referred to herein are weight average molecular weights which can be determined by using gel permeation chromatography (GPC) calibrated with styrene-butadiene standards and Mark-Houwink constants for the polymer in question. In certain embodiments of the first-third and fourth-fifth embodiments, the styrene-butadiene rubber of (i) has a Mw within one of the foregoing ranges (or a range within such ranges) in combination with a Mn within one of the following ranges or a range within such ranges). In certain embodiments of the first-third and fourth-fifth embodiments, the styrene-butadiene rubber of (i) has a Mw within one of the foregoing ranges (or a range within such ranges) in combination with a Mw/Mn within one of the following ranges or a range within such ranges). In certain embodiments of the first-third and fourth-fifth embodiments, the styrene-butadiene rubber of (i) has a Mw within one of the foregoing ranges (or a range within such ranges) in combination with a Mn within one of the following ranges or a range within such ranges) and a Mw/Mn within one of the following ranges (or a range within such ranges).

In certain embodiments of the first-third and fourth-fifth embodiments, (i) of the elastomer component includes a styrene-butadiene rubber having a Mn of about 175,000 to about 300,000 grams/mole or 175,000 to 300,000 grams/mole (*e.g.,* 175,000; 200,000; 225,000; 250,000; 275,000; or 300,000 grams/mole), preferably about 175,000 to about 250,000 grams/mole or 175,000 to 250,000 grams/mole (*e.g.,* 175,000; 200,000; 225,000; or 250,000 grams/mole); in certain such embodiments, (i) includes only one SBR (which is preferably a solution polymerized SBR) and it has a Mn within one of the foregoing ranges. The Mn values referred to herein are number average molecular weights which can be determined by using gel permeation chromatography (GPC) calibrated with styrene-butadiene standards and Mark-Houwink constants for the polymer in question. In certain embodiments of the first-third and fourth-fifth embodiments, the styrene-butadiene rubber of (i) has a Mn within one of the foregoing ranges (or a range within such ranges) in combination with a Mw within one of the foregoing ranges (or a range within such ranges). In certain embodiments of the first-third and fourth-fifth embodiments, the styrene-butadiene rubber of (i) has a Mn within one of the foregoing ranges (or a range within such ranges) in combination with a Mw/Mn within one of the following ranges or a range within such ranges). In certain embodiments of the first-third and fourth-fifth embodiments, the styrene-butadiene rubber of (i) has a Mn within one of the foregoing ranges (or a range within such ranges) in combination with a Mw within one of the following ranges or a range within such ranges) and a Mw/Mn within one of the following ranges (or a range within such ranges).

In certain embodiments of the first-third and fourth-fifth embodiments disclosed herein, (i) of the elastomer component includes a styrene-butadiene rubber having a Mw/Mn (polydispersity) of 1.5 to 2.5 to (*e.g.,* 1.5, 1.6, 1.7, 1.8, 1.9, 2, 2.1, 2.2, 2.3, 2.4, or 2.5), preferably 1.7 to 2.4 (*e.g.,* 1.7, 1.8, 1.9, 2, 2.1, 2.2, 2.3, or 2.4); in certain such embodiments, (i) includes only one SBR and it has a Mw/Mn within one of the foregoing ranges. In certain embodiments of the first-third and fourth-fifth embodiments, the styrene-butadiene rubber of (i) has a Mn within one of the foregoing ranges (or a range within such ranges) in combination with a Mw within one of the foregoing ranges (or a range within such ranges). In certain embodiments of the first-third and fourth-fifth embodiments, the styrene-butadiene rubber of (i) has a Mn within one of the foregoing ranges (or a range within such ranges) in combination with a Mw/Mn within one of the following ranges or a range within such ranges). In certain embodiments of the first-third and fourth-fifth embodiments, the styrene-butadiene rubber of (i) has a Mn within one of the foregoing ranges (or a range within such ranges) in combination with a Mw within one of the foregoing ranges or a range within such ranges) and a Mw/Mn within one of the following ranges or a range within such ranges).

According to the first and fourth-fifth embodiments disclosed herein (and in certain embodiments of the second embodiment), the vinyl bond content (*i.e.,* 1,2-microstructure) of the styrene-butadiene rubber of (i) may vary. According to the second and third embodiments (and in certain embodiments of the first and fourth-fifth embodiments), the styrene-butadiene rubber of (i) has a vinyl bond content of no more than 20% (*e.g.,* 20%, 19%, 18%, 17%, 16%, 15%, 14%, 13%, 12%, 11%, 10%, or less). In certain embodiments of the first-third and fourth-fifth embodiments, the styrene-butadiene rubber of (i) has a vinyl bond content of 10-20% (*e.g.,* 10, 11, 12, 13, 14, 15, 16, 17, 18, 19, or 20%), or 10-15% (*e.g.,* 10, 11, 12, 13, 14, or 15%). In certain embodiments of the first-third and fourth-fifth embodiments, the styrene-butadiene rubber of (i) has a vinyl bond content within one of the foregoing ranges, optionally in combination with one or more of the Mw, Mn, Mw/Mn, Tg, and/or styrene monomer content ranges discussed above. The vinyl bond contents referred to herein should be understood as being for the overall vinyl bond content in the SBR polymer chain rather than of the vinyl bond content in the butadiene portion of the SBR polymer chain, and can be determined by H¹-NMR and C¹³-NMR (e.g., using a 300 MHz Gemini 300 NMR Spectrometer System (Varian)).

According to the first and fourth-fifth embodiments disclosed herein (and in certain embodiments of the second embodiment), the styrene monomer content (*i.e.,* weight percent of the polymer chain comprising styrene units as opposed to butadiene units) of the styrene-butadiene rubber used in (i) may vary. In certain embodiments of the first, second and fourth-fifth embodiments, the styrene-butadiene rubber of (i) has a styrene monomer content of about 20 to about 40 weight % or 20-40 weight % (*e.g.,* 20%, 25%, 30%, 35%, or 40%,), 20-40 weight %, preferably about 25 to about 35 weight % or 25-35 weight % (*e.g.,* 25%, 26%, 27%, 28%, 29%, 30%, 31%, 32%, 33%, 34%, or 35%). According to the third embodiment disclosed herein, the styrene-butadiene rubber of (i) has a styrene monomer content of about 25 to about 35 weight % or 25-35 weight % (*e.g.,* 25%, 26%, 27%, 28%, 29%, 30%, 31%, 32%, 33%, 34%, or 35%). In certain embodiments of the first, second and fourth-fifth embodiments disclosed herein the styrene-butadiene rubber of (i) has a styrene monomer content within one of the foregoing ranges, optionally in combination with one or more of the Mw, Mn, and/or Mw/Mn ranges discussed below, and in certain embodiments optionally in combination with one of the Tg ranges discussed above and/or vinyl bond contents discussed below. In certain embodiments of the third and second embodiments disclosed herein the styrene-butadiene rubber of (i) has a styrene monomer content of about 25 to about 35 weight % or 25-35 weight % (as discussed above), optionally in combination with one or more of the Mw, Mn, and/or Mw/Mn ranges discussed below, and in certain embodiments optionally in combination with one of the Tg ranges discussed above and/or vinyl bond contents discussed below.

In certain preferred embodiments of the first and fourth-fifth embodiments (and in certain embodiments of the second embodiment), and according to the third embodiment, the styrene-butadiene rubber (i) comprises (includes) an oil-extended styrene-butadiene rubber; in certain such embodiments the Tg of the oil-extended SBR (*i.e.,* the oil-extended version of the SBR rather than the polymer only Tg) is about -50 to about -60 °C. According to the first-third and fourth-fifth embodiments, when an oil-extended styrene-butadiene rubber is used as (i), the SBR may be extended with varying amounts of oil, preferably 10-30 parts (*e.g.,* 10, 11, 12, 13, 14, 15, 16, 17, 18, 19, 20, 21, 22, 23, 24, 25, 26, 27, 28, 29, or 30 parts) of oil, more preferably 15-25 parts (*e.g.,* 15, 16, 17, 18, 19, 20, 21, 22, 23, 24, or 25 parts) per 100 parts of styrene-butadiene rubber. As a non-limiting example, an oil-extended SBR that was extended with 35 parts of oil per 100 parts of styrene-butadiene rubber would provide 14 parts of oil for every 40 parts of the SBR used in a rubber composition. The amounts (parts) of the styrene-butadiene rubber (i) discussed above refer to the polymer amount of the styrene-butadiene rubber and do not include the amount of oil contributed when an oil-extended SBR is utilized as (ii).

In certain preferred embodiments of the first, second and fourth-fifth embodiments, at least one of the following is met: (a) the styrene-butadiene rubber of (a)(i) is non-functionalized; (b) the at least one styrene-butadiene rubber of (a)(i) is oil-extended, as discussed above; or (c) the at least one styrene-butadiene rubber of (a)(i) has a Mw of about 175,000 to 300,000 grams/mole or 175,000 to 300,000 grams/mole, preferably about 175,000 to about 250,000 grams/mole or 175,000 to 250,000 grams/mole, as discussed above. In more preferred embodiments of the first, second and fourth-fifth embodiments, each of the foregoing (a)-(c) are met. According to the third embodiment and in certain preferred embodiments of the second embodiment, the styrene-butadiene rubber of (a)(i) is non-functionalized and oil-extended as well as having a Mw of about 175,000 to 300,000 grams/mole or 175,000 to 300,000 grams/mole, preferably about 175,000 to about 250,000 grams/mole or 175,000 to 250,000 grams/mole, as discussed above.

According to the first, second and fourth-fifth embodiments, the styrene-butadiene rubber(s) of (i) may be functionalized or non-functionalized. According to the third embodiment, the styrene-butadiene rubber(s) of (i) is (are) non-functionalized. As used herein, the term functionalized should be understood to encompass the use of both functional groups and coupling agents. One or more than one type of functional group may be utilized for each SBR. Generally, a functional group may be present at the head of the polymer, at the tail of the polymer, along the backbone of the polymer chain, or a combination thereof. Functional groups present at one or both terminals of a polymer are generally the result of the use of a functional initiator, a functional terminator, or both. Alternatively or additionally, the functional group may be present as a result of coupling of multiple polymer chains using a coupling agent (as described below). In certain preferred embodiments of the first, second and fourth-fifth embodiments and according to the third embodiment, the styrene-butadiene rubber of (i) is non-functionalized *(*i.e., contains no functional group and no coupling agent). In certain embodiments of the first-third and fourth-fifth embodiments, (i) consists (only) of one styrene-butadiene rubber; in certain such embodiments of the first, second and fourth-fifth embodiments and according to the third embodiment, the styrene-butadiene rubber is non-functionalized. In other embodiments of the first, second and fourth-fifth embodiments, (i) consists (only) of one styrene-butadiene rubber which is functionalized with a silica-reactive functional group. In yet other embodiments of the first-third and fourth-fifth embodiments, (i) consists of more than one styrene-butadiene rubber (*e.g.,* two, three, or more); in certain such embodiments of the first, second and fourth-fifth embodiments and according to the third embodiment, at least one of the styrene-butadiene rubbers is non-functionalized. Non-limiting examples of silica-reactive functional groups generally include nitrogen-containing functional groups, silicon-containing functional groups, oxygen- or sulfur-containing functional groups, and metal-containing functional groups, as discussed in more detail below.

When a functionalized SBR is used in (i) for certain embodiments of the first-third or and fourth-fifth embodiments, the functionalization can be achieved by adding a functional group to one or both terminus of the polymer, by adding a functional group to the backbone of the poly (or a combination of the foregoing) or by coupling more than one polymer chains to a coupling agent, or by a combination thereof, such effects can be achieved by treating a living polymer with coupling agents, functionalizing agents, or a combination thereof which serve to couple and/or functionalize other chains. In certain embodiments of the first-third and fourth-fifth embodiments, such a functionalized SBR of (i) contains one or more functional groups but is not coupled (*i.e.,* does not contain any coupling agents). The coupling agent and/or functionalizing agent can be used at various molar ratios. Alternatively, in other embodiments of the first-third and fourth-fifth embodiments, the functionalized styrene-butadiene rubber of (i) may be silica-reactive merely from the result of using a coupling agent. Although reference is made herein to the use of both coupling agents and functionalizing groups (and compounds used therefor), those skilled in the art appreciate that certain compounds may serve both functions. That is, certain compounds may both couple and provide the polymer chains with a functional group. Those skilled in the art also appreciate that the ability to couple polymer chains may depend upon the amount of coupling agent reacted with the polymer chains. For example, advantageous coupling may be achieved where the coupling agent is added in a one to one ratio between the equivalents of lithium on the initiator and equivalents of leaving groups *(*e.g., halogen atoms) on the coupling agent. Non-limiting examples of coupling agents include metal halides, metalloid halides, alkoxysilanes, alkoxystannanes, and combinations thereof.

Non-limiting examples of nitrogen-containing functional groups that can be utilized in certain embodiments of the first-third and fourth-fifth embodiments as a silica-reactive functional group in a functionalized styrene-butadiene rubber of (i) include, but are not limited to, a substituted or unsubstituted amino group, an amide residue, an isocyanate group, an imidazolyl group, an indolyl group, an imino group, a nitrile group, a pyridyl group, and a ketimine group. The foregoing substituted or unsubstituted amino group should be understood to include a primary alkylamine, a secondary alkylamine, or a cyclic amine, and an amino group derived from a substituted or unsubstituted imine. In certain embodiments of the first-third and fourth-fifth embodiments, a functionalized styrene-butadiene rubber is included in (i) and it comprises at least one silica-reactive functional group selected from the foregoing list of nitrogen-containing functional groups.

In certain embodiments of the first-third and fourth-fifth embodiments, the functionalized styrene-butadiene rubber of (i) includes a silica-reactive functional group from a compound which includes nitrogen in the form of an imino group. Such an imino-containing functional group may be added by reacting the active terminal of a polymer chain with a compound having the following formula (I): 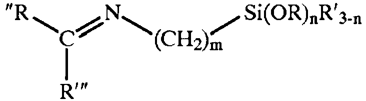 wherein R, R', R", and R‴ each independently are selected from a group having 1 to 18 carbon atoms (*e.g.,* 1, 2, 3, 4, 5, 6, 7, 8, 9, 10, 11, 12, 13, 14, 15, 16, 17, or 18 carbon atoms) selected from the group consisting of an alkyl group, an allyl group, and an aryl group; m and n are integers of 1 to 20 (*e.g.,* 1, 2, 3, 4, 5, 6, 7, 8, 9, 10, 11, 12, 13, 14, 15, 16, 17, 18, 19, or 20) and 1 to 3 (1, 2, or 3), respectively. Each of R, R', R", and R‴ are preferably hydrocarbyl and contain no heteroatoms. In certain embodiments of the first-third and fourth-fifth embodiments, each R and R' are independently selected from an alkyl group having 1 to 6 carbon atoms (*e.g.,* 1, 2, 3, 4, 5, or 6 carbon atoms), preferably 1 to 3 carbon atoms (*e.g.,* 1, 2, or 3 carbon atoms). In certain embodiments of the first-third and fourth-fifth embodiments, m is an integer of 2 to 6 *(e.g.,* 2, 3, 4, 5, or 6), preferably 2 to 3. In certain embodiments of the first-third and fourth-fifth embodiments, R‴ is selected from a group having 1 to 6 carbon atoms (*e.g.,* 1, 2, 3, 4, 5, or 6 carbon atoms), preferably 2 to 4 carbon atoms (*e.g.,* 2, 3, or 4 carbon atoms). In certain embodiments of the first-third and fourth-fifth embodiments, R" is selected from an alkyl group having 1 to 6 carbon atoms (*e.g.,* 1, 2, 3, 4, 5, or 6 carbon atoms), preferably 1 to 3 carbon atoms (*e.g.,* 1, 2, or 3 carbon atoms), most preferably 1 carbon atom (*e.g.,* methyl). In certain embodiments of the first-third and fourth-fifth embodiments, n is 3 resulting in a compound with a trihydrocarboxysilane moiety such as a trialkoxysilane moiety. Non-limiting examples of compounds having an imino group and meeting formula (I) above, which are suitable for providing the silica-reactive functional group for the styrene-butadiene rubber of (i), include, but are not limited to, N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, and N-(4-N,N-dimethylaminobenzylidene )-3-( triethoxysilyl)-1-propaneamine.

Non-limiting examples of silicon-containing functional groups that can be utilized in certain embodiments of the first-third and fourth-fifth embodiments as a silica-reactive functional group in a functionalized styrene-butadiene rubber of (i) include, but are not limited to, an organic silyl or siloxy group, and more precisely, the such functional group may be selected from an alkoxysilyl group, an alkylhalosilyl group, a siloxy group, an alkylaminosilyl group, and an alkoxyhalosilyl group. Optionally, the organic silyl or siloxy group may also contain one or more nitrogens. Suitable silicon-containing functional groups for use in functionalizing diene-based elastomer also include those disclosed in U.S. Patent No. 6,369,167, the entire disclosure of which is herein incorporated by reference. In certain embodiments of the first-third and fourth-fifth embodiments, the styrene-butadiene rubber of (i) comprises a functionalized SBR with at least one silica-reactive functional group selected from the foregoing list of silicon-containing functional groups.

In certain embodiments of the first-third and fourth-fifth embodiments wherein the styrene-butadiene rubber of (i) includes a functionalized SBR with a silica-reactive functional group, the functional group preferably results from a silicon-containing compound having a siloxy group (*e.g.,* a hydrocarbyloxysilane-containing compound), wherein the compound optionally includes a monovalent group having at least one functional group. Such a silicon-containing functional group may be added by reacting the active terminal of a polymer chain with a compound having the following formula (II): 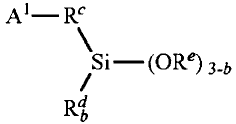 wherein A¹ represents a monovalent group having at least one functional group selected from epoxy, isocyanate, imine, cyano, carboxylic ester, carboxylic anhydride, cyclic tertiary amine, non-cyclic tertiary amine, pyridine, silazane and sulfide; R^{c} represents a single bond or a divalent hydrocarbon group having from 1 to 20 carbon atoms (*e.g.,* 1, 2, 3, 4, 5, 6, 7, 8, 9, 10, 11, 12, 13, 14, 15, 16, 17, 18, 19, or 20 carbon atoms); R^{d} represents a monovalent aliphatic hydrocarbon group having 1 to 20 carbon atoms (*e.g.,* 1, 2, 3, 4, 5, 6, 7, 8, 9, 10, 11, 12, 13, 14, 15, 16, 17, 18, 19, or 20 carbon atoms), a monovalent aromatic hydrocarbon group having 6 to 18 carbon atoms (*e.g.,* 6, 7, 8, 9, 10, 11, 12, 13, 14, 15, 16, 17, or 18 carbon atoms) or a reactive group; R^{e} represents a monovalent aliphatic hydrocarbon group having 1 to 20 carbon atoms (*e.g.,* 1, 2, 3, 4, 5, 6, 7, 8, 9, 10, 11, 12, 13, 14, 15, 16, 17, 18, 19, or 20 carbon atoms) or a monovalent aromatic hydrocarbon group having 6 to 18 carbon atoms (*e.g.,* 6, 7, 8, 9, 10, 11, 12, 13, 14, 15, 16, 17, or 18 carbon atoms); b is an integer of 0 to 2; when more than one R^{d} or OR^{e} are present, each R^{d} and/or OR^{e} may be the same as or different from each other; and an active proton is not contained in a molecule) and/or a partial condensation product thereof. As used herein, a partial condensation product refers to a product in which a part (not all) of a SiOR group in the hydrocarbyloxysilane compound is turned into a SiOSi bond by condensation. In certain embodiments of the first-third and fourth-fifth embodiments, at least one of the following is met: (a) R^{c} represents a divalent hydrocarbon group having 1 to 12 carbon atoms (*e.g.,* 1, 2, 3, 4, 5, 6, 7, 8, 9, 10, 11, or 12 carbon atoms), 2 to 6 carbon atoms (*e.g.,* 2, 3, 4, 5, or 6 carbon atoms), or 2 to 3 carbon atoms (*e.g.,* 2 or 3 carbon atoms); (b) R^{e} represents a monovalent aliphatic hydrocarbon group having 1 to 12 carbon atoms (*e.g.,* 1, 2, 3, 4, 5, 6, 7, 8, 9, 10, 11, or 12 carbon atoms), 2 to 6 carbon atoms (*e.g.,* 2, 3, 4, 5, or 6 carbon atoms), or 1 to 2 carbon atoms or a monovalent aromatic hydrocarbon group having 6 to 8 carbon atoms; (c) R^{d} represents a monovalent aliphatic hydrocarbon group having 1 to 12 carbon a*toms(e.g.,* 1, 2, 3, 4, 5, 6, 7, 8, 9, 10, 11, or 12 carbon atoms), 2 to 6 carbon atoms (*e.g.,* 2, 3, 4, 5, or 6 carbon atoms), or 1 to 2 carbon atoms or a monovalent aromatic hydrocarbon group having 6 to 8 carbon atoms; in certain such embodiments, each of (a), (b) and (c) are met and R^{c} R^{e} and R^{d} are selected from one of the foregoing groups.

In certain embodiments of the first-third and fourth-fifth embodiments where a functional SBR is used for the styrene-butadiene rubber of (i), the functional group results from a compound represented by Formula (II) wherein A¹ has at least one epoxy group. Non-limiting specific examples of such compounds include 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)-methyldimethoxysilane, 2-(3,4-epoxycyclohexyl)ethyltrimethoxysilane, 2-(3,4-epoxycyclohexyl)ethyltriethoxysilane, 2-(3,4-epoxycyclohexyl)ethyl(methyl)dimethoxysilane and the like. Among them, 3-glycidoxypropyltrimethoxysilane and 2-(3,4-epoxycyclohexyl)ethyltrimethoxysilane are particularly suited.

In certain embodiments of the first-third and fourth-fifth embodiments where a functional SBR is used for the styrene-butadiene rubber of (i), the functional group results from a compound represented by Formula (II) wherein A¹ has at least one isocyanate group. Non-limiting specific examples of such compounds include 3-isocyanatopropyltrimethoxysilane, 3-isocyanatopropyltriethoxysilane, 3-isocyanatopropylmethyldiethoxysilane, 3-isocyanatopropyltriisopropoxysilane and the like, and among them, 3-isocyanatopropyltrimethoxysilane is particularly preferred.

In certain embodiments of the first-third and fourth-fifth embodiments where a functional SBR is used for the styrene-butadiene rubber of (i), the functional group results from a compound represented by Formula (II) wherein A¹ has at least one imine group. Non-limiting specific examples of such compounds include N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine and trimethoxysilyl compounds, methyldiethoxysilyl compounds, ethyldimethoxysilyl compounds and the like each corresponding to the above triethoxysilyl compounds. Among them, N-(1,3-dimethylbutylidene)-3-(triethoxysilyl)-1-propaneamine and N-(1-methylpropylidene)-3-(triethoxysilyl)-1-propaneamine are particularly suited. Also, the imine(amidine) group-containing compounds include preferably 1-[3-trimethoxysilyl]propyl]-4,5-dihydroimidazole, 3-(1-hexamethyleneimino)propyl(triethoxy)silane, (1-hexamethyleneimino)methyl(trimethoxy)silane, N-(3-triethoxysilylpropyl)-4,5-dihydroimidazole, N-(3-isopropoxysilylpropyl)-4,5-dihydroimidazole, N-(3-methyldiethoxysilylpropyl)-4,5-dihydroimidazole and the like, and among them, N-(3-triethoxysilylpropyl)-4,5-dihydroimidazole and N-(3-isopropoxysilylpropyl)-4,5-dihydroimidazole are preferred.

In certain embodiments of the first-third and fourth-fifth embodiments where a functional SBR is used for the styrene-butadiene rubber of (i), the functional group results from a compound represented by Formula (II) wherein A¹ has at least one carboxylic ester group. Non-limiting specific examples of such compounds include 3-methacryloyloxypropyltriethoxysilane, 3-methacryloyloxypropyltrimethoxysilane, 3-methacryloyloxypropylmethyldiethoxysilane, 3-methacryloyloxypropyltriisopropoxysilane and the like, and among them, 3-methacryloyloxypropyltriethoxysilane is preferred.

In certain embodiments of the first-third and fourth-fifth embodiments where a functional SBR is used for the styrene-butadiene rubber of (i), the functional group results from a compound represented by Formula (II) wherein A¹ has at least one carboxylic anhydride group. Non-limiting specific examples of such compounds include 3-trimethoxysilylpropylsuccinic anhydride, 3-triethoxysilylpropylsuccinic anhydride, 3-methyldiethoxysilylpropylsuccinic anhydride and the like, and among them, 3-triethoxysilylpropylsuccinic anhydride is preferred.

In certain embodiments of the first-third and fourth-fifth embodiments where a functional SBR is used for the styrene-butadiene rubber of (i), the functional group results from a compound represented by Formula (II) wherein A¹ has at least one cyano group. Non-limiting specific examples of such compounds include 2-cyanoethylpropyltriethoxysilane and the like.

In certain embodiments of the first-third and fourth-fifth embodiments where a functional SBR is used for the styrene-butadiene rubber of (i), the functional group results from a compound represented by Formula (II) wherein A¹ has at least one cyclic tertiary amine group. Non-limiting specific examples of such compounds include 3-(1-hexamethyleneimino)propyltriethoxysilane, 3-(1-hexamethyleneimino)propyltrimethoxysilane, (1-hexamethyleneimino)methyltriethoxysilane, (1-hexamethyleneimino)methyltrimethoxysilane, 2-(1-hexamethyleneimino)ethyltriethoxysilane, 3-(1-hexamethyleneimino)ethyltrimethoxysilane, 3-(1-pyrrolidinyl)propyltrimethoxysilane, 3-(1-pyrrolidinyl)propyltriethoxysilane, 3-(1-heptamethyleneimino)propyltriethoxysilane, 3-(1-dodecamethyleneimino)propyltriethoxysilane, 3-(1-hexamethyleneimino)propyldiethoxymethylsilane, 3-(1-hexamethyleneimino)propyldiethoxyethylsilane, 3-[10-(triethoxysilyl)decyl]-4-oxazoline and the like. Among them, 3-(1-hexamethyleneimino)propyltriethoxysilane and (1-hexamethyleneimino)methyltriethoxysilane can preferably be listed.

In certain embodiments of the first-third and fourth-fifth embodiments where a functional SBR is used for the styrene-butadiene rubber of (i), the functional group results from a compound represented by Formula (II) wherein A¹ has at least one non-cyclic tertiary amine group. Non-limiting specific examples of such compounds include 3-dimethylaminopropyltriethoxysilane, 3-dimethylaminopropyltrimethoxysilane, 3-diethylaminopropyltriethoxysilane, 3-dimethylaminopropyltrimethoxysilane, 2-dimethylaminoethyltriethoxysilane, 2-dimethylaminoethyltrimethoxysilane, 3-dimethylaminopropyldiethoxymethylsilane, 3-dibutylaminopropyltriethoxysilane and the like, and among them, 3-dimethylaminopropyltriethoxysilane and 3-diethylaminopropyltriethoxysilane are suited.

In certain embodiments of the first-third and fourth-fifth embodiments where a functional SBR is used for the styrene-butadiene rubber of (i), the functional group results from a compound represented by Formula (II) wherein A¹ has at least one pyridine group. Non-limiting specific examples of such compounds include 2-trimethoxysilylethylpyridine and the like.

In those embodiments of the first-third and fourth-fifth embodiments wherein the styrene-butadiene rubber of (i) contains a functional SBR with a silica-reactive functional group, the functional group preferably results from a compound represented by Formula (II) wherein A¹ has at least one silazane group. Non-limiting specific examples of such compounds include N,N-bis(trimethylsilyl)-aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane, N,N-bis(trimethylsilyl)aminoethylmethyldiethoxysilane and the like. N,N-bis(trimethylsilyl)aminopropyltriethoxysilane, N,N-bis(trimethylsilyl)aminopropylmethyldiethoxysilane or 1-trimethylsilyl-2,2-dimethoxy-1-aza-2-silacyclopentane are particularly preferred.

In those embodiments of the first-third and fourth-fifth embodiments wherein the styrene-butadiene rubber of (i) contains a functional SBR and wherein a silica-reactive functional group according to formula (II) is used wherein A¹ contains one or more protected nitrogens (as discussed in detail above), the nitrogen may be deprotected or deblocked by hydrolysis or other procedures to convert the protected nitrogen(s) into a primary nitrogen. As a non-limiting example, a nitrogen bonded to two trimethylsilyl groups could be deprotected and converted to a primary amine nitrogen (such a nitrogen would still be bonded to the remainder of the formula (II) compound). Accordingly, in certain embodiments of the first-third and fourth-fifth embodiments wherein a silica-reactive functional group of the styrene-butadiene rubber results from use of a compound according to formula (II) wherein A¹ contains one or more protected nitrogens, the functionalized polymer can be understood as containing a functional group resulting from a deprotected (or hydrolyzed) version of the compound.

Non-limiting examples of oxygen- or sulfur-containing functional groups that can be utilized in certain embodiments of the first-third and fourth-fifth embodiments as a silica-reactive functional group in a functional styrene-butadiene rubber of (i) include, but are not limited to, a hydroxyl group, a carboxyl group, an epoxy group, a glycidoxy group, a diglycidylamino group, a cyclic dithiane-derived functional group, an ester group, an aldehyde group, an alkoxy group, a ketone group, a thiocarboxyl group, a thioepoxy group, a thioglycidoxy group, a thiodiglycidylamino group, a thioester group, a thioaldehyde group, a thioalkoxy group, and a thioketone group. In certain embodiments of the first-third and fourth-fifth embodiments, the foregoing alkoxy group may be an alcohol-derived alkoxy group derived from a benzophenone. In certain embodiments of the first-third and fourth-fifth embodiments, when the styrene-butadiene rubber of (i) includes a functional SBR, the functional group comprises at least silica-reactive functional group selected from the foregoing list of oxygen- or sulfur-containing functional groups.

According to the first-third and fourth-fifth embodiments, when the styrene-butadiene rubber of (i) includes a functional SBR with a silica-reactive functional group, the SBR may be prepared by either solution polymerization or by emulsion polymerization. In certain preferred embodiments of the first-third embodiments, the only styrene-butadiene rubbers having a silica-reactive functional group used in (i) are prepared by solution polymerization. In other embodiments of the first-third and fourth-fifth embodiments, the only styrene-butadiene rubbers having a silica-reactive functional group used in (i) are prepared by emulsion polymerization. In certain embodiments of the first-third and fourth-fifth embodiments, when more than one styrene-butadiene rubber having a silica-reactive functional group is used for (i) the rubbers are a combination of solution polymerized SBR and emulsion polymerized SBR (e.g., one solution SBR and one emulsion SBR). As mentioned above, in certain preferred embodiments of the first-third and fourth-fifth embodiments, the only styrene-butadiene rubber(s) present in the elastomer component (including for any SBR having a silica-reactive functional group) is a solution SBR (i.e., no emulsion SBR is present).

In one or more embodiments of the first-third and fourth-fifth embodiments when the styrene-butadiene rubber of (i) contains a functional SBR which is functionalized with a coupling agent, the coupling agent comprises a metal halide or metalloid halide selected from the group comprising compounds expressed by the formula (1) R*ₙM¹Y₍₄₋ₙ₎, the formula (2) M¹Y₄, and the formula (3) M²Y₃, where each R* is independently a monovalent organic group having 1 to 20 carbon atoms, M¹ is a tin atom, silicon atom, or germanium atom, M² is a phosphorous atom, Y is a halogen atom, and n is an integer of 0-3.

Exemplary compounds expressed by the formula (1) include halogenated organic metal compounds, and the compounds expressed by the formulas (2) and (3) include halogenated metal compounds.

In the case where M¹ represents a tin atom, the compounds expressed by the formula (1) can be, for example, triphenyltin chloride, tributyltin chloride, triisopropyltin chloride, trihexyltin chloride, trioctyltin chloride, diphenyltin dichloride, dibutyltin dichloride, dihexyltin dichloride, dioctyltin dichloride, phenyltin trichloride, butyltin trichloride, octyltin trichloride and the like. Furthermore, tin tetrachloride, tin tetrabromide and the like can be exemplified as the compounds expressed by formula (2).

In the case where M¹ represents a silicon atom, the compounds expressed by the formula (1) can be, for example, triphenylchlorosilane, trihexylchlorosilane, trioctylchlorosilane, tributylchlorosilane, trimethylchlorosilane, diphenyldichlorosilane, dihexyldichlorosilane, dioctyldichlorosilane, dibutyldichlorosilane, dimethyldichlorosilane, methyltrichlorosilane, phenyltrichlorosilane, hexyltrichlorosilane, octyltrichlorosilane, butyltrichlorosilane, methyltrichlorosilane and the like. Furthermore, silicon tetrachloride, silicon tetrabromide and the like can be exemplified as the compounds expressed by the formula (2). In the case where M¹ represents a germanium atom, the compounds expressed by the formula (1) can be, for example, triphenylgermanium chloride, dibutylgermanium dichloride, diphenylgermanium dichloride, butylgermanium trichloride and the like. Furthermore, germanium tetrachloride, germanium tetrabromide and the like can be exemplified as the compounds expressed by the formula (2). Phosphorous trichloride, phosphorous tribromide and the like can be exemplified as the compounds expressed by the formula (3). In one or more embodiments, mixtures of metal halides and/or metalloid halides can be used.

In one or more embodiments of the first-third and fourth-fifth embodiments when the styrene-butadiene rubber of (i) contains a functional SBR which is functionalized with a coupling agent, the coupling agent for the styrene-butadiene rubber of (i) comprises an alkoxysilane or alkoxystannane selected from the group comprising compounds expressed by the formula (4) R*ₙM¹(OR^)₄₋ₙ, where each R* is independently a monovalent organic group having 1 to 20 carbon atoms, M¹ is a tin atom, silicon atom, or germanium atom, OR^ is an alkoxy group where R^ is a monovalent organic group, and n is an integer of 0-3.

Exemplary compounds expressed by the formula (4) include tetraethyl orthosilicate, tetramethyl orthosilicate, tetrapropyl orthosilicate, tetraethoxy tin, tetramethoxy tin, and tetrapropoxy tin.

### Polybutadiene Rubber (ii)

According to the first-third embodiments, (ii) of the elastomer component consists of a linear polybutadiene rubber having a cis bond content of at least 95% (*e.g.,* 95%, 96%, 97%, 98%, 99%, or more) and a Tg of less than -101 °C (*e.g.,* -102, -103, -104, -105, -106, - 107, -108, -109 °C or less), preferably a Tg of -101 to -110 °C, less than -105 °C, or -105 to -109 °C. The cis bond content refers to the cis 1,4-bond content. As explained in more detail below, the linear polybutadiene rubber used in the first-third embodiments has a T80 value of about 5 to about 1.5 or 5 to 1.5 (*e.g.,* 5, 4,9, 4.8, 4.7, 4.6, 4.5, 4.4, 4.3, 4.2, 4.1, 4, 3.9, 3.8, 3.7, 3.6, 3.5, 3.4, 3.3, 3.2, 3.1, 3, 2.9, 2.8, 2.7, 2.6, 2.5, 2.4, 2.3, 2.2, 2.1, 2, 1.9, 1.8, 1.7, 1.6, or 1.5), preferably about 3.5 to about 2 or 3.5 to 2 (*e.g.,* 3.5, 3.4, 3.3, 3.2, 3.1, 3, 2.9, 2.8, 2.7, 2.6, 2.5, 2.4, 2.3, 2.2, 2.1, or 2), as measured using a viscometer, a g ratio of at least 0.85 (*e.g.,* 0.85, 0.86, 0.87, 0.88, 0.89, 0.9, 0.91, 0.92, 0.93, 0.94, 0.95, 0.96, 0.97, 0.98, 0.99, 1, 1.01, 1.02, 1.03, 1.04, 1.05 or higher) or 0.85 to 1.05, and a g' ratio of at least 0.95 (*e.g.,* 0.95, 0.96, 0.97, 0.98, 0.99, 1, 1.01, 1.02, 1.03, 1.04, 1.05 or higher) or 0.95 to 1.05, as measured using gyration data and intrinsic viscosity data, respectively, using a GPC-MALS detector. In certain embodiments of the first-third embodiments, the linear polybutadiene rubber may have a cis 1,4-bond content of at least 96% (*e.g.,* 96%, 97%, 98%, or more) or 96-98%. The cis 1,4-bond contents and vinyl bond contents referred to herein for polybutadiene rubber are determined by FTIR (Fourier Transform *Infrared* Spectroscopy) wherein a polymer sample is dissolved in CS₂ and then subjected to FTIR. Since the cis bond content of the linear polybutadiene rubber (ii) is high (*i.e.,* at least 95%, as discussed above), the vinyl bond content will be low.

As mentioned above, the amount of the linear polybutadiene (ii) used in the elastomer component according to the first-third embodiment may vary within the disclosed ranges. More specifically, according to the first embodiment and in certain embodiments of the second embodiment, the 100 parts of elastomer component includes 55-80 parts (*e.g.,* 55, 56, 57, 58, 59, 60, 61, 62, 63, 64, 65, 66, 67, 68, 69, 70, 71, 72, 73, 74, 75, 76, 77, 78, 79, or 80 parts), preferably 60-75 parts *(*e.g., 60, 61, 62, 63, 64, 65, 66, 67, 68, 69, 70, 71, 72, 73, 74, or 75 parts) of a linear polybutadiene (as discussed *infra*) having a cis bond content of at least 95%, a Tg of less than -101 °C., preferably -101 or -110 °C, less than -105 °C, or -105 to -109 °C. As mentioned above, according to the third embodiment and in certain embodiments of the second embodiment, the 100 parts of elastomer component comprises (includes) 40-25 parts (*e.g.,* 40, 39, 38, 37, 36, 35, 34, 33, 32, 31, 30, 29, 28, 27, 26, or 25 parts) of styrene-butadiene rubber; and (ii) 60-75 parts (*e.g.,* 60, 61, 62, 63, 64, 65, 66, 67, 68, 69, 70, 71, 72, 73, 74, or 75 parts) of a linear (as discussed *infra*) polybutadiene having a cis bond content of at least 95%, a Tg of less than - 101 °C., preferably -101 or -110 °C, less than -105 °C, or -105 to -109 °C.

As mentioned above, the amount of the non-functionalized linear polybutadiene (ii) used in the elastomer component according to the fourth and fifth embodiments may vary within the disclosed ranges. More specifically, according to the fourth embodiment and in certain embodiments of the fifth embodiment, the 100 parts of elastomer component includes 55-80 parts (*e.g.,* 55, 56, 57, 58, 59, 60, 61, 62, 63, 64, 65, 66, 67, 68, 69, 70, 71, 72, 73, 74, 75, 76, 77, 78, 79, or 80 parts), preferably 60-75 parts (*e.g.,* 60, 61, 62, 63, 64, 65, 66, 67, 68, 69, 70, 71, 72, 73, 74, or 75 parts), more preferably 61-75 parts (*e.g.,* 60, 61, 62, 63, 64, 65, 66, 67, 68, 69, 70, 71, 72, 73, 74, or 75 parts) of a non-functionalized linear polybutadiene (as discussed *infra*) having a cis bond content of at least 95%, a Tg of less than -101 °C., preferably -101 or -110 °C, less than -105 °C, or -105 to -109 °C.

In certain embodiments of the first, second and fourth-fifth embodiments and according to the third embodiment, the linear polybutadiene rubber of (ii) has a vinyl bond content of less than 4% (*e.g.,* 3.9%, 3.8%, 3.7%, 3.6%, 3.5%, 3.4%, 3.3%, 3.2%, 3.1%, 3%, 2.9%, 2.8%, 2.7%, 2.6%, 2.5%, 2.4%, 2.3%, 2.2%, 2.1%, 2%, 1.9%, 1.8%, 1.7%, 1.6%, 1.5%, 1.4%, 1.3%, 1.2%, 1.1%, 1%, 0.9%, 0.8%, 0.7%, 0.6%, 0.5%, etc.), preferably less than 3% (*e.g.,* 2.9%, 2.8%, 2.7%, 2.6%, 2.5%, 2.4%, 2.3%, 2.2%, 2.1%, 2%, 1.9%, 1.8%, 1.7%, 1.6%, 1.6%, 1.5%, 1.4%, 1.3%, 1.2%, 1.1%, 1%, 0.9%, 0.8%, 0.7%, 0.6%, 0.5%, etc.), more preferably less than 2% (*e.g.,* 2%, 1.9%, 1.8%, 1.7%, 1.6%, 1.6%, 1.5%, 1.4%, 1.3%, 1.2%, 1.1%, 1%, 0.9%, 0.8%, 0.7%, 0.6%, 0.5%, etc.). In certain embodiments of the first-third and fourth-fifth embodiments, any linear polybutadiene rubber used in the tread rubber compositions has a Tg of -105 °C or less (*e.g.,* -105, -106, -107, - 108, -109 °C or less) or -105 to -110 °C.

In certain embodiments of the first-third and fourth-fifth embodiments, any polybutadiene rubber used in the tread rubber compositions contains less than 3% by weight (*e.g.,* 3%, 2%, 1%, 0.5%, or less), preferably less than 1% by weight (*e.g.,* 1%, 0.5%, or less) or 0% by weight syndiotactic 1,2-polybutadiene.

Generally, according to the first-third and fourth-fifth embodiments, one or more than one linear polybutadiene rubber having a cis bond content of at least 95% and a Tg of less than -101 °C may be used for (ii). In certain embodiments of the first-third and fourth-fifth embodiments, (ii) consists of only one linear polybutadiene rubber having a cis bond content of at least 95% (*e.g.,* 95%, 96%, 97%, 98%, 99%, or more) and a Tg of less than -101 °C In certain such preferred embodiments, the linear polybutadiene of (ii) is the only polybutadiene present in the elastomer component or in the overall tire tread rubber composition. In preferred embodiments of the first-third and fourth-fifth embodiments disclosed herein, the amount of any branched polybutadiene in the elastomer component is limited, preferably to no more than 10 parts (*e.g.,* 1-10 parts, 0-10 parts, 10, 9, 8, 7, 6, 5, 4, 3, 2, 1, or even 0 parts), more preferably to no more than 5 parts (*e.g.,* 1-5 parts, 0-5 parts, 5, 4, 3, 2, 1, or even 0 parts), even more preferably to 0 parts. In the most preferred embodiments of the first-third and fourth-fifth embodiments disclosed herein, the elastomer component contains no branched polybutadiene (*i.e.,* 0 parts) and can be described as being free of branched polybutadiene. More specifically, in certain embodiments of the first-third embodiments the elastomer component contains no branched polymer (*i.e.,* 0 parts) or is free of branched polybutadiene having a T80 value of at least 5.5, preferably at least 6, more preferably at least 6.5, as measured using a viscometer, and preferably also a g ratio of less than 0.85 or less than 0.85 to 0.5, and a g' ratio of less than 0.95 or less than 0.95 to 0.5, as measured using gyration data and intrinsic viscosity data, respectively, using a GPC-MALs detector. More specifically, in certain embodiments of the fourth-fifth embodiments, the elastomer component contains no branched polymer (*i.e.,* 0 parts) or is free of branched polybutadiene having a T80 value of at least 9, preferably at least 10, as measured using a viscometer, and a LCB index of at least 11, preferably at least 13, as measured using a rubber process analyzer. As those of skill in the art will understand, various commercially available high cis polybutadienes are available that can be considered branched (according to the explanation provided herein of the properties of a branched versus linear polybutadiene) and which preferably also have characteristics including a cis bond content of at least 95% and a Tg of less than -101 °C). Non-limiting examples of branched polybutadienes include SABIC^{®} BR 4010 from SABIC, Budene^{®}1280 from Goodyear, Buna^{®} CB 25 from Arlanxeo, Buna^{®} CB 1220 from Arlanxeo, Ubepol BR^{®} 150B from Ube, and Diene^{®} 645 and 645S from Lion Elastomers.

As mentioned above, according to the first-third embodiments disclosed herein the elastomer component includes a linear polybutadiene rubber having a cis bond content of at least 95%, a Tg of less than -101 °C, preferably -101 to -110, less than -105 °C or -105 to -109 °C. As used herein for the first-third embodiments, the term linear polybutadiene refers to a polybutadiene having a T80 value of about 5 to about 1.5 or 5 to 1.5 (*e.g.,* 5, 4.9, 4.8, 4.7, 4.6, 4.5, 4.4, 4.3, 4.2, 4.1, 4, 3.9, 3.8, 3.7, 3.6, 3.5, 3.4, 3.3, 3.2, 3.1, 3, 2.9, 2.8, 2.7, 2.6, 2.5, 2.4, 2.3, 2.2, 2.1, 2, 1.9, 1.8, 1.7, 1.6, or 1.5), preferably about 3.5 to about 2 or 3.5 to 2 (*e.g.,* 3.5, 3.4, 3.3, 3.2, 3.1, 3, 2.9, 2.8, 2.7, 2.6, 2.5, 2.4, 2.3, 2.2, 2.1, or 2), as measured using a viscometer, and preferably also a g ratio of at least 0.85 (*e.g.,* 0.85, 0.86, 0.87, 0.88, 0.89, 0.9, 0.91, 0.92, 0.93, 0.94, 0.95, 0.96, 0.97, 0.98, 0.99, 1, 1.01, 1.02, 1.03, 1.04, 1.05 or higher) or 0.85 to 1.05, and a g' ratio of at least 0.95 (*e.g.,* 0.95, 0.96, 0.97, 0.98, 0.99, 1, 1.01, 1.02, 1.03, 1.04, 1.05 or higher) or 0.95 to 1.05, as measured using gyration data and intrinsic viscosity data, respectively, using a GPC-MALS detector. A linear polybutadiene should be understood as being primarily linear in structure with a very limited amount (if any) branching off of the main chain of the polymer. Branched polybutadienes can be contrasted with linear polybutadienes and will contain branching off the main chain of the polymer. As used herein for the first-third embodiments, the term branched polybutadiene refers to a polybutadiene having a T80 value of at least 5.5 (*e.g.,* 5.5, 5.6, 5.7, 5.8, 5.9, 6, 6.1, 6.2, 6.3, 6.4, 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, 8.5, 8.6, 8.7, 8.8, 8.9, 9, 9.1, 9.2, 9.3, 9.4, 9.5, 9.6, 9.7, 9.8, 9.9, 10, or higher), preferably at least 6 (*e.g.,* 6, 6.1, 6.2, 6.3, 6.4, 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, 8.5, 8.6, 8.7, 8.8, 8.9, 9, 9.1, 9.2, 9.3, 9.4, 9.5, 9.6, 9.7, 9.8, 9.9, 10, or higher), more preferably at least 6.5 (*e.g.,* 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, 8.5, 8.6, 8.7, 8.8, 8.9, 9, 9.1, 9.2, 9.3, 9.4, 9.5, 9.6, 9.7, 9.8, 9.9, 10, or higher), as measured using a viscometer, and preferably also a g ratio of less than 0.85 (*e.g.,* 0.84, 0.83, 0.82, 0.81, 0.8, 0.79, 0.78, 0.77, 0.76, 0.75, 0.74, 0.73, 0.72, 0.71, 0.7, 0.69, 0.68, 0.67, 0.66, 0.65, 0.64, 0.63, 0.62, 0.61, 0.6, 0.59, 0.58, 0.57, 0.56, 0.55, 0.54, 0.53, 0.52, 0.51, 0.5 or lower) or less than 0.85 to 0.5, and a g' ratio of less than 0.95 (*e.g.,* 0.94, 0.93, 0.92, 0.91, 0.9, 0.89, 0.88, 0.87, 0.86, 0.85, 0.84, 0.83, 0.82, 0.81, 0.8, 0.79, 0.78, 0.77, 0.76, 0.75, 0.74, 0.73, 0.72, 0.71, 0.7, 0.69, 0.68, 0.67, 0.66, 0.65, 0.64, 0.63, 0.62, 0.61, 0.6, 0.59, 0.58, 0.57, 0.56, 0.55, 0.54, 0.53, 0.52, 0.51, 0.5 or lower) or less than 0.95 to 0.5, as measured using gyration data and intrinsic viscosity data, respectively, using a GPC-MALs detector.

More specifically, the T80 values disclosed herein are T80 stress relaxation times that are determined by measuring the time required (in minutes) from the moment when rotation is stopped (during the ML1+4 Mooney (at 100 °C) viscosity testing for the polymers, immediately after measurement of the ML1+4 at 100 °C that is required for the ML1+4 value to decrease 80%.

As mentioned above, according to the fourth and fifth embodiments disclosed herein the elastomer component includes a non-functionalized linear polybutadiene rubber having a cis bond content of at least 95%, a Tg of less than -101 °C, preferably -101 to -110, less than -105 °C or -105 to -109 °C. As used herein for the fourth and fifth embodiments, the term linear polybutadiene refers to a polybutadiene having a T80 value of about 1 to about 7 or 1 to 7 *(e.g.,* 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2 , 4.3 , 4.4, 4.5, 4.6, 4.7, 4.8, 4.9, 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9 or 7), about 1 to about 3 or 1 to 3 (*e.g.,* 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, or 3), or about 3.5 to about 7 or 3.5 to 7 (*e.g.,* 3.5, 3.6, 3.7, 3.8, 3.9, 4, 4.1, 4.2 , 4.3 , 4.4, 4.5, 4.6, 4.7, 4.8, 4.9, 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9, 7), as measured using a viscometer, and preferably also a long chain branching (LCB) index of about 3 to about 9 or 3 to 9 (*e.g.,* 3, 3.1, 3.2, 3.3, 3.4, 3.5, 3.6, 3.7, 3.8, 3.9, 4, 4.1, 4.2 , 4.3 , 4.4, 4.5, 4.6, 4.7, 4.8, 4.9, 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, 8.5, 8.6, 8.7, 8.8, 8.9, or 9), about 3 to about 5 or 3 to 5 (*e.g.,* 3, 3.1, 3.2, 3.3, 3.4, 3.5, 3.6, 3.7, 3.8, 3.9, 4, 4.1, 4.2 , 4.3 , 4.4, 4.5, 4.6, 4.7, 4.8, 4.9, or 5), about 5 to about 8.5 or 5 to 8.5 (*e.g.,* 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, or 8.5), as measured using a rubber process analyzer. Thus, in certain embodiments of the fourth and fifth embodiments, the non-functionalized linear polybutadiene (ii) (as described *infra*) has a T80 value of about 1 to about 7 or 1 to 7 (*e.g.,* 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2 , 4.3 , 4.4, 4.5, 4.6, 4.7, 4.8, 4.9, 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9 or 7), as measured using a viscometer. In other embodiments of the fourth and fifth embodiments, the non-functionalized linear polybutadiene (ii) (as described *infra*) has a T80 value of about 1 to about 3 or 1 to 3 (*e.g.,* 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, or 3), as measured using a viscometer. In yet other embodiments of the fourth and fifth embodiments, the non-functionalized linear polybutadiene (ii) (as described *infra)* has a T80 value of or about 3.5 to about 7 or 3.5 to 7 (*e.g.,* 3.5, 3.6, 3.7, 3.8, 3.9, 4, 4.1, 4.2 , 4.3 , 4.4, 4.5, 4.6, 4.7, 4.8, 4.9, 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9 or 7), as measured using a viscometer. A linear polybutadiene should be understood as being primarily linear in structure with a very limited amount (if any) branching off of the main chain of the polymer. Branched polybutadienes can be contrasted with linear polybutadienes and will contain branching off the main chain of the polymer. As used herein for the fourth-fifth embodiments, the term branched polybutadiene refers to a polybutadiene having a T80 value of at least 9 (*e.g.,* 9, 9.1, 9.2, 9.3, 9.4, 9.5, 9.6, 9.7, 9.8, 9.9, 10, 10.1, 10.2, 10.3, 10.4, 10.5, 10.6, 10.7, 10.8, 10.9, 11, 11.1, 11.2, 11.3, 11.4, 11.5, 11.6, 11.7, 11.8, 11.9, 12, 12.1, 12.2, 12.3, 12.4, 12.5, 12.6, 12.7, 12.8, 12.9, 13, 13.1, 13.2, 13.3, 13.4, 13.5, 13.6, 13.7, 13.8, 13.9, 14, 14.1, 14.2, 14.3, 14.4, 14.5, 14.6, 14.7, 14.8, 14.9 or higher), preferably at least 10 (*e.g.,* 10, 10.1, 10.2, 10.3, 10.4, 10.5, 10.6, 10.7, 10.8, 10.9, 11, 11.1, 11.2, 11.3, 11.4, 11.5, 11.6, 11.7, 11.8, 11.9, 12, 12.1, 12.2, 12.3, 12.4, 12.5, 12.6, 12.7, 12.8, 12.9, 13, 13.1, 13.2, 13.3, 13.4, 13.5, 13.6, 13.7, 13.8, 13.9, 14, 14.1, 14.2, 14.3, 14.4, 14.5, 14.6, 14.7, 14.8, 14.9 or higher), more preferably at least 12 (*e.g.,* 12, 12.1, 12.2, 12.3, 12.4, 12.5, 12.6, 12.7, 12.8, 12.9, 13, 13.1, 13.2, 13.3, 13.4, 13.5, 13.6, 13.7, 13.8, 13.9, 14, 14.1, 14.2, 14.3, 14.4, 14.5, 14.6, 14.7, 14.8, 14.9 or higher), as measured using a viscometer (by the method, as described above), and preferably also a LCB index of a LCB index of at least 11 (*e.g.,* 11, 11.1, 11.2, 11.3, 11.4, 11.5, 11.6, 11.7, 11.8, 11.9, 12, 12.1, 12.2, 12.3, 12.4, 12.5, 12.6, 12.7, 12.8, 12.9, 13, 13.1, 13.2, 13.3, 13.4, 13.5, 13.6, 13.7, 13.8, 13.9, 14, 14.1, 14.2, 14.3, 14.4, 14.5, 14.6, 14.7, 14.8, 14.9, 15, 15.1, 15.2, 15.3, 15.4, 15.5, 15.6, 15.7, 15.8, 15.9, 16, 16.1, 16.2, 16.3, 16.4, 16.5, 16.6, 16.7, 16.8, 16.9, 17, 17.1, 17.2, 17.3, 17.4, 17.5, 17.6, 17.7, 17.8, 17.9, 18, 18.1, 18.2, 18.3, 18.4, 18.5, 18.6, 18.7, 18.8, 18.9, 19, 19.1, 19.2, 19.3, 19.4, 19.5, 19.6, 19.7, 19.8, 19.9 or higher), preferably at least 13 (*e.g.,* 13, 13.1, 13.2, 13.3, 13.4, 13.5, 13.6, 13.7, 13.8, 13.9, 14, 14.1, 14.2, 14.3, 14.4, 14.5, 14.6, 14.7, 14.8, 14.9, 15, 15.1, 15.2, 15.3, 15.4, 15.5, 15.6, 15.7, 15.8, 15.9, 16, 16.1, 16.2, 16.3, 16.4, 16.5, 16.6, 16.7, 16.8, 16.9, 17, 17.1, 17.2, 17.3, 17.4, 17.5, 17.6, 17.7, 17.8, 17.9, 18, 18.1, 18.2, 18.3, 18.4, 18.5, 18.6, 18.7, 18.8, 18.9, 19, 19.1, 19.2, 19.3, 19.4, 19.5, 19.6, 19.7, 19.8, 19.9 or higher) as measured using a rubber process analyzer (by the method as described below).

As mentioned above, according to the first-third embodiments disclosed herein, the liner polybutadiene (ii) preferably has a g ratio of at least 0.85 and a g' ratio of at least 0.95, measured as indicated *infra.* Thus, in certain preferred embodiments of the first-third embodiments as disclosed herein, the linear polybutadiene (ii) has a g ratio of at least 0.85 and a g' ratio of at least 0.95. Branching ratios g and g' of polybutadiene samples are measured using a gel permeation chromatography (GPC) system with refractive index, multi-angle light scattering (MALS) and an online solution viscometer. The system used consisted of a Waters Arc HPLC system with Waters 2414 RI detector, a Wyatt DAWN MALS detector, and a Wyatt Viscostar viscometer. One Tosoh TSKgel GMHxl mixed bed column was used for the GPC separation. Polymer samples were dissolved in tetrahydrofuran (THF) at 1 mg/mL overnight. The GPC system was operated at 40 °C at a THF flowrate of 1 ml/mL, with an injection volume of 50 microliters. The RI, MALS and viscometry data was analyzed using Wyatt ASTRA 8 software to calculate molecular weight, radius of gyration, and intrinsic viscosity at each elution time. The built-in branching method in ASTRA is used to analyze samples for branching content. A sample of neodymium-catalyzed cis-polybutadiene known to be highly linear is used as a linear standard. The average branching ratio g is calculated using ASTRA, the molecular weight data, and the radius of gyration data. The average branching ratio g' is calculated using ASTRA, the molecular weight data, and the intrinsic viscosity data.

In certain embodiments of the fourth and fifth embodiments disclosed herein, the non-functionalized linear polybutadiene (ii) preferably has a g ratio of at least 0.8 (*e.g.,* 0.8, 0.81, 0.82, 0.83, 0.84, 0.85, 0.86, 0.87, 0.88, 0.89, 0.9, 0.91, 0.92, 0.93, 0.94, 0.95, 0.96, 0.97, 0.98, 0.99, 1, 1.01, 1.02, 1.03, 1.04, 1.05 or higher), at least 0.85 (*e.g.,* 0.85, 0.86, 0.87, 0.88, 0.89, 0.9, 0.91, 0.92, 0.93, 0.94, 0.95, 0.96, 0.97, 0.98, 0.99, 1, 1.01, 1.02, 1.03, 1.04, 1.05 or higher), at least 0.9 (*e.g.,* 0.9, 0.91, 0.92, 0.93, 0.94, 0.95, 0.96, 0.97, 0.98, 0.99, 1, 1.01, 1.02, 1.03, 1.04, 1.05 or higher), at least 0.95 (*e.g.,* 0.95, 0.96, 0.97, 0.98, 0.99, 1, 1.01, 1.02, 1.03, 1.04, 1.05 or higher), at least 1 (*e.g.,* 1, 1.01, 1.02, 1.03, 1.04, 1.05, 1.06, 1.07, 1.08, 1.09, 1.1, 1.11, 1.12, 1.15, 1.16, 1.17, 1.18, 1.19, 1.2 or higher), at least 1.05 (*e.g.,* 1.05, 1.06, 1.07, 1.08, 1.09, 1.1, 1.11, 1.12, 1.15, 1.16, 1.17, 1.18, 1.19, 1.2 or higher), or at least 1.10 (*e.g.,* 1.10, 1.11, 1.12, 1.15, 1.16, 1.17, 1.18, 1.19, 1.2 or higher), and a g' ratio of at least 0.85 (*e.g.,* 0.85, 0.86, 0.87, 0.88, 0.89, 0.9, 0.91, 0.92, 0.93, 0.94, 0.95, 0.96, 0.97, 0.98, 0.99, 1, 1.01, 1.02, 1.03, 1.04, 1.05 or higher), at least 0.9 (*e.g.,* 0.9, 0.91, 0.92, 0.93, 0.94, 0.95, 0.96, 0.97, 0.98, 0.99, 1, 1.01, 1.02, 1.03, 1.04, 1.05 or higher), at least 0.95 (*e.g.,* 0.95, 0.96, 0.97, 0.98, 0.99, 1, 1.01, 1.02, 1.03, 1.04, 1.05 or higher), or at least 1 (*e.g.,* 1, 1.01, 1.02, 1.03, 1.04, 1.05, 1.06, 1.07, 1.08, 1.09, 1.1, 1.11, 1.12, 1.15, 1.16, 1.17, 1.18, 1.19, 1.2 or higher), as measured using gyration data and intrinsic viscosity data, respectively, using a GPC-MALs detector, measured as indicated *infra.* Branching ratios g and g' of polybutadiene samples are measured using a GPC-MALS detector according to the method described above.

As discussed above, according to the fourth and fifth embodiments disclosed herein, the non-functionalized linear polybutadiene (ii) preferably has a long chain branching (LCB) index of about 3 to about 9 or 3 to 9 (*e.g.,* 3, 3.1, 3.2, 3.3, 3.4, 3.5, 3.6, 3.7, 3.8, 3.9, 4, 4.1, 4.2 , 4.3 , 4.4, 4.5, 4.6, 4.7, 4.8, 4.9, 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, 8.5, 8.6, 8.7, 8.8, 8.9, or 9), about 3 to about 5 or 3 to 5 (*e.g.,* 3, 3.1, 3.2, 3.3, 3.4, 3.5, 3.6, 3.7, 3.8, 3.9, 4, 4.1, 4.2 , 4.3, 4.4, 4.5, 4.6, 4.7, 4.8, 4.9, or 5,), or about 5 to about 8.5 or 5 to 8.5 (*e.g.,* 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, or 8.5), as measured using a rubber process analyzer. Thus, in certain embodiments of the fourth and fifth embodiments, the non-functionalized linear polybutadiene (ii) (as described *infra*) has a long chain branching (LCB) index of about 3 to about 9 or 3 to 9 *(e.g.,* 3, 3.1, 3.2, 3.3, 3.4, 3.5, 3.6, 3.7, 3.8, 3.9, 4, 4.1, 4.2 , 4.3 , 4.4, 4.5, 4.6, 4.7, 4.8, 4.9, 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, 8.5, 8.6, 8.7, 8.8, 8.9, or 9), as measured using a rubber process analyzer. In other embodiments of the fourth and fifth embodiments, the non-functionalized linear polybutadiene (ii) (as described *infra*) has a long chain branching (LCB) index of about 3 to about 5 or 3 to 5 (*e.g.,* 3, 3.1, 3.2, 3.3, 3.4, 3.5, 3.6, 3.7, 3.8, 3.9, 4, 4.1, 4.2 , 4.3 , 4.4, 4.5, 4.6, 4.7, 4.8, 4.9, or 5,), as measured using a rubber process analyzer. In yet other embodiments of the fourth and fifth embodiments, the non-functionalized linear polybutadiene (ii) (as described *infra)* has a long chain branching (LCB) index of about 5 to about 8.5 or 5 to 8.5 *(e.g.,* 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, or 8.5), as measured using a rubber process analyzer. Long chain branching (LCB) indices of polybutadiene samples are measured using a Rubber Process Analyzer (RPA). The RPA used is preferably a Premier RPA from Alpha Technologies - USA (Hudson, Ohio). Polymer samples are cut into small pieces with around 4 gram weight before putting them into the RPA. Measurement is conducted at 150 °C at the neat rubbery state. Oscillatory test with the amplitude of 1000% and frequency of 0.1 Hz is applied. Lissajous curves for each sample are an average of 20 oscillation cycles. The RPA software is used to extract elastic (G') and loss (G") moduli at various harmonics from 1st up to the 9th. The branching index is defined as the ratio of elastic modulus from 1st harmonic to that of the 5th harmonic (*i.e.,* LCB = G'1/G'5). The initial air pressure is set to 70 psi and sweep pressure enabled during the measurements.

As discussed elsewhere herein, the Mooney viscosity (ML1+4) at 100 °C is determined at 100 °C by using an Alpha Technologies Mooney viscometer with a large rotor, a one-minute warm-up time, and a four-minute running time. The Mooney viscosity (MS4) at 100 °C is determined at 100 °C by using an Alpha Technologies Mooney viscometer with a small rotor, 1 minute warm-up time, and a four-minute running time.

The gel content values disclosed herein are measured using a toluene immersion test. More specifically, the toluene immersion test involves immersing a sample in toluene for 2 days at room temperature (*i.e.,* 25 °C), then capturing any gel on a mesh screen (400 mesh stainless steel) and calculating the gel content as a weight percentage of the original polymer sample (after drying the gel on a screen under vacuum at 60 °C for 2 hours).

In certain embodiments of the first-third and fourth-fifth embodiments disclosed herein, the linear polybutadiene not only has a T80 value, and LCB index within the above-discussed ranges, but also has a gel content of no more than 4% (*e.g.,* 4, 3.9, 3.8, 3.7, 3.6, 3.5, 3.4, 3.3, 3.2, 3.1, 3, 2.9, 2.8, 2.7, 2.6, 2.5, 2.4, 2.3, 2.2, 2.1, 2, 1.9, 1.8, 1.7, 1.6, 1.5, 1.4, 1.3, 1.2, 1, 0.9, 0.8, 0.7, 0.6, 0.5 or lower), preferably no more than 3% (*e.g.,* 3, 2.9, 2.8, 2.7, 2.6, 2.5, 2.4, 2.3, 2.2, 2.1, 2, 1.9, 1.8, 1.7, 1.6, 1.5, 1.4, 1.3, 1.2, 1, 0.9, 0.8, 0.7, 0.6, 0.5 or lower), more preferably no more than 2% (*e.g.,* 2, 1.9, 1.8, 1.7, 1.6, 1.5, 1.4, 1.3, 1.2, 1, 0.9, 0.8, 0.7, 0.6, 0.5 or lower), even more preferably no more than 1% (*e.g.,* 1, 0.9, 0.8, 0.7, 0.6, 0.5 or lower), as measured using a toluene immersion test.

According to the first-third embodiments disclosed herein, the particular linear polybutadiene rubber (ii) that is used in the elastomer component of the tire tread rubber composition may vary. As those of skill in the art will understand, various commercially available high cis polybutadienes are available that can be considered linear (according to the explanation provided herein of the properties of a linear versus branched polybutadiene) and which meet the properties set forth herein for the linear polybutadiene rubber (ii) (*e.g.,* a cis bond content of at least 95% and a Tg of less than -101 °C). Non-limiting examples of polybutadienes suitable for use in the first-third embodiments disclosed herein as the linear polybutadiene rubber (ii) include SABIC^{®} BR 4610 from SABIC, SABIC^{®} BR 5510 from SABIC, Budene^{®}1208 from Goodyear, Budene^{®} 1224 from Goodyear, Synteca^{®} 44 from Synthos, Buna^{®} CB 24 from Arlanxeo, Buna^{®} CB 22 from Arlanxeo, Ubepol BR^{®} 150L from Ube, Europene^{®} Neocis BR60 from Versalis, Diene^{®} 140ND from Lion Elastomers, and Europene^{®} Neocis BR40 from Versalis. Non-limiting examples of polybutadienes suitable for use in the fourth and fifth embodiments disclosed herein as the linear polybutadiene rubber (ii) include SABIC^{®} BR 4610 from SABIC, SABIC^{®} BR 5510 from SABIC, Budene^{®}1208 from Goodyear, Budene^{®} 1224 from Goodyear, Synteca^{®} 44 from Synthos, Buna^{®} CB 24 from Arlanxeo, Buna^{®} CB 22 from Arlanxeo, Ubepol BR^{®} 150L from Ube, Europene^{®} Neocis BR60 from Versalis, Diene^{®} 140ND from Lion Elastomers and Europene^{®} Neocis BR40 from Versalis.

In preferred embodiments of the first and second embodiments, according to the fourth and fifth embodiments disclosed herein and according to the third embodiment disclosed herein, the linear polybutadiene rubber (ii) is non-functionalized. In other words, in such embodiments, the linear polybutadiene rubber (ii) does not contain any filler-reactive (e.g., silica-reactive or carbon black reactive) functional group or coupling agent. In other embodiments of the first and second embodiments disclosed herein, the linear polybutadiene rubber (ii) is functionalized; in such embodiments, the functionalization is preferably with a silica-reactive functional group as discussed above for the styrene-butadiene rubber (i).

According to the first-third and fourth-fifth embodiments disclosed herein, the Mw, Mn and Mw/Mn of the linear polybutadiene rubber having a cis bond content of at least 95%, a Tg of less than -101 °C, preferably -101 to -110, less than -105 °C or -105 to -109 °C of (ii) may vary. In certain embodiments of the first-third and fourth-fifth embodiments, the linear polybutadiene rubber having a cis bond content of at least 95%, a Tg of less than -101 °C, preferably -101 to -110, less than -105 °C or -105 to -109 °C of (ii) has a Mw of about 450,000 to about 800,000 grams/mole or 450,000-800,000 grams/mole (*e.g.,* 450,000; 475,000; 500,000; 525,000; 550,000; 575,000; 600,000; 625,000; 650,000; 675,000; 700,000; 725,000; 750,000; 775,000, or 800,000 grams/mole), preferably a Mw of about 550,000 to about 750,000 grams/mole or 550,000-750,000 grams/mole (*e.g.,* 550,000; 575,000; 600,000; 625,000; 650,000; 675,000; 700,000; 725,000; 750,000 grams/mole). In certain embodiments of the first-third and fourth-fifth embodiments, the linear polybutadiene rubber having a cis bond content of at least 95%, a Tg of less than -101 °C, preferably -101 to -110, less than -105 °C or -105 to -109 °C of (ii) has a Mn of about 125,000 to about 250,000 grams/mole or 125,000 to 250,000 grams/mole (*e.g.,* 125,000; 135,000; 145,000; 150,000; 155,000; 165,000; 175,000; 185,000; 195,000; 205,000; 215,000; 225,000; 235,000; 245,000; or 250,000 grams/mole), preferably a Mn of about 150,000 to about 225,000 grams/mole or 150,000 to 225,000 grams/mole (*e.g.,* 150,000; 155,000; 160,000; 165,000; 170,000; 175,000; 180,000; 185,000; 190,000; 195,000; 200,000; 205,000; 210,000; 215,000; 220,000; 225,000 grams/mole). Mn ranges falling within the foregoing ranges such as 135,000 to 185,000 grams/mole or 175,000 to 235,000 grams/mole can also be utilized in certain embodiments of the first-third and fourth-fifth embodiments. In certain embodiments of the first-third and fourth-fifth embodiments, the linear polybutadiene rubber having a cis bond content of at least 95%, a Tg of less than -101 °C, preferably -101 to -110, less than -105 °C or -105 to -109 °C of (ii) has a Mw/Mn of about 2 to about 5.5 or 2-5.5 (*e.g.,* 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, 5.1, 5.2, 5.3, 5.4, or 5.5), preferably about 4.5 to about 5.5 or 4.5 to 5.5 (*e.g.,* 4.5, 4.6, 4.7, 4.8, 4.9, 5, 5.1, 5.2, 5.3, 5.4, or 5.5). In certain embodiments of the first-third and fourth-fifth embodiments, the linear polybutadiene rubber having a cis bond content of at least 95%, a Tg of less than -101 °C, preferably -101 to -110, less than -105 °C or -105 to -109 °C of (ii) has a Mw of 450,000 to 800,000 grams/mole (or a range within the foregoing, as described above) and a Mn of 125,000 to 250,000 grams/mole (or a range within the foregoing, as described above). In certain embodiments of the first-third and fourth-fifth embodiments, the linear polybutadiene rubber having a cis bond content of at least 95%, a Tg of less than -101 °C, preferably -101 to -110, less than -105 °C or -105 to -109 °C of (ii) has a Mw of 450,000 to 800,000 grams/mole (or a range within the foregoing, as described above), a Mn of 125,000 to 250,000 grams/mole (or a range within the foregoing, as described above), and a Mw/Mn of 2.2 to 5.5 (or a range within the foregoing, as described above). The foregoing Mw and Mn values for the polybutadiene of (ii) refer to values measured by GPC using a polystyrene standard. As well, the foregoing Mw, Mn, and Mw/Mn values for the polybutadiene of (ii) refer to base Mw and base Mn rather than to functionalized polymer values (since the polybutadiene of (ii) is preferably non-functionalized).

According to the first-third and fourth-fifth embodiments disclosed herein, the Mooney viscosity ML₁₊₄ at 100 °C of the linear polybutadiene rubber (ii) may vary. In certain embodiments of the first-third embodiments and fourth-fifth disclosed herein, the linear polybutadiene rubber (ii) has a Mooney viscosity ML₁₊₄ at 100 °C of about 35 to about 65, 35 to 65 (*e.g.,* 35, 40, 45, 50, 55, 60, or 65), preferably about 40 to about 55, or 40 to 55 (*e.g.,* 40, 41, 42, 43, 44, 45, 46, 47, 48, 49, 50, 51, 52, 53, 54, or 55). The foregoing Mooney viscosity values or ranges may be combined with one or more of the foregoing Mw, Mn, or Mw/Mn values or ranges, as discussed above. In preferred embodiments of the first-third and fourth-fifth embodiments, one of the foregoing Mooney viscosity values or ranges is combined with a Mw, Mn and Mw/Mn value or range, as discussed above, more preferably a preferred Mooney viscosity or range is combined with a preferred Mw, preferred Mn, and preferred Mw/Mn value or range, as also discussed above.

The linear polybutadiene of (ii) may be produced using one of various existing methods for producing high cis polybutadienes. In certain embodiments of the first-third and fourth-fifth embodiments, the linear polybutadiene of (ii) is produced using a catalyst system selected from one of the following: (a) a lanthanide-based catalyst system, (b) a nickel-based catalyst system, or (c) a cobalt-based catalyst system. In preferred embodiments of the first-third and fourth-fifth embodiments, the linear polybutadiene of (ii) is produced using a nickel-based catalyst system. In certain embodiments of the first-third and fourth-fifth embodiments wherein the linear polybutadiene of (ii) is produced using a lanthanide-based catalyst system, the catalyst system comprises: (i) a lanthanide compound, (ii) an alkylating agent, and (iii) a halogen source, where (iii) may optionally be provided by (i), (ii), or both (i) and (ii). In certain embodiments of the first-third and fourth-fifth embodiments wherein the linear polybutadiene of (ii) is produced using a nickel-based catalyst system, the catalyst system comprises: (i) a nickel compound, optionally in combination with an alcohol, (ii) an organoaluminum, organomagnesium, organozinc compound, or a combination thereof, and (iii) a fluorine-containing compound or a complex thereof. In certain embodiments of the first-third and fourth-fifth embodiments wherein the linear polybutadiene of (ii) is produced using a cobalt-based catalyst system, the catalyst system comprises: (i) a cobalt compound, (ii) an organo aluminum halide, and (iii) optionally water.

In certain embodiments of the first-third and fourth-fifth embodiments disclosed herein, the linear polybutadiene rubber (ii), as described above, is an oil-extended rubber, incorporating oil in an amount as discussed further below. In other preferred embodiments of the first-third and fourth-fifth embodiments disclosed herein, the linear polybutadiene rubber (ii), as described above, is a non oil-extended rubber (*i.e.,* the BR is not extended with any oil). In those embodiments of the first-third and fourth-fifth embodiments where the linear polybutadiene rubber (ii), as described above, is an oil-extended rubber, the amount of oil used to extend the rubbery may vary. In certain embodiments of the first-third and fourth-fifth embodiments, 10 to 40 phr (*e.g.,* 10, 12, 14, 15, 16, 18, 20, 22, 24, 25, 26, 28, 30, 32, 34, 35, 36, 38, 40, 42, 44, 45, 46, 48, or 50 phr) of oil is used per 100 parts of polybutadiene to provide an oil-extended polybutadiene; in other embodiments the amount of oil may be 15 to 40 phr, 15 to 35 phr, 15 to 30 phr, 15 to 25 phr, 15 to 20 phr, 20 to 40 phr, 20 to 35 phr, 20 to 30 phr, 20 to 35 phr, 25 to 40 phr, 25 to 35 phr, 25 to 30 phr, 30 to 40 phr, or 35 to 40 phr. Exemplary oils that may be used to extend the polybutadiene rubber (ii) in those embodiments of the first-third and fourth-fifth embodiments where the polybutadiene rubber (ii) is oil-extended are discussed above as extender oils.

### Wear Improvement And Methods For Improving Wear

The use of the linear polybutadiene rubber (ii) having a cis bond content of at least 95%, a Tg of less than -101 °C, preferably -101 to -110, less than -105 °C, or -105 to -109 °C, in the tire tread rubber compositions according to the first-third embodiments (preferably in combination with the other components of the tire tread rubber compositions according to the first-third) disclosed herein can in certain embodiments result in an improvement in wear as compared to a control rubber composition wherein the parts of linear polybutadiene are replaced with an equivalent amount of branched polybutadiene having a cis bond content of at least 95% and a Tg of less than -101 °C. In certain embodiments of the first-third embodiments, the tire tread rubber composition exhibits an improvement in wear of at least 10% (*e.g.,* 10%, 12%, 14%, 15%, 16%, 18%, 20%, 22%, 24%, 25%, 26%, 28%, 30%, etc.) preferably at least 15% (15%, 16%, 18%, 20%, 22%, 24%, 25%, 26%, 28%, 30%, etc.), more preferably at least 20% (*e.g.,* 20%, 21%, 22%, 23%, 24%, 25%, 26%, 27%, 28%, 29%, 30%), or a range based on the foregoing such as 10-30%, 15-30%, 20-30%, 10-25%, 15-25%, 20-25%, 20-30%, or 20-25%. As discussed further, *infra,* an improvement in wear can be measured by DIN abrasion values wherein a lower value (*i.e.,* less material lost) indicates better wear. As discussed above, the second embodiment disclosed herein can be considered a method for improving the wear resistance of a tire tread rubber composition which contains high cis polybutadiene as a majority amount by weight of 100 parts of an elastomer component, the method comprising incorporating a linear polybutadiene (ii), as discussed above, into the tire tread rubber composition of the first or third embodiments, wherein the wear resistance is improved (by an amount as discussed above) as compared to a control tire tread rubber composition wherein the parts of linear polybutadiene are replaced with an equivalent amount of branched polybutadiene rubber having a cis bond content of at least 95% and a Tg of less than -101 °C.

The use of the linear polybutadiene rubber (ii) having a cis bond content of at least 95%, a Tg of less than -101 °C, preferably -101 to -110, less than -105 °C, or -105 to -109 °C, in the tire tread rubber compositions according to the fourth and fifth embodiments (preferably in combination with the other components of the tire tread rubber compositions according to the fourth and fifth embodiments) disclosed herein can in certain embodiments result in an improvement in wear as compared to a control rubber composition wherein the parts of linear polybutadiene are replaced with an equivalent amount of branched polybutadiene having a cis bond content of at least 95% and a Tg of less than -101 °C (as well as a T80 value and preferably a LCB index value as discussed further *infra*)*.* In certain embodiments of the first-third embodiments, the tire tread rubber composition exhibits an improvement in wear of at least 10% (*e.g.,* 10%, 12%, 14%, 15%, 16%, 18%, 20%, 22%, 24%, 25%, 26%, 28%, 30%, etc.) preferably at least 15% (15%, 16%, 18%, 20%, 22%, 24%, 25%, 26%, 28%, 30%, etc.), more preferably at least 20% (*e.g.,* 20%, 21%, 22%, 23%, 24%, 25%, 26%, 27%, 28%, 29%, 30%), or a range based on the foregoing such as 10-30%, 15-30%, 20-30%, 10-25%, 15-25%, 20-25%, 20-30%, or 20-25%. As discussed further, *infra,* an improvement in wear can be measured by DIN abrasion values wherein a lower value (*i.e.,* less material lost) indicates better wear. As discussed above, the fifth embodiment disclosed herein can be considered a method for improving the wear resistance of a tire tread rubber composition which contains high cis polybutadiene as a majority amount by weight of 100 parts of an elastomer component, the method comprising incorporating a non-functionalized linear polybutadiene (ii), as discussed above, into the tire tread rubber composition of the fourth embodiments, wherein the wear resistance is improved (by an amount as discussed above) as compared to a control tire tread rubber composition wherein the parts of non-functionalized linear polybutadiene are replaced with an equivalent amount of branched polybutadiene rubber having a cis bond content of at least 95% and a Tg of less than -101 °C (as well as a T80 value and preferably a LCB index value as discussed further *infra).*

### Natural Rubber, Polyisoprene, Or A Combination Thereof Of

In preferred embodiments of the first-third and fourth-fifth embodiments, the elastomer component is free of natural rubber and polyisoprene (*i.e.,* contains 0 parts of natural rubber and 0 parts of polyisoprene). In certain such embodiments, the total amount of SBR (i) and linear polybutadiene (ii) is 100 parts. In other embodiments of the first-third and fourth-fifth embodiments, the elastomer component includes a limited amount of natural rubber, polyisoprene, or a combination thereof, which can be referred to as (iii). In certain such embodiments of the first-third and fourth-fifth embodiments, the amount of (iii) is 0-9 parts (*e.g.,* 0, 1, 2, 3, 4, 5, 6, 7, 8, or 9 parts), and in other embodiments 1-9 parts (*e.g.,* 1, 2, 3, 4, 5, 6, 7, 8, or 9 parts). In other embodiments of the first-third and fourth-fifth embodiments, (iii) of the elastomer component consists of up to 5 parts (*e.g.,* 5, 4, 3, 2, 1, or 0 parts) , 0-5 parts (*e.g.,* 0, 1, 2, 3, 4, or 5 parts), or 1-5 parts (*e.g.,* 1, 2, 3, 4, or 5 parts) of natural rubber, polyisoprene, or a combination thereof. In certain embodiments of the first-third and fourth-fifth embodiments, (iii) consists (only) of natural rubber. In other embodiments of the first-third and fourth-fifth embodiments, (iii) consists (only) of polyisoprene. In yet other embodiments of the first-third and fourth-fifth embodiments, as previously mentioned, no natural rubber or polyisoprene is present or used in the tire tread rubber composition. When natural rubber is present for (iii) of the elastomer component, it may include Hevea natural rubber, non-Hevea natural rubber (*e.g.,* guayule natural rubber), or a combination thereof. When natural rubber is utilized in the tire tread rubber compositions of the first-third and fourth-fifth embodiments, the natural rubber preferably has a Mw of 1,000,000 to 2,000,000 grams/mole (*e.g.,* 1 million, 1.1 million, 1.2 million, 1.3 million, 1.4 million, 1.5 million, 1.6 million, 1.7 million, 1.8 million, 1.9 million, 2 million grams/mole); 1,250,000 to 2,000,000 grams/mole, or 1,500,000 to 2,000,000 grams/mole (as measured by GPC using a polystyrene standard). When natural rubber is utilized in the tire tread rubber compositions of the first-third and fourth-fifth embodiments, the Tg of the natural rubber may vary. Preferably, according to the first-third and fourth-fifth embodiments, when natural rubber is utilized it has a Tg of -65 to -80 °C (*e.g.,* -65, -66, -67, -68, -69, -70, -71-, -72, -73, -74, -75, -76, -77, -78, -79, or -80 °C), more preferably a Tg of -67 to -77 °C (*e.g.,* -67, -68, -69, -70, -71, -72, -73, -74, -75, -76, or -77 °C). When polyisoprene is utilized in the tire tread rubber compositions of the first-third and fourth-fifth embodiments, the Tg of the polyisoprene may vary. Preferably, according to the first-third and fourth-fifth embodiments, when polyisoprene is utilized it has a Tg of -55 to -75 °C (*e.g.,* -55, -56, -57, -58, -59, -60, -61, -62, -63, -64, -65, -66, - 67, -68, -69, -70, -71, -72, -73, -74, or -75 °C), more preferably -58 to -74 °C (*e.g.,* -58, -59, -60, - 61, -62, -63, -64, -65, -66, -67, -68, -69, -70, -71, -72, -73, or -74 °C).

### Fillers

As used herein, the term "reinforcing" with respect to "reinforcing carbon black filler," "reinforcing silica filler," and "reinforcing filler" generally should be understood to encompass both fillers that are traditionally described as reinforcing as well as fillers that may traditionally be described as semi-reinforcing. Traditionally, the term "reinforcing filler" is used to refer to a particulate material that has a nitrogen absorption specific surface area (N₂SA) of more than about 100 m²/g, and in certain instances more than 100 m²/g, more than about 125 m²/g, more than 125 m²/g, or even more than about 150 m²/g or more than 150 m²/g. Alternatively (or additionally), the traditional use of the term "reinforcing filler" can also be used to refer to a particulate material that has a particle size of about 10 nm to about 50 nm (including 10 nm to 50 nm). Traditionally, the term "semi-reinforcing filler" is used to refer to a filler that is intermediary in either particle size, surface area (N₂SA), or both, to a non-reinforcing filler (as discussed below) and a reinforcing filler. In certain embodiments of the first-third and fourth-fifth embodiments disclosed herein, the term "reinforcing filler" is used to refer to a particulate material that has a nitrogen absorption specific surface area (N₂SA) of about 20 m²/g or greater, including 20 m²/g or greater, more than about 50 m²/g, more than 50 m²/g, more than about 100 m²/g, or more than 100 m²/g. In certain embodiments of the first-third and fourth-fifth embodiments disclosed herein, the term "reinforcing filler" is used to refer to a particulate material that has a particle size of about 10 nm up to about 1000 nm, including 10 nm to 1000 nm, about 10 nm up to about 50 nm and 10 nm to 50 nm.

### Reinforcing Silica Filler

As mentioned above, according to the first-third embodiments disclosed herein, the tire tread rubber compositions comprise (include) at least one reinforcing silica filler in an amount of 80-120 phr (*e.g.,* 80, 81, 82, 83, 84, 85, 86, 88, 90, 92, 94, 95, 96, 98, 100, 102, 104, 105, 106, 108, 110, 111, 112, 113, 114, 115, 116, 117, 118, 119, or 120 phr), preferably in an amount of 85-110 phr (*e.g.,* 85, 86, 88, 90, 92, 94, 95, 96, 98, 100, 102, 104, 105, 106, 108, or 110 phr), more preferably in an amount of 85-100 phr (*e.g.,* 85, 86, 88, 90, 92, 94, 95, 96, 98, or 100 phr). The surface area of the at least one reinforcing silica filler used in the tire tread rubber compositions of the first-third embodiments may vary. In preferred embodiments, the at least one reinforcing silica filler has a surface area of about 100 to about 300 m²/g or 100 to 300 m²/g *(e.g.,* 110, 120, 130, 140, 150, 160, 180, 200, 220, 240, 260, 280, or 300 m²/g), preferably about 150 to about 300 m²/g or 150 to 300 m²/g, and more preferably about 180 to about 250 m²/g or 180 to 250 m²/g (*e.g.,* 180, 185, 190, 195, 200, 205, 210, 215, 220, 225, 230, 235, 240, 245, or 250 m²/g). In certain embodiment of the first-third embodiments disclosed herein, the tire tread rubber compositions comprise (include) at least one reinforcing silica filler in an amount of 85-100 phr (*e.g.,* 85, 86, 87, 88, 89, 90, 91, 92, 93, 94, 95, 96, 97, 98, 99 or 100 phr), having a surface area of about 100 to about 300 m²/g or 100 to 300 m²/g (*e.g.,* 110, 120, 130, 140, 150, 160, 180, 200, 220, 240, 260, 280, or 300 m²/g), preferably about 150 to about 300 m²/g or 150 to 300 m²/g, and more preferably about 180 to about 250 m²/g or 180 to 250 m²/g. In certain preferred embodiments of the first-third embodiments, the tire tread rubber composition comprises (includes) at least one reinforcing silica filler having a surface area of 150 to 300 m²/g (*e.g.,* 150, 160, 180, 200, 220, 240, 260, 280, or 300 m²/g). In certain even more preferred embodiments of the first-third embodiments the tire tread rubber composition comprises (includes) at least one reinforcing silica filler having a surface area of 180 to 250 m²/g *(e.g.,* 180, 185, 190, 195, 200, 205, 210, 215, 220, 225, 230, 235, 240, or 250 m²/g) which should be understood as including intermediary ranges such as 180-240, 180-230, 180-220, 180-210, 190-240, 190-230, 190-220, 190-210, etc. According to the first-third embodiments, one or more than one reinforcing silica filler having a surface area as discussed above may be utilized; in those embodiments where more than one such reinforcing silica filler is utilized, the foregoing amounts refer to the total amount of all reinforcing silica fillers. In certain embodiments of the first-third embodiments, only one reinforcing silica filler having a surface area as discussed above is utilized. In preferred embodiments of the first-third embodiments, the only reinforcing silica filler(s) used in the tire tread rubber composition have a surface area as discussed above; in such embodiments, the tire tread rubber composition can be understood as being free of (*i.e.,* contains 0 phr of) reinforcing silica filler having a surface area outside the above-discussed ranges.

As mentioned above, according to the fourth-fifth embodiments disclosed herein, the tire tread rubber compositions comprise (include) at least one reinforcing silica filler in an amount of 80-120 phr (*e.g.,* 80, 82, 84, 85, 86, 88, 90, 92, 94, 95, 96, 98, 100, 102, 104, 105, 106, 108, 110, 112, 114, 115, 116, 118, or 120 phr), preferably 85-110 phr (*e.g.,* 85, 86, 88, 90, 92, 94, 95, 96, 98, 100, 102, 104, 105, 106, 108, or 110 phr), more preferably in an amount of 85-100 phr (*e.g.,* 85, 86, 88, 90, 92, 94, 95, 96, 98, or 100 phr). The surface area of the at least one reinforcing silica filler used in the tire tread rubber compositions of the fourth-fifth embodiments may vary. In preferred embodiments of the fourth-fifth embodiments, the at least one reinforcing silica filler has a surface area of about 100 to about 300 m²/g or 100 to 300 m²/g (*e.g.,* 110, 120, 130, 140, 150, 160, 180, 200, 220, 240, 260, 280, or 300 m²/g), preferably about 150 to about 300 m²/g or 150 to 300 m²/g, and more preferably about 180 to about 250 m²/g or 180 to 250 m²/g (*e.g.,* 180, 185, 190, 195, 200, 205, 210, 215, 220, 225, 230, 235, 240, 245, or 250 m²/g). In certain embodiments of the fourth-fifth embodiments disclosed herein, the tire tread rubber compositions comprise (include) at least one reinforcing silica filler in an amount of 85-100 phr (*e.g.,* 85, 86, 87, 88, 89, 90, 91, 92, 93, 94, 95, 96, 97, 98, 99 or 100 phr), having a surface area of about 100 to about 300 m²/g or 100 to 300 m²/g (*e.g.,* 110, 120, 130, 140, 150, 160, 180, 200, 220, 240, 260, 280, or 300 m²/g), preferably about 150 to about 300 m²/g or 150 to 300 m²/g, and more preferably about 180 to about 250 m²/g or 180 to 250 m²/g. In certain preferred embodiments of the fourth-fifth embodiments, the tire tread rubber composition comprises (includes) at least one reinforcing silica filler having a surface area of 150 to 300 m²/g (*e.g.,* 150, 160, 180, 200, 220, 240, 260, 280, or 300 m²/g). In certain even more preferred embodiments of the fourth-fifth embodiments the tire tread rubber composition comprises (includes) at least one reinforcing silica filler having a surface area of 180 to 250 m²/g (*e.g.,* 180, 185, 190, 195, 200, 205, 210, 215, 220, 225, 230, 235, 240, or 250 m²/g) which should be understood as including intermediary ranges such as 180-240, 180-230, 180-220, 180-210, 190-240, 190-230, 190-220, 190-210, etc. According to the fourth-fifth embodiments, one or more than one reinforcing silica filler having a surface area as discussed above may be utilized; in those embodiments where more than one such reinforcing silica filler is utilized, the foregoing amounts refer to the total amount of all reinforcing silica fillers. In certain embodiments of the fourth-fifth embodiments, only one reinforcing silica filler having a surface area as discussed above is utilized. In preferred embodiments of the fourth-fifth embodiments, the only reinforcing silica filler(s) used in the tire tread rubber composition have a surface area as discussed above; in such embodiments, the tire tread rubber composition can be understood as being free of (*i.e.,* contains 0 phr of) reinforcing silica filler having a surface area outside the above-discussed ranges.

According to the first-third and fourth-fifth embodiments, the particular type of silica used for the at least one reinforcing silica filler having a surface area as discussed above may vary. Non-limiting examples of reinforcing silica fillers suitable for use in certain embodiments of the first-third and fourth-fifth embodiments include, but are not limited to, precipitated amorphous silica, wet silica (hydrated silicic acid), dry silica (anhydrous silicic acid), fumed silica, calcium silicate and the like. Other suitable reinforcing silica fillers for use in certain embodiments of the first-third and fourth-fifth embodiments include, but are not limited to, aluminum silicate, magnesium silicate (Mg₂SiO₄, MgSiO₃ etc.), magnesium calcium silicate (CaMgSiO₄), calcium silicate (Ca₂SiO₄ etc.), aluminum silicate (Al₂SiO₅, Al₄.3SiO₄.5H₂O etc.), aluminum calcium silicate (Al₂O₃.CaO₂SiO₂, etc.), and the like. Among the listed reinforcing silica fillers, precipitated amorphous wet-process, hydrated silica fillers are preferred. Such reinforcing silica fillers are produced by a chemical reaction in water, from which they are precipitated as ultrafine, spherical particles, with primary particles strongly associated into aggregates, which in turn combine less strongly into agglomerates. The surface area, as measured by the BET method, is a preferred measurement for characterizing the reinforcing character of different reinforcing silica fillers. In certain embodiments of the first-third and fourth-fifth embodiments disclosed herein, the rubber composition comprises a reinforcing silica filler having a surface area (as measured by the BET method), as discussed *infra.* In certain embodiments of the first-third and fourth-fifth embodiments disclosed herein, the rubber composition comprises reinforcing silica filler having a pH of about 5.5 to about 8, 5.5 to 8 (*e.g.,* 5.5, 5.7, 5.9, 6.1, 6.3, 6.5, 6.7, 6.9, 7.1, 7.3, 7.5, 7.7, 7.9, or 8), about 6 to about 8, 6 to 8 (*e.g.,* 6, 6.2, 6.4, 6.6, 6.8, 7, 7.2, 7.4, 7.6, 7.8, or 8), about 6 to about 7.5, 6 to 7.5, about 6.5 to about 8, 6.5 to 8, about 6.5 to about 7.5, 6.5 to 7.5, about 5.5 to about 6.8, or 5.5 to 6.8. Some of the commercially available reinforcing silica fillers which can be used in certain embodiments of the first-third and fourth-fifth embodiments include, but are not limited to, Hi-Sil^{®} EZ120G, Hi-Sil^{®} EZ120G-D, Hi-Sil^{®} 134G, Hi-Sil^{®}EZ 160G, Hi-Sil^{®}EZ 160G-D, Hi-Sil^{®}190, Hi-Sil^{®}190G-D, Hi-Sil^{®} EZ 200G, Hi-Sil^{®} EZ 200G-D, Hi-Sil^{®} 210, Hi-Sil^{®} 233, Hi-Sil^{®} 243LD, Hi-Sil^{®} 255CG-D, Hi-Sil^{®} 315-D, Hi-Sil^{®} 315G-D, Hi-Sil^{®} HDP 320G and the like, produced by PPG Industries (Pittsburgh, Pa.) As well, a number of useful commercial grades of different reinforcing silica fillers are also available from Evonik Corporation (*e.g.,* Ultrasil^{®} 320 GR, Ultrasil^{®} 5000 GR, Ultrasil^{®} 5500 GR, Ultrasil^{®} 7000 GR, Ultrasil^{®} VN2 GR, Ultrasil^{®} VN2, Ultrasil^{®} VN3, Ultrasil^{®} VN3 GR, Ultrasil^{®}7000 GR, Ultrasil^{®} 7005, Ultrasil^{®} 7500 GR, Ultrasil^{®} 7800 GR, Ultrasil^{®} 9500 GR, Ultrasil^{®} 9000 G, Ultrasil^{®} 9100 GR), and Solvay (*e.g.,* Zeosil^{®} 1115MP, Zeosil^{®} 1085GR, Zeosil^{®} 1165MP, Zeosil^{®} 1200MP, Zeosil^{®} Premium, Zeosil^{®} 195HR, Zeosil^{®} 195GR, Zeosil^{®} 185GR, Zeosil^{®} 175GR, and Zeosil^{®} 165 GR).

### Silica Coupling Agent

In certain embodiments of the first-third and fourth-fifth embodiments disclosed herein, one or more than one silica coupling agent may also (optionally) be utilized. In preferred embodiments of the first-third and fourth-fifth embodiments, at least one silica coupling agent is utilized. Silica coupling agents are useful in preventing or reducing aggregation of the silica filler in rubber compositions. Aggregates of the silica filler particles are believed to increase the viscosity of a rubber composition, and, therefore, preventing this aggregation reduces the viscosity and improves the processability and blending of the rubber composition.

Generally, any conventional type of silica coupling agent can be used, such as those having a silane and a constituent component or moiety that can react with a polymer, particularly a vulcanizable polymer. The silica coupling agent acts as a connecting bridge between silica and the polymer. Suitable silica coupling agents for use in certain embodiments of the first-third embodiments disclosed herein include those containing groups such as alkyl alkoxy, mercapto, blocked mercapto, sulfide-containing (*e.g.,* monosulfide-based alkoxy-containing, disulfide-based alkoxy-containing, tetrasulfide-based alkoxy-containing), amino, vinyl, epoxy, and combinations thereof. In certain embodiments of the first-third and fourth-fifth embodiments disclosed herein, the silica coupling agent can be added to the rubber composition in the form of a pre-treated silica; a pre-treated silica has been pre-surface treated with a silane prior to being added to the rubber composition. The use of a pre-treated silica can allow for two ingredients (*i.e.,* silica and a silica coupling agent) to be added in one ingredient, which generally tends to make rubber compounding easier.

Alkyl alkoxysilanes have the general formula R¹⁰ₚSi(OR¹¹)₄₋ₚ where each R¹¹ is independently a monovalent organic group, and p is an integer from 1 to 3, with the proviso that at least one R¹⁰ is an alkyl group. Preferably p is 1. Generally, each R¹⁰ independently comprises C₁ to C₂₀ aliphatic, C₅ to C₂₀ cycloaliphatic, or C₆ to C₂₀ aromatic; and each R¹¹ independently comprises C₁ to C₆ aliphatic. In certain exemplary embodiments, each R¹⁰ independently comprises C₆ to C₁₅ aliphatic and in additional embodiments each R¹⁰ independently comprises C₈ to C₁₄ aliphatic. Mercapto silanes have the general formula HS-R¹³-Si(R¹⁴)(R¹⁵)₂ where R¹³ is a divalent organic group, R¹⁴ is a halogen atom or an alkoxy group, each R¹⁵ is independently a halogen, an alkoxy group or a monovalent organic group. The halogen is chlorine, bromine, fluorine, or iodine. The alkoxy group preferably has 1-3 carbon atoms. Blocked mercapto silanes have the general formula B-S-R¹⁶-Si-X₃ with an available silyl group for reaction with silica in a silica-silane reaction and a blocking group B that replaces the mercapto hydrogen atom to block the reaction of the sulfur atom with the polymer. In the foregoing general formula, B is a block group which can be in the form of an unsaturated heteroatom or carbon bound directly to sulfur via a single bond; R¹⁶ is C₁ to C₆ linear or branched alkylidene and each X is independently selected from the group consisting of C₁ to C₄ alkyl or C₁ to C₄ alkoxy.

Non-limiting examples of alkyl alkoxysilanes suitable for use in certain embodiments of the first-third and fourth-fifth embodiments include, but are not limited to, octyltriethoxysilane, octyltrimethoxysilane, trimethylethoxysilane, cyclohexyltriethoxysilane, isobutyltriethoxy-silane, ethyltrimethoxysilane, cyclohexyl-tributoxysilane, dimethyldiethoxysilane, methyltriethoxysilane, propyltriethoxysilane, hexyltriethoxysilane, heptyltriethoxysilane, nonyltriethoxysilane, decyltriethoxysilane, dodecyltriethoxysilane, tetradecyltriethoxysilane, octadecyltriethoxysilane, methyloctyldiethoxysilane, dimethyldimethoxysilane, methyltrimethoxysilane, propyltrimethoxysilane, hexyltrimethoxysilane, heptyltrimethoxysilane, nonyltrimethoxysilane, decyltrimethoxysilane, dodecyltrimethoxysilane, tetradecyltrimethoxysilane, octadecyl-trimethoxysilane, methyloctyl dimethoxysilane, and mixtures thereof.

Non-limiting examples of bis(trialkoxysilylorgano)polysulfides suitable for use in certain embodiments of the first-third and fourth-fifth embodiments include bis(trialkoxysilylorgano) disulfides and bis(trialkoxysilylorgano)tetrasulfides. Specific non-limiting examples of bis(trialkoxysilylorgano)disulfides include, but are not limited to, 3,3'-bis(triethoxysilylpropyl) disulfide, 3,3'-bis(trimethoxysilylpropyl)disulfide, 3,3'-bis(tributoxysilylpropyl)disulfide, 3,3'-bis(tri-t-butoxysilylpropyl)disulfide, 3,3'-bis(trihexoxysilylpropyl)disulfide, 2,2'-bis(dimethylmethoxysilylethyl)disulfide, 3,3'-bis(diphenylcyclohexoxysilylpropyl)disulfide, 3,3'-bis(ethyl-di-sec-butoxysilylpropyl)disulfide, 3,3'-bis(propyldiethoxysilylpropyl)disulfide, 12,12'-bis(triisopropoxysilylpropyl)disulfide, 3,3'-bis(dimethoxyphenylsilyl-2-methylpropyl)disulfide, and mixtures thereof. Non-limiting examples of bis(trialkoxysilylorgano)tetrasulfide silica coupling agents suitable for use in certain embodiments of the first-third embodiments include, but are not limited to, bis(3-triethoxysilylpropyl)tetrasulfide, bis(2-triethoxysilylethyl) tetrasufide, bis(3-trimethoxysilylpropyl)tetrasulfide, 3- trimethoxysilylpropyl-N,N-dimethylthiocarbamoyl tetrasulfide, 3-triethoxysilylpropyl-N,N-dimethylthiocarbamoyl tetrasulfide, 2-triethoxysilyl-N,N-dimethylthiocarbamoyl tetrasulfide, 3-trimethoxysilylpropyl-benzothiazole tetrasulfide, 3-triethoxysilylpropylbenzothiazole tetrasulfide, and mixtures thereof. Bis(3-triethoxysilylpropyl)tetrasulfide is sold commercially as Si69^{®} by Evonik Degussa Corporation. In preferred embodiments of the first-third embodiments, the tire tread rubber composition includes a silica coupling agent in the form of a bis(trialkoxysilylorgano)polysulfides, more preferably a bis(trialkoxysilylorgano) disulfides.

Non-limiting examples of mercapto silanes suitable for use in certain embodiments of first-third and fourth-fifth embodiments disclosed herein include, but are not limited to, 1-mercaptomethyltriethoxysilane, 2- mercaptoethyltriethoxysilane, 3-mercaptopropyltriethoxysilane, 3- mercaptopropylmethyldiethoxysilane, 2-mercaptoethyltripropoxysilane, 18- mercaptooctadecyldiethoxychlorosilane, and mixtures thereof.

Non-limiting examples of blocked mercapto silanes suitable for use in certain embodiments of the first-third and fourth-fifth embodiments disclosed herein include, but are not limited to, those described in U.S. Pat. Nos. 6,127,468; 6,204,339; 6,528,673; 6,635,700; 6,649,684; and 6,683,135, the disclosures of which are hereby incorporated by reference. Representative examples of the blocked mercapto silanes include, but are not limited to, 2- triethoxysilyl-1-ethylthioacetate; 2-trimethoxysilyl-1-ethylthioacetate; 2-(methyldimethoxysilyl)- 1-ethylthioacetate; 3-trimethoxysilyl-1-propylthioacetate; triethoxysilylmethyl-thioacetate; trimethoxysilylmethylthioacetate; triisopropoxysilylmethylthioacetate; methyldiethoxysilylmethylthioacetate; methyldimethoxysilylmethylthioacetate; methyldiisopropoxysilylmethylthioacetate; dimethylethoxysilylmethylthioacetate; dimethylmethoxysilylmethylthioacetate; dimethylisopropoxysilylmethylthioacetate; 2-triisopropoxysilyl-1-ethylthioacetate; 2-(methyldiethoxysilyl)-1-ethylthioacetate, 2-(methyldiisopropoxysilyl)-1- ethylthioacetate; 2-(dimethylethoxysilyl-1-ethylthioacetate; 2-(dimethylmethoxysilyl)-1- ethylthioacetate; 2-(dimethylisopropoxysilyl)-1-ethylthioacetate; 3-triethoxysilyl-1-propylthioacetate; 3-triisopropoxysilyl-1-propylthioacetate; 3-methyldiethoxysilyl-1-propyl-thioacetate; 3-methyldimethoxysilyl-1-propylthioacetate; 3-methyldiisopropoxysilyl-1-propylthioacetate; 1- (2-triethoxysilyl-1-ethyl)-4-thioacetylcyclohexane; 1-(2-triethoxysilyl-1-ethyl)-3-thioacetylcyclohexane; 2-triethoxysilyl-5-thioacetylnorbornene; 2-triethoxysilyl-4-thioacetylnorbornene; 2-(2-triethoxysilyl-1-ethyl)-5-thioacetylnorbornene; 2-(2-triethoxy-silyl-1-ethyl)-4-thioacetylnorbornene; 1-(1-oxo-2-thia-5-triethoxysilylphenyl)benzoic acid; 6-triethoxysilyl-1-hexylthioacetate; 1-triethoxysilyl-5-hexylthioacetate; 8-triethoxysilyl-1-octylthioacetate; 1-triethoxysilyl-7-octylthioacetate; 6-triethoxysilyl-1-hexylthioacetate; 1-triethoxysilyl-5-octylthioacetate; 8-trimethoxysilyl-1-octylthioacetate; 1-trimethoxysilyl-7-octylthioacetate; 10-triethoxysilyl-1-decylthioacetate; 1-triethoxysilyl-9-decylthioacetate; 1-triethoxysilyl-2-butylthioacetate; 1-triethoxysilyl-3-butylthioacetate; 1-triethoxysilyl-3-methyl-2-butylthioacetate; 1-triethoxysilyl-3-methyl-3-butylthioacetate; 3-trimethoxysilyl-1-propylthiooctanoate; 3-triethoxysilyl-1-propyl-1-propylthiopalmitate; 3-triethoxysilyl-1-propylthiooctanoate; 3-triethoxysilyl-1-propylthiobenzoate; 3-triethoxysilyl-1-propylthio-2-ethylhexanoate; 3-methyldiacetoxysilyl-1-propylthioacetate; 3-triacetoxysilyl-1-propylthioacetate; 2-methyldiacetoxysilyl-1-ethylthioacetate; 2-triacetoxysilyl-1-ethylthioacetate; 1-methyldiacetoxysilyl-1-ethylthioacetate; 1-triacetoxysilyl-1-ethylthioacetate; tris-(3-triethoxysilyl-1-propyl)trithiophosphate; bis-(3-triethoxysilyl-1-propyl)methyldithiophosphonate; bis-(3-triethoxysilyl-1-propyl)ethyldithiophosphonate; 3-triethoxysilyl-1-propyldimethylthiophosphinate; 3-triethoxysilyl-1-propyldiethylthiophosphinate; tris-(3-triethoxysilyl-1-propyl)tetrathiophosphate; bis-(3-triethoxysilyl-1 propyl)methyltrithiophosphonate; bis-(3-triethoxysilyl-1-propyl)ethyltrithiophosphonate; 3- triethoxysilyl-1-propyldimethyldithiophosphinate; 3-triethoxysilyl-1-propyldiethyldithiophosphinate; tris-(3-methyldimethoxysilyl-1-propyl)trithiophosphate; bis-(3-methyldimethoxysilyl- 1-propyl)methyldithiophosphonate; bis-(3-methyldimethoxysilyl-1-propyl)-ethyldithiophosphonate; 3-methyldimethoxysilyl-1-propyldimethylthiophosphinate; 3- methyldimethoxysilyl-1-propyldiethylthiophosphinate; 3-triethoxysilyl-1-propylmethylthiosulfate; 3-triethoxysilyl-1-propylmethanethiosulfonate; 3-triethoxysilyl-1-propylethanethiosulfonate; 3-triethoxysilyl-1-propylbenzenethiosulfonate; 3-triethoxysilyl-1-propyltoluenethiosulfonate; 3-triethoxysilyl-1-propylnaphthalenethiosulfonate; 3-triethoxysilyl-1-propylxylenethiosulfonate; triethoxysilylmethylmethylthiosulfate; triethoxysilylmethylmethanethiosulfonate; triethoxysilylmethylethanethiosulfonate; triethoxysilylmethylbenzenethiosulfonate; triethoxysilylmethyltoluenethiosulfonate; triethoxysilylmethylnaphthalenethiosulfonate; triethoxysilylmethylxylenethiosulfonate, and the like. Mixtures of various blocked mercapto silanes can be used. A further example of a suitable blocked mercapto silane for use in certain exemplary embodiments is NXT^{™} silane (3-octanoylthio-1-propyltriethoxysilane), commercially available from Momentive Performance Materials Inc. of Albany, NY.

Non-limiting examples of pre-treated silicas (*i.e*., silicas that have been pre-surface treated with a silane) suitable for use in certain embodiments of the first-third and fourth-fifth embodiments disclosed herein include, but are not limited to, Ciptane^{®} 255 LD and Ciptane^{®} LP (PPG Industries) silicas that have been pre-treated with a mercaptosilane, and Coupsil^{®} 8113 (Degussa) that is the product of the reaction between organosilane bis(triethoxysilylpropyl) polysulfide (Si69) and Ultrasil^{®} VN3 silica. Coupsil 6508, Agilon 400^{™} silica from PPG Industries, Agilon 454^{®} silica from PPG Industries, and 458^{®} silica from PPG Industries. In those embodiments where the silica comprises a pre-treated silica, the pre-treated silica is used in an amount as previously disclosed for the silica filler (*i.e.,* 85-110 phr, 85-100 phr, etc.).

When a silica coupling agent is utilized in an embodiment of the first-third and fourth-fifth embodiments, the amount used may vary. In certain embodiments of the first-third and fourth-fifth embodiments, the rubber compositions do not contain any silica coupling agent. In other preferred embodiments of the first-third and fourth-fifth embodiments, the silica coupling agent is present in an amount sufficient to provide a ratio of the total amount of silica coupling agent to silica filler of about 0.1:100 to about 1:5 (*i.e.,* about 0.1 to about 20 parts by weight per 100 parts of silica), including 0.1:100 to 1:5, about 1:100 to about 1:10, 1:100 to 1:10, about 1:100 to about 1:20, 1:100 to 1:20, about 1:100 to about 1:25, and 1:100 to 1:25 as well as about 1:100 to about 0:100 and 1:100 to 0:100. In preferred embodiments of the first-third and fourth-fifth embodiments, the ratio of the total amount of silica coupling agent to silica filler falls within a ratio of 1:10 to 1:20 (*i.e.,* 10 to 5 parts by weight per 100 parts of silica). In certain embodiments according to the first-third and fourth-fifth embodiments, the rubber composition comprises about 0.1 to about 15 phr silica coupling agent, including 0.1 to 15 phr (*e.g.,* 0.1, 0.5, 1, 2, 3, 4, 5, 6, 7, 8, 9, 10, 11, 12, 13, 14, or 15 phr), about 0.1 to about 12 phr, 0.1 to 12 phr, about 0.1 to about 10 phr, 0.1 to 10 phr, about 0.1 to about 7 phr, 0.1 to 7 phr, about 0.1 to about 5 phr, 0.1 to 5 phr, about 0.1 to about 3 phr, 0.1 to 3 phr, about 1 to about 15 phr, 1 to 15 phr (*e.g.,* 1, 2, 3, 4, 5, 6, 7, 8, 9, 10, 11, 12, 13, 14, or 15 phr), about 1 to about 12 phr, 1 to 12 phr (*e.g.,* 1, 2, 3, 4, 5, 6, 7, 8, 9, 10, 11, or 12 phr), about 1 to about 10 phr, 1 to 10 phr (*e.g.,* 1, 1.5, 2, 2.5, 3, 3.5, 4, 4.5, 5, 5.5, 6, 6.5, 7, 7.5, 8, 8.5, 9, 9.5, or 10 phr), about 1 to about 7 phr, 1 to 7 phr, about 1 to about 5 phr, 1 to 5 phr, about 1 to about 3 phr, 1 to 3 phr, about 3 to about 15 phr, 3 to 15 phr, about 3 to about 12 phr, 3 to 12 phr, about 3 to about 10 phr, 3 to 10 phr, about 3 to about 7 phr, 3 to 7 phr, about 3 to about 5 phr, 3 to 5 phr, about 5 to about 15 phr, 5 to 15 phr, about 5 to about 12 phr, 5 to 12 phr, about 5 to about 10 phr, 5 to 10 phr, about 5 to about 7 phr, or 5 to 7 phr. In preferred embodiments of the first-third and fourth-fifth embodiments, the rubber composition comprises silica coupling agent in an amount of 8 to 12 phr or one of the foregoing ranges falling within this range.

### Carbon Black Filler

According to the first-third and fourth-fifth embodiments disclosed herein, the amount of carbon black filler used in the tire tread rubber composition is limited. More specifically, according to the first-third and fourth-fifth embodiments disclosed herein, the tire tread rubber composition contains no more than 15 phr (*e.g.,* 0-15 phr, 1-15 phr, 15, 14, 13, 12, 11, 10, 9, 8, 7, 6, 5, 4, 3, 2, 1, or even 0 phr) of carbon black filler, and in preferred embodiments of the first-third and fourth-fifth embodiments disclosed herein, the tire tread rubber composition contains no more than 10 phr (*e.g.,* 0-10 phr, 1-10 phr, 10, 9, 8, 7, 6, 5, 4, 3, 2, 1, or 0 phr) of carbon black filler. In certain preferred embodiments of the first-third and fourth-fifth embodiments disclosed herein, the tire tread rubber composition contains about 5 to about 10 phr of carbon black or 5-10 phr (*e.g.,* 5, 6, 7, 8, 9 or 10 phr) of carbon black. In certain preferred embodiments of the fourth and fifth embodiments, the tire tread rubber composition contains 1-10 phr of carbon black (*e.g.,* 1, 2, 3, 4, 5, 6, 7, 8, 9, or 10 phr). In certain embodiments of the first-third and fourth-fifth embodiments, the tire tread rubber composition contains 1-15 phr, 5-15 phr, 1-10 phr, 5-10 phr, 1-9 phr, 1-8 phr, no more than 8 phr (*e.g.,* 8, 7, 6, 5, 4, 3, 2, 1 or even 0 phr), 0-9 phr, or 0-8 phr of carbon black filler. In certain embodiments of the first-third and fourth-fifth embodiments, the tire tread rubber composition contains 0 phr of carbon black filler. In certain preferred embodiments of the first-third and fourth-fifth embodiments, the foregoing limited amounts of carbon black filler should be understood to refer to reinforcing carbon black filler. In other embodiments of the first-third and fourth-fifth embodiments, the foregoing limited amounts of carbon black filler should be understood to refer to non-reinforcing carbon black filler. In yet other embodiments of the first-third and fourth-fifth embodiments, the foregoing limited amounts of carbon black filler should be understood to refer to all carbon black fillers (*i.e*., both reinforcing and non-reinforcing carbon black filler).

In those embodiments of the first-third and fourth-fifth embodiments where carbon black filler is present, the particular type or types of carbon black utilized may vary. Generally, suitable carbon blacks for use as a reinforcing filler in the rubber composition of certain embodiments of the first-third and fourth-fifth embodiments include any of the commonly available, commercially-produced carbon blacks, including those having a surface area of at least about 20 m²/g (including at least 20 m²/g) and, more preferably, at least about 35 m²/g up to about 200 m²/g or higher (including 35 m²/g up to 200 m²/g). Surface area values used herein for carbon blacks are determined by ASTM D-1765 using the cetyltrimethyl-ammonium bromide (CTAB) technique. Among the useful carbon blacks are furnace black, channel blacks, and lamp blacks. More specifically, examples of useful carbon blacks include super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which can be utilized include acetylene blacks. In certain embodiments of the first-third and fourth-fifth embodiments, the rubber composition includes a mixture of two or more of the foregoing blacks. Preferably according to the first-third and fourth-fifth embodiments, if a carbon black filler is present it consists of only one type (or grade) of reinforcing carbon black. Typical suitable carbon blacks for use in certain embodiments of the first-third and fourth-fifth embodiments are N-110, N-220, N-339, N-330, N-351, N-550, and N-660, as designated by ASTM D-1765-82a. The carbon blacks utilized can be in pelletized form or an unpelletized flocculent mass. Preferably, for more uniform mixing, unpelletized carbon black is preferred.

### Other Reinforcing Fillers

In certain embodiments of the first-third and fourth-fifth embodiments, the tire tread rubber composition comprises a reinforcing filler other than carbon black or silica (*i.e.,* an additional reinforcing filler). While one or more than one additional reinforcing filler may be utilized, their total amount is preferably limited to no more than 10 phr (*e.g.,* 0-10 phr, 1-10 phr, 10, 9, 8, 7, 6, 5, 4, 3, 2, 1 or 0 phr), or no more than 5 phr (e.g., 0-5 phr, 1-5 phr, 5, 4, 3, 2, 1, or 0 phr). In certain preferred embodiments of the first-third and fourth-fifth embodiments, the tire tread rubber composition contains no additional reinforcing filler (*i.e.,* 0 phr); in other words, in such embodiments no reinforcing filler other than silica and optionally carbon black are present.

In those embodiments of the first-third and fourth-fifth embodiments wherein an additional reinforcing filler is utilized, the additional reinforcing filler or fillers may vary. Non-limiting examples of suitable additional reinforcing fillers for use in the tire tread rubber compositions of certain embodiments of the first-third and fourth-fifth embodiments include, but are not limited to, alumina, aluminum hydroxide, clay (reinforcing grades), magnesium hydroxide, boron nitride, aluminum nitride, titanium dioxide, reinforcing zinc oxide, and combinations thereof.

### Non-Reinforcing Fillers

In certain embodiments of the first-third and fourth-fifth embodiments, the tire tread rubber composition further comprises at least one non-reinforcing filler. In other preferred embodiments of the first-third and fourth-fifth embodiments, the tire tread rubber composition contains no non-reinforcing fillers (*i.e.,* 0 phr). In embodiments of the first-third and fourth-fifth embodiments wherein at least one non-reinforcing filler is utilized, the at least one non-reinforcing filler may be selected from clay (non-reinforcing grades), graphite, magnesium dioxide, aluminum oxide, starch, boron nitride (non-reinforcing grades), silicon nitride, aluminum nitride (non-reinforcing grades), calcium silicate, silicon carbide, ground rubber, and combinations thereof. The term "non-reinforcing filler" is used to refer to a particulate material that has a nitrogen absorption specific surface area (N₂SA) of less than about 20 m²/g (including less than 20 m²/g), and in certain embodiments less than about 10 m²/g (including less than 10 m²/g). The N₂SA surface area of a particulate material can be determined according to various standard methods including ASTM D6556. In certain embodiments, the term "non-reinforcing filler" is alternatively or additionally used to refer to a particulate material that has a particle size of greater than about 1000 nm (including greater than 1000 nm). In those embodiments of the first-third and fourth-fifth embodiments, wherein a non-reinforcing filler is present in the rubber composition, the total amount of non-reinforcing filler may vary but is preferably no more than 10 phr (*e.g.,* 10, 9, 8, 7, 6, 5, 4, 3, 2, or 1 phr), and in certain embodiments 1-10 phr, no more than 5 phr (*e.g.,* 5, 4, 3, 2, or 1 phr), 1-5 phr, or no more than 1 phr.

### Hydrocarbon Resins

As mentioned above, according to the first and third embodiments, the tire tread rubber composition comprises (includes) as (d) 5-15 phr (*e.g.,* 5, 6, 7, 8, 9, 10, 11, 12, 13, 14, or 15 phr), preferably 5-12 phr (*e.g.,* 5, 6, 7, 8, 9, 10, 11, or 12 phr), more preferably 7-10 phr (*e.g.,* 7, 8, 9, or 10 phr) of at least one hydrocarbon resin having a Tg of about 30 to about 50 °C or 30-50 °C (*e.g.,* 30, 31, 32, 33, 34, 35, 36, 37, 38, 39, 40, 42, 44, 45, 46, 48, or 50 °C). In preferred embodiments of the first and second embodiments and according to third embodiment, the at least one hydrocarbon resin (d) is an aromatic hydrocarbon resin. Hydrocarbon resin Tg can be determined by DSC, according to the procedure discussed above for elastomer Tg measurements. In certain preferred embodiments of the first-third embodiments, the at least one hydrocarbon resin of (d) has a Tg of about 35 to about 50 °C, 35-50 °C (*e.g.,* 35, 36, 38, 40, 42, 44, 45, 46, 48, or 50 °C), about 35 to about 45 °C, or 35-45 °C (*e.g.,* 35, 36, 37, 38, 39, 40, 41, 42, 43, 44, 45, or 45 °C) and may be present in one of the foregoing discussed amounts. As discussed in more detail below, according to the third embodiment and in certain embodiments of the first and second embodiments, the at least one hydrocarbon resin of (d) comprises an aromatic resin in an amount and having a Tg as discussed above; in certain such embodiments, the only hydrocarbon resin present in the tread rubber composition is an aromatic resin in an amount and having a Tg as discussed above.

As mentioned above, according to the fourth and fifth embodiments, the tire tread rubber composition comprises (includes) as (d) 5-20 phr (*e.g.,* 5, 6, 7, 8, 9, 10, 11, 12, 13, 14, 15, 16, 17, 18, 19, or 20 phr), preferably 5-15 phr (*e.g.,* 5, 6, 7, 8, 9, 10, 11, 12, 13, 14, or 15 phr), more preferably 5-12 phr (*e.g.,* 5, 6, 7, 8, 9, 10, 11, or 12 phr), even more preferably 7-10 phr (e.g., 7, 8, 9, or 10 phr) of at least one hydrocarbon resin having a Tg of about 20 to about 70 °C or 20-70 °C (*e.g.,* 20, 21, 22, 23, 24, 25, 26, 27, 28, 29, 30, 31, 32, 33, 34, 35, 36, 37, 38, 39, 40, 42, 44, 45, 46, 48, 50, 51, 52, 53, 54, 55, 56, 57, 58, 59, 60, 61, 62, 63, 64, 65, 66, 67, 68, 69, or 70 °C), preferably about 30 to about 50 °C or 30-50 °C (*e.g.,* 30, 31, 32, 33, 34, 35, 36, 37, 38, 39, 40, 42, 44, 45, 46, 48, or 50 °C). In preferred embodiments of the fourth and fifth embodiments, the at least one hydrocarbon resin (d) is an aromatic hydrocarbon resin. Hydrocarbon resin Tg can be determined by DSC, according to the procedure discussed above for elastomer Tg measurements. In certain preferred embodiments of the fourth-fifth embodiments, the at least one hydrocarbon resin of (d) has a Tg of about 35 to about 50 °C, 35-50 °C (*e.g.,* 35, 36, 38, 40, 42, 44, 45, 46, 48, or 50 °C), about 35 to about 45 °C, or 35-45 °C (*e.g.,* 35, 36, 37, 38, 39, 40, 41, 42, 43, 44, 45, or 45 °C) and may be present in one of the foregoing discussed amounts. In certain embodiments of the fourth and fifth embodiments, the at least one hydrocarbon resin of (d) comprises an aromatic resin in an amount and having a Tg as discussed above; in certain such embodiments, the only hydrocarbon resin present in the tread rubber composition is an aromatic resin in an amount and having a Tg as discussed above.

As discussed further, *infra,* according to the first-third and fourth-fifth embodiments and in addition to controlling the amount of hydrocarbon resin (d) used in the tire tread rubber compositions, it is also preferable to control the total (or combined) amount of plasticizers, *i.e*., the hydrocarbon resin (d) and the liquid plasticizer (e) to within the amounts discussed elsewhere herein.

According to the first-third and fourth-fifth embodiments, one or more than one hydrocarbon resin may be utilized in the tire tread rubber composition and the particular type or types of hydrocarbon resin may vary. In preferred embodiments of the first-third and fourth-fifth embodiments, only one hydrocarbon resin is utilized and it has a Tg as discussed above (*i.e*., about 30 to about 50 °C 30-50 °C or a range within the foregoing, or as otherwise discussed above); in such embodiments the only one hydrocarbon resin is an aromatic hydrocarbon resin. When more than one hydrocarbon resin is utilized, the above-discussed amounts should be understood to refer to the total amount of all hydrocarbon resins.

In certain embodiments of the first-third and fourth-fifth embodiments disclosed herein, the hydrocarbon resin of (d) comprises an aromatic resin optionally in combination with one or more additional resins selected from aliphatic, cycloaliphatic, and terpene resins. In those embodiments of the first-third embodiments and fourth-fifth wherein one or more additional resins are present, the total amount of such additional resin(s) is preferably no more than 5 phr (*e.g.,* 5, 4, 3, 2, 1, or 0 phr), less than 5 phr *(e.g.,* 4, 3, 2, 1, or 0 phr), less than 4 phr (*e.g.,* 3, 2, 1, or 0 phr), less than 3 phr (*e.g*., 2*,* 1 or 0 phr), less than 2 phr (*e.g.,* 1.5, 1, 0.5, or 0 phr), or less than 1 phr (*e.g.,* 0.5 or 0 phr), and in each instance no more than 10% by weight, preferably no more than 5% by weight of the overall amount of hydrocarbon resin of (d). In other preferred embodiments of the first-third and fourth-fifth embodiments, the hydrocarbon resin of (d) consists of (only) an aromatic hydrocarbon resin, with no other resins present. When an aromatic resin is used, one or more than one aromatic hydrocarbon resin may be utilized. In certain preferred embodiments of the first-third and fourth-fifth embodiments, the hydrocarbon resin of (d) includes less than 5 phr of terpene resin (*e.g.,* 4, 3, 2, 1 or 0 phr), and preferably excludes any terpene resin (*i.e*., 0 phr of terpene resin is present in the tire tread rubber composition). As used herein, the term aromatic resin or aromatic hydrocarbon resin should be understood to include both aromatic homopolymer resins and aromatic copolymer resins. An aromatic copolymer resins refers to a hydrocarbon resin which comprises a combination of one or more aromatic monomers in combination with one or more other (nonaromatic) monomers, with the largest amount of any type of monomer being aromatic. An aromatic copolymer resin would include a hydrocarbon resin having 45% by weight aromatic monomers, in addition to 25% by weight cycloaliphatic monomers and 30% by weight aliphatic monomers as well as a hydrocarbon resin having 55% by weight aromatic monomers, in addition to 30% by weight cycloaliphatic monomers and 15% by weight aliphatic monomers. In certain embodiments of the first-third embodiments, the hydrocarbon resin of (d) comprises one or more aromatic copolymer resins having a majority by weight of all monomers being aromatic (*e.g.,* 51%, 55%, 60%, 65%, etc.). Non-limiting examples of aromatic resins suitable for use as the hydrocarbon resin (d) in certain embodiments of the first-aromatic embodiments include coumarone-indene resins and alkyl-phenol resins as well as vinyl aromatic homopolymer or copolymer resins such as those including one or more of the following monomers: alpha-methylstyrene, styrene, ortho-methylstyrene, meta-methylstyrene, para-methylstyrene, vinyltoluene, para(tert-butyl)styrene, methoxystyrene, chlorostyrene, hydroxystyrene, vinylmesitylene, divinylbenzene, vinylnaphthalene or any vinyl aromatic monomer resulting from C9 fraction or C8-C10 fraction. Non-limiting examples of vinylaromatic copolymer resins include vinylaromatic/terpene copolymer resins (*e.g.,* limonene/styrene copolymer resins), vinylaromatic/C5 fraction resins (*e.g.,* C5 fraction/styrene copolymer resin), vinylaromatic/aliphatic copolymer resins (*e.g.,* CPD/styrene copolymer resin, and DCPD/styrene copolymer resin). Non-limiting examples of alkyl-phenol resins include alkylphenol-acetylene resins such as p-tert-butylphenol-acetylene resins, alkylphenol-formaldehyde resins (such as those having a low degree of polymerization). Exemplary such aromatic resins are commercially available from various companies including Chemfax, Dow Chemical Company, Eastman Chemical Company, Idemitsu, Neville Chemical Company, Nippon, Polysat Inc., Resinall Corp., and Zeon under various trade names.

In certain embodiments of the first-third and fourth-fifth embodiments, the hydrocarbon resin (d) comprises an aromatic resin based upon one or more of the above-mentioned vinyl aromatic monomers (*e.g.,* styrene, alpha-methylstyrene); in certain such embodiments at least 80% by weight, at least 85% by weight, at least 90% by weight, at least 95% by weight, at least 98% by weight, at least 99% by weight, or even 100% by weight of the monomers in the aromatic resin are aromatic monomers. In certain embodiments of the first-third and fourth-fifth embodiments, the hydrocarbon resin (d) consists of an aromatic resin based upon one or more of the above-mentioned vinyl aromatic monomers (*e.g.,* styrene, alpha-methylstyrene); in certain such embodiments at least 80% by weight, at least 85% by weight, at least 90% by weight, at least 95% by weight, at least 98% by weight, at least 99% by weight, or even 100% by weight of the monomers in the aromatic resin are aromatic monomers. In certain embodiments of the first-third and fourth-fifth embodiments, the aromatic resin of (d) may include a hydrogenated form of one of the aromatic resins discussed above (*i.e.,* a hydrogenated aromatic resin). In other embodiments of the first-third and fourth-fifth embodiments, the aromatic resin of (d) excludes any hydrogenated aromatic resin; in other words, in such embodiments, the aromatic resin is not hydrogenated.

As mentioned above, in certain embodiments of the first-third and fourth-fifth embodiments, the at least one hydrocarbon resin of (d) comprises (i) an aromatic resin in combination with (ii) an aliphatic resin. Non-limiting examples of aliphatic resins include C5 fraction homopolymer and copolymer resins. The amount of any aliphatic resin used in (d) is preferably limited. According to the first-third and fourth-fifth embodiments, the total amount of any aliphatic resin used in combination with the aromatic resin is preferably no more than 5 phr, less than 5 phr, less than 4 phr, less than 3 phr, less than 2 phr, or less than 1 phr (and in each instance no more than 20% by weight, preferably no more than 15% or no more than 10% by weight of the overall amount of hydrocarbon resin of (d)).

As mentioned above, in certain embodiments of the first-third and fourth-fifth embodiments, the at least one hydrocarbon resin of (d) comprises (i) an aromatic resin in combination with (ii) a cycloaliphatic resin. Non-limiting examples of cycloaliphatic resins include cyclopentadiene ("CPD") homopolymer or copolymer resins, dicyclopentadiene ("DCPD") homopolymer or copolymer resins, and combinations thereof. The amount of any cycloaliphatic resin used in (d) is preferably limited. According to the first-third and fourth-fifth embodiments, the total amount of any cycloaliphatic resin used in combination with the aromatic resin is preferably no more than 5 phr (*e.g.,* 5, 4, 3, 2, 1, or 0 phr), less than 5 phr (*e.g.,* 4, 3, 2, 1, or 0 phr), less than 4 phr (*e.g.,* 3, 2, 1, or 0 phr), less than 3 phr (*e.g*., 2, 1 or 0 phr), less than 2 phr (*e.g.,* 1.5, 1, 0.5, or 0 phr), or less than 1 phr (*e.g.,* 0.5 or 0 phr), and in each instance no more than 20% by weight, preferably no more than 15% or no more than 10% by weight of the overall amount of hydrocarbon resin of (d).

As mentioned above, in certain embodiments of the first-third and fourth-fifth embodiments the at least one hydrocarbon resin of (d) comprises (i) an aromatic resin in combination with (ii) a terpene resin. Non-limiting examples of terpene resins include alpha-pinene resins, beta-pinene resins, limonene resins (*e.g.,* L-limonene, D-limonene, dipentene which is a racemic mixture of L- and D-isomers), beta-phellandrene, delta-3-carene, delta-2-carene, and combinations thereof. The amount of any terpene resin used in (d) is preferably limited. According to the first-third and fourth-fifth embodiments, the total amount of any terpene resin used in combination with the aromatic resin is preferably no more than 5 phr (*e.g.,* 5, 4, 3, 2, 1, or 0 phr), less than 5 phr (*e.g.,* 4, 3, 2, 1, or 0 phr), less than 4 phr *(e.g.,* 3, 2, 1, or 0 phr), less than 3 phr (*e.g*., 2*,* 1 or 0 phr), less than 2 phr (*e.g.,* 1.5, 1, 0.5, or 0 phr), or less than 1 phr (*e.g.,* 0.5 or 0 phr), and in each instance no more than 20% by weight, preferably no more than 15% or no more than 10% by weight of the overall amount of hydrocarbon resin of (d). As mentioned above, in preferred embodiments of the first-third and fourth-fifth embodiments, the hydrocarbon resin (d) includes no terpene resin (*i.e.,* 0 phr).

In certain preferred embodiments of the first-third and fourth-fifth embodiments, the hydrocarbon resin (d) has a softening point of about 70 to about 100 °C or 70-100 °C (*e.g.,* 70, 75, 80, 85, 90, 95, or 100 °C), preferably about 75 to about 95 °C or 75-95 °C (*e.g.,* 75, 76, 77, 78, 79, 80, 81, 82, 83, 84, 85, 86, 87, 88, 89, 90, 91, 92, 93, 94, or 95 °C), more preferably about 80 to about 90 °C or 80-90 °C (*e.g.,* 80, 81, 82, 83, 84, 85, 86, 87, 88, 89, or 90 °C); in preferred embodiments of the foregoing, the hydrocarbon resin (d) is an aromatic hydrocarbon resin. Generally the softening point of a hydrocarbon resin will have a relationship to its Tg such that the Tg is lower than its softening point, and such that the lower the Tg the lower the softening point. As a non-limiting example, for two hydrocarbon resins having Tg's of 70 and 100 °C, the resin with the Tg of 70 °C will have a lower softening point than the resin with the Tg of 100 °C.

In certain embodiments of the first-third and fourth-fifth embodiments, the hydrocarbon resin (d) meets at least one of the following: (a) a Mw of 1000 to about 4000 grams/mole, 1000-4000 grams/mole (*e.g.,* 1000, 1100, 1200, 1300, 1400, 1500, 1600, 1700, 1800, 1900, 2000, 2100, 2200, 2300, 2400, 2500, 2600, 2700, 2800, 2900, 3000, 3100, 3200, 3300, 3400, 3500, 3600, 3700, 3800, 3900, or 4000 grams/mole), about 1000 to about 3000 grams/mole, 1000-3000 grams/mole (*e.g.,* 1000, 1100, 1200, 1300, 1400, 1500, 1600, 1700, 1800, 1900, 2000, 2100, 2200, 2300, 2400, 2500, 2600, 2700, 2800, 2900, or 3000 grams/mole), about 1000 to about 2500 grams/mole, 1000-2500 grams/mole (*e.g.,* 1000, 1100, 1200, 1300, 1400, 1500, 1600, 1700, 1800, 1900, 2000, 2100, 2200, 2300, 2400, or 2500 grams/mole), about 1000 to about 2000 grams/mole, 1000-2000 grams/mole (*e.g.,* 1000, 1100, 1200, 1300, 1400, 1500, 1600, 1700, 1800, 1900, or 2000 grams/mole), about 1100 to about 1800 grams/mole, or 1100-1800 grams/mole (*e.g.,* 1100, 1200, 1300, 1400, 1500, 1600, 1700, or 1800 grams/mole); (b) a Mn of about 700 to about 1500 grams/mole, 700-1500 grams/mole (*e.g.,* 700, 800, 900, 1000, 1100, 1200, 1300, 1400, or 1500 grams/mole), about 800 to about 1400 grams/mole, 800-1400 grams/mole (*e.g.,* 800, 900, 1000, 1100, 1200, 1300, or 1400 grams/mole), about 800 to about 1300 grams/mole, 800-1300 grams/mole (*e.g.,* 800, 900, 1000, 1100, 1200, or 1300 grams/mole), about 900 to about 1200 grams/mole, or 900-1200 grams/mole (*e.g.,* 900, 950, 1000, 1050, 1100, 1150, or 1200 grams/mole); or (c) a polydispersity (Mw/Mn) of about 1 to about 2, 1-2 (*e.g.,* 1, 1.1, 1.2, 1.3, 1.4, 1.5, 1.6, 1.7, 1.8, 1.9, or 2), about 1.1 to about 1.8, 1.1-1.8 (*e.g.,* 1.1, 1.2, 1.3, 1.4, 1.5, 1.6, 1.7, or 1.8), about 1.1 to about 1.7, 1.1-1.7 (*e.g.,* 1.1, 1.2, 1.3, 1.4, 1.5, 1.6, or 1.7), about 1.2 to about 1.5, or 1.2 to 1.5 (*e.g.,* 1.2, 1.3, 1.4, or 1.5). In certain preferred embodiments of the first-third and fourth-fifth embodiments, the hydrocarbon resin (d) has a Mw according to one of the ranges provided above, in combination with a Mn according to one of the ranges provided above, further in combination with a Mw/Mn according to one of the ranges provided above; in certain such embodiments, the hydrocarbon resin (d) is an aromatic resin.

In certain embodiments of the first-third and fourth-fifth embodiments, the hydrocarbon resin (d) comprises an aromatic resin (as discussed above) having an aromatic monomer content of at least about 40% by weight, at least 40% by weight (*e.g.,* 40, 45, 50, 51, 55, 60% by weight, or more), about 40% to about 65% by weight, 40-65% by weight (*e.g.,* 40, 42, 44, 45, 46, 48, 50, 52, 54, 55, 56, 58, 60, 62, 64, or 65% by weight), at least about 45% by weight, at least 45% by weight (*e.g.,* 45, 50, 51, 55, 60% by weight, or more), about 45% to about 65% by weight, 45-65% by weight (*e.g.,* 45, 47, 49, 50, 51, 53, 55, 57, 59, 60, 61, 63, or 65% by weight), at least 51% by weight (e*.g.,* 51, 55, 60, 65% by weight, or more), about 51% to about 65% (*e.g.,* 51, 52, 53, 54, 55, 56, 57, 58, 59, 60, 61, 62, 63, 64, or 65%), 51-65%, about 51% to about 60%, 51-60% (*e.g.,* 51%, 52%, 53%, 54%, 55%, 56%, 57%, 58%, 59%, or 60%), about 51% to about 55%, or 51-55% (e.g, 51, 52, 53, 54, or 55%). The amounts of aromatic monomer content are weight percentages based upon the total weight of the respective hydrocarbon resin.

### Liquid Plasticizers (including oils and non-oils)

As mentioned above, according to the first-third and fourth-fifth embodiments, the tire tread rubber composition comprises 10-29 phr of liquid plasticizer (e.g., 10, 11, 12, 13, 14, 15, 16, 17, 18, 19, 20, 21, 22, 23, 24, 25, 26, 27, 28, or 29 phr). In certain preferred embodiments of the first-third and fourth-fifth embodiments, the tire tread rubber composition comprises 15-25 phr of liquid plasticizer (*e.g.,* 15, 16, 17, 28, 19, 20, 21, 22, 23, 24, or 25 phr). The term liquid plasticizer is used to refer to plasticizer ingredients which are liquid at room temperature (*i.e.*, liquid at 25 °C and above) and to distinguish hydrocarbon resin plasticizers which will generally be solid at room temperature. Generally, liquid plasticizers will have a Tg below 0 °C, generally well below such as less than -30 °C, less than -40 °C, or less than -50 °C. In certain embodiments of the first-third and fourth-fifth embodiments, the liquid plasticizer has a Tg of less than 0 °C to -100 °C, a Tg of -30 °C to -100 °C, or a Tg of -50 to -100 °C. As discussed in more detail below, liquid plasticizers include both oils (*e.g.,* petroleum oils as well as plant oils) and other non-oil liquid plasticizers including, but not limited to, ether plasticizers, ester plasticizers, phosphate plasticizers, and sulfonate plasticizers. Moreover, the term liquid plasticizer is meant to encompass both free liquid plasticizer (which is usually added during the compounding process) and extender oil (which is used to extend a rubber). Thus, by stating that the tire tread rubber composition comprises 10-29 phr of liquid plasticizer it should be understood that the total amount of any free liquid plasticizer (both oil plasticizer and non-oil liquid plasticizer) and any extender oil is 10-29 phr. In certain embodiments of the first, second and fourth-fifth embodiments, the tire tread rubber composition contains only free liquid plasticizer in one of the foregoing amounts (*e.g.,* 10-29 phr, 15-25 phr, etc.). In other embodiments of the first-third and fourth-fifth embodiments, the tire tread rubber composition contains only extender oil in one of the foregoing amounts (*e.g.,* 10-29 phr, 15-25 phr, etc.). In yet other (preferred) embodiments of the first-third and fourth-fifth embodiments, the tire tread rubber composition includes both free liquid plasticizer and extender oil, and at least 25% (*e.g.,* 25%, 30%, 35%, 40%, 45%, 50%, 55%, 60% or more) by weight, preferably at least 35% by weight of the liquid plasticizer in the tire tread rubber composition is provided by oil from an oil-extended polymer, *e.g.,* an oil extended SBR for (ii). In certain embodiments of the first-third and fourth-fifth embodiments, 25-60% by weight, 25-50% by weight, 35-60%, or 35-50% by weight of the liquid plasticizer in the tire tread rubber composition is provided by oil from an oil-extended polymer, *e.g.,* an oil-extended SBR for (i). In those embodiments of the first-third and fourth-fifth embodiments wherein an oil-extended rubber is used, the amount of oil used to prepare the oil-extended rubber may vary. In those embodiments of the first and second embodiments wherein an oil-extended rubber is used (*e.g.,* an oil-extended SBR for (i)) and according to the third embodiment wherein the SBR of (i) is oil-extended, the amount of oil used to prepare the oil-extended rubber may vary; in certain such embodiments, the amount of extender oil present in the oil-extended rubber (polymer) or SBR is 10-30 parts oil per 100 parts of rubber (*e.g.,* 10, 12, 14, 15, 16, 18, 20, 22, 24, 25, 26, 28, or 30 parts of oil per 100 parts of rubber), preferably 15-25 parts oil per 100 parts of rubber. In those embodiments of the fourth and fifth embodiments wherein an oil-extended rubber is used (*e.g.,* an oil-extended SBR for (i)), the amount of oil used to prepare the oil-extended rubber may vary; in certain such embodiments, the amount of extender oil present in the oil-extended rubber (polymer) or SBR is 10-40 parts oil per 100 parts of rubber (*e.g.,* 10, 12, 14, 15, 16, 18, 20, 22, 24, 25, 26, 28, 30, 32, 34, 35, 36, 38, or 40 parts of oil per 100 parts of rubber), preferably 10-30 parts oil per 100 parts of rubber (*e.g.,* 10, 12, 14, 15, 16, 18, 20, 22, 24, 25, 26, 28, or 30 parts of oil per 100 parts of rubber), more preferably 15-25 parts oil per 100 parts of rubber. As a non-limiting example, extender oil could be used in an amount of 15 parts oil per 100 parts rubber in an SBR for (i) which SBR is used in an amount of 30 parts (the 30 parts being the amount of polymer of the oil-extended SBR, as discussed previously) in the overall tread rubber composition and, thus, the amount of oil contributed by the oil-extended SBR to the tire tread rubber composition would be 4.5 phr. Oil-extension of rubbers (especially styrene-butadiene rubbers) can be beneficial to ease of processing or mixing when the SBR has a relatively high Mw and/or a relatively high Mooney viscosity. In certain embodiments of the first-third and fourth-fifth embodiments disclosed herein, the styrene-butadiene rubber as used in (i) is an oil-extended styrene-butadiene rubber having a polymer Mooney viscosity MS₄ at 100 °C of about 65 to about 80 or 65-80 (e.g., 65, 66, 67, 68, 69, 70, 71, 72, 73, 74, 75, 76, 77, 78, 79, or 80), preferably about 70 to about 75 or 70-75 (*e.g.,* 70, 71, 72, 73, 74, or 75). By polymer Mooney viscosity is meant the Mooney viscosity of the rubber or polymer before oil-extension. When an oil-extended rubber is used in the elastomer component of the tire tread rubber composition disclosed herein, the amounts specified for (i) (and (ii)) should be understood to refer to the amounts of rubber only rather than the amounts of oil-extended rubber. As used herein, oil refers to both petroleum based oils (*e.g.,* aromatic, naphthenic, and low PCA oils) as well as plant oils (such as can be harvested from vegetables, nuts, and seeds). Plant oils will generally comprise triglycerides and the term should be understood to include synthetic triglycerides as well as those actually sourced from a plant. In preferred embodiments of the first-third and fourth-fifth embodiments, when the at least one liquid plasticizer of (e) includes plant oil, the amount of plant oil is about 30 to about 70% by weight, 30 to 70% by weight (*e.g.,* 30, 40, 50, 60, or 70% by weight), preferably about 40 to about 60% by weight, or 40 to 60% by weight (*e.g.,* 40, 45, 50, 55, or 60% by weight).

According to the first-third and fourth-fifth embodiments, various types of processing and extender oils may be utilized as the at least one liquid plasticizer, including, but not limited to aromatic, naphthenic, and low PCA oils (petroleum-sourced or plant-sourced). In certain preferred embodiments of the first-third and fourth-fifth embodiments, the at least one liquid plasticizer (e) is limited to one or more oils. In other words, in such embodiments, the at least one liquid plasticizer does not include or is free of (*i.e.,* contains 0 phr) of non-oil liquid plasticizer (as discussed in detail below). Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Exemplary petroleum-sourced low PCA oils include mild extraction solvates (MES), treated distillate aromatic extracts (TDAE), TRAE, and heavy naphthenics. Exemplary MES oils are available commercially as CATENEX SNR from SHELL, PROREX 15, and FLEXON 683 from EXXONMOBIL, VIVATEC 200 from BP, PLAXOLENE MS from TOTAL FINA ELF, TUDALEN 4160/4225 from DAHLEKE, MES-H from REPSOL, MES from Z8, and OLIO MES S201 from AGIP. Exemplary TDAE oils are available as TYREX 20 from EXXONMOBIL, VIVATEC 500, VIVATEC 180, and ENERTHENE 1849 from BP, and EXTENSOIL 1996 from REPSOL. Exemplary heavy naphthenic oils are available as SHELLFLEX 794, ERGON BLACK OIL, ERGON H2000, CROSS C2000, CROSS C2400, and SAN JOAQUIN 2000L. Exemplary low PCA oils also include various plant-sourced oils such as can be harvested from vegetables, nuts, and seeds. Non-limiting examples include, but are not limited to, soy or soybean oil, sunflower oil (including high oleic sunflower oil), safflower oil, corn oil, linseed oil, cotton seed oil, rapeseed oil, cashew oil, sesame oil, camellia oil, jojoba oil, macadamia nut oil, coconut oil, and palm oil. The foregoing processing oils can be used as an extender oil, *i.e.,* to prepare an oil-extended polymer or copolymer, or as a processing or free oil. In certain preferred embodiments of the first-third and fourth-fifth embodiments disclosed herein, the liquid plasticizer includes at least one plant oil (plant-sourced oil), preferably in an amount of 30-70% by weight (*e.g.,* 30%, 35%, 40%, 45%, 50%, 55%, 60%, 65%, or 70% by weight), preferably 40-60% by weight (*e.g.,* 40%, 45%, 50%, 55%, or 60% by weight), based on total parts of liquid plasticizer present in the tire tread rubber composition. In certain preferred embodiments of the first-third and fourth-fifth embodiments, any oil present in the oil component (e) (or liquid plasticizer present in the liquid plasticizer component (e)) contains 50% by weight or less oleic acid.

As mentioned above, according to the first-third and fourth-fifth embodiments, the liquid plasticizer (e) may in certain embodiments include a non-oil plasticizer, non-limiting examples of which include ether plasticizers, ester plasticizers, phosphate plasticizers, and sulfonate plasticizers. In those embodiments where a non-oil plasticizer is present, preferably only a portion of the liquid plasticizer (*e.g.,* less than 50%, no more than 40%, no more than 30%, no more than 20%, no more than 10%, or even no more than 5% is provided by the non-oil plasticizer). Exemplary ether plasticizers include polyethylene glycols and polypropylene glycols. Exemplary ester plasticizers include triesters and diesters in particular (which may be selected from the group consisting of di- and triesters of carboxylic acid, of phosphoric acid, or of sulphonic acid, and mixtures of these triesters). More specifically, exemplary carboxylic acid ester plasticizers include compounds selected from the group consisting of trimellitates, pyromellitates, phthalates, 1,2-cyclohexanedicarboxylates, adipates, azelates, sebacates, glyercol triesters, and mixtures of the foregoing. More specifically as to glycerol triesters, these may include more than 50% by weight, more preferably more than 80% by weight of an unsaturated C18 fatty acid (*e.g.,* oleic acid, linoleic acid, linolenic acid, and mixtures thereof). Other exemplary carboxylic acid ester plasticizers include stearic acid esters, ricinoleic acid esters, phthalic acid esters (*e.g.,* di-2-ethylhexyl phthalate and diosodecyl phthalate), isophthalic acid esters, tetrahydrophthalic acid esters, adipic acid esters (*e.g.,* di(2-ethylhexyl)adipate and diisooctyl adipate), malic acid esters, sebic acid esters (*e.g.,* di(2-ethylhexyl)sebacate and diisooctyl sebacate), and fumaric acid esters. Exemplary phosphate plasticizers include those with a tri-hydrocarbyl phosphate and di-hydrocarbyl phosphate structures (where each hydrocarbyl is independently selected from alkyl of C1 to C12, preferably C1 to C8, and aromatic of C6 to C12 both substituted and un-substituted, preferably when aromatic C6 either substituted or un-substituted). More specifically, exemplary phosphate plasticizers include trimethyl phosphate, triethyl phosphate, tributyl phosphate, trioctyl phosphate, dioctyl phosphate, 2-ethylhexyl diphenyl phosphate, tributoxyethyl phosphate, triphenyl phosphate, cresyl diphenyl phosphate, isodecyl diphenyl phosphate, tricresyl phosphate, tritolyl phosphate, trixylenyl phosphate, tris(chloroethyl) phosphate, and diphenyl mono-o-xenyl phosphate. Exemplary sulfonate plasticizers include sulfonic acid esters such as sulfone butylamide, toluenesulfonamide, N-ethyl-toluenesulfonamide, and N-cyclohexyl-p-toluencesulfonamide. Of the foregoing non-oil liquid plasticizers, phosphate plasticizers, in particular phosphoric acid derivatives (which can be understood as being phosphate esters) are preferred.

According to first-third and fourth-fifth embodiments, the Tg of the oil or oils used may vary. In certain embodiments of the first-third and fourth-fifth embodiments, any oil utilized has a Tg of about -40 to about -100 °C, -40 to -100 °C (*e.g.,* -40, -45, -50, -55, -60, -65, -70, -75, -80, -85, -90, -95, or -100 °C), about -40 to about -90 °C, -40 to -90 °C (*e.g.,* -40, -45, -50, -55, -60, -65, -70, -75, -80, -85, or -90 °C), about -45 to about -85 °C, -45 to -85 °C (*e.g.,* -45, -50, - 55, -60, -65, -70, -75, -80, or -85 °C), about -50 to about -80 °C, or -50 to -80 °C (*e.g.,* -50, -55, -60, -65, -70, -75, or -80 °C).

In certain embodiments of the first-third and fourth-fifth embodiments, the tire tread rubber composition contains less than 5 phr (*e.g.,* 4.5, 4, 3, 2, 1, or 0 phr) of MES or TDAE oil, or even no MES or TDAE oil (*i.e.,* 0 phr). In preferred embodiments of the first-third and fourth-fifth embodiments, the tire tread rubber composition includes plant oil as at least part of the at least one liquid plasticizer (e). As discussed above, in certain embodiments of the first-third and fourth-fifth embodiments wherein plant oil is utilized in the oil component (e), the amount of plant oil is 30-70% by weight, preferably 40-60% by weight, based upon the total weight (phr) of the at least one liquid plasticizer (e) present in the tire tread rubber composition. In certain embodiments of the first-third and fourth-fifth embodiments, the tire tread rubber composition contains no petroleum oil (*i.e.,* 0 phr) and instead any oil utilized is a plant oil. In certain embodiments of the first-third and fourth-fifth embodiments, the tire tread rubber composition contains soybean oil in one of the above-mentioned amounts. In certain embodiments of the first-third and fourth-fifth embodiments, the tire tread rubber composition contains no sunflower oil (*i.e.,* 0 phr).

In certain embodiments of the first-third and fourth-fifth embodiments, the tire tread rubber composition includes one or more ester plasticizers. Suitable ester plasticizers are known to those of skill in the art and include, but are not limited to, phosphate esters, phthalate esters, adipate esters and oleate esters *(i.e.,* derived from oleic acid). Taking into account that an ester is a chemical compound derived from an acid wherein at least one - OH is replaced with an -O-alkyl group, various alkyl groups may be used in suitable ester plasticizers for use in the tire tread rubber compositions, including generally linear or branched alkyl of C1 to C20 (*e.g.,* C1, C2, C3, C4, C5, C6, C7, C8, C9, C10, C11, C12, C13, C14, C15, C16, C17, C18, C19, C20), or C6 to C12. Certain of the foregoing esters are based upon acids which have more than one -OH group and, thus, can accommodate one or more than one O-alkyl group (*e.g.,* trialkyl phosphates, dialkyl phthalates, dialkyl adipates). Non-limiting examples of suitable ester plasticizers include trioctyl phosphate, dioctyl phthalate, dioctyl adipate, nonyl oleate, octyl oleate, and combinations thereof. The use of an ester plasticizer such as one or more of the foregoing may be beneficial to the snow or ice performance of a tire made from a tread rubber composition containing such ester plasticizer at least in part due to the relatively low Tg of ester plasticizers. In certain embodiments of the first-third and fourth-fifth embodiments, the tire tread rubber composition includes one or more ester plasticizers having a Tg of -40 °C to -70 °C (*e.g.,* -40, -45, -50, -55, -60, -65, or -70 °C), or -50 °C to -65 °C (*e.g.,* -50, -51, -52, -53, -54, -55, - 56, -57, -58, -59, -60, -61, -62, -63, -64, or -65 °C ). In those embodiments of the first-third and fourth-fifth embodiments wherein one or more ester plasticizers is utilized the amount utilized may vary. In certain embodiments of the first-third and fourth-fifth embodiments, one or more ester plasticizers are utilized in a total amount of 1-12 phr (e.g., 1, 2, 3, 4, 5, 6, 7, 8, 9, 10, 11, or 12 phr), 1-10 phr (*e.g.,* 1, 2, 3, 4, 5, 6, 7, 8, 9, or 10 phr), 2-6 phr (*e.g.,* 2, 3, 4, 5, or 6 phr) or 2-5 phr (*e.g.,* 2, 3, 4, or 5 phr). In certain embodiments of the first-third and fourth-fifth embodiments, one or more ester plasticizers is used in combination with oil in one of the foregoing amounts.

### Hydrocarbon Resin + Liquid Plasticizer

As mentioned above, according to the first-third and fourth-fifth embodiments disclosed herein, the total amount of at least one hydrocarbon resin (d) and at least one liquid plasticizer (e) is no more than 40 phr, preferably 15-40 phr (*e.g.,* 15, 16, 17, 18, 19, 20, 21, 22, 23, 24, 25, 26, 27, 28, 29, 30, 31, 32, 33, 34, 35, 36, 37, 38, 39, or 40 phr), more preferably 20-35 phr (*e.g.,* 20, 21, 22, 23, 24, 25, 26, 27, 28, 29, 30, 31, 32, 33, 34, 35 phr), even more preferably 25-35 phr (*e.g.,* 25, 26, 27, 28, 29, 30, 31, 32, 33, 34, 35 phr).

In certain preferred embodiments of the first-third embodiments, the amount of hydrocarbon resin (d) is approximately equal to the amount of liquid plasticizer (e). In certain such embodiments, the hydrocarbon resin (d) and liquid plasticizer (e) are present in a weight ratio of 1:1.8 to 1:2.5 (*e.g.,* 1:1.8, 1:1.9, 1:2, 1:2.1, 1:2.2, 1:2.3, 1:2.4, or 1:2.5), preferably 1:2 to 1:2.3 (*e.g.,* 1:1.8, 1:1.9, 1:2, 1:2.1, 1:2.2, or 1:2.3).

In certain preferred embodiments of the fourth and fifth embodiments, the amount of liquid plasticizer (e) is greater than the amount of hydrocarbon resin (d). In certain such embodiments, the liquid plasticizer (e) and hydrocarbon resin (d) are present in a weight ratio of at least 1.5:1, preferably 1.5:1 to 3:1 (*e.g.,* 1.5:1, 1.6:1, 1.7:1, 1.8:1, 1.9:1, 2:1, 2.1:1, 2.2:1, 2.3:1, 2.4:1, 2.5:1, 2.6:1, 2.7:1, 2.8:1, 2.9:1, or 3:1), more preferably 1.8:1 to 2.5:1 (*e.g.,* 1.8:1, 1.9:1, 2:1, 2.1:1, 2.2:1, 2.3:1, 2.4:1, or 2.5:1).

### Cure Package

As discussed above, according to the first-third and fourth-fifth embodiments disclosed herein, the tire tread rubber composition includes (comprises) a cure package. Although the contents of the cure package may vary according to the first-third and fourth-fifth embodiments, generally, the cure package includes at least one of: a vulcanizing agent; a vulcanizing accelerator; a vulcanizing activator (*e.g.,* zinc oxide, stearic acid, and the like); a vulcanizing inhibitor; and an anti-scorching agent. In certain embodiments of the first-third and fourth-fifth embodiments, the cure package includes at least one vulcanizing agent, at least one vulcanizing accelerator, at least one vulcanizing activator and optionally a vulcanizing inhibitor and/or an anti-scorching agent. Vulcanizing accelerators and vulcanizing activators act as catalysts for the vulcanization agent. Various vulcanizing inhibitors and anti-scorching agents are known in the art and can be selected by one skilled in the art based on the vulcanizate properties desired.

Examples of suitable types of vulcanizing agents for use in certain embodiments of the first-third and fourth-fifth embodiments, include but are not limited to, sulfur or peroxide-based curing components. Thus, in certain such embodiments, the curative component includes a sulfur-based curative or a peroxide-based curative. In preferred embodiments of the first-third and fourth-fifth embodiments, the vulcanizing agent is a sulfur-based curative; in certain such embodiments the vulcanizing agent consists of (only) a sulfur-based curative. Examples of specific suitable sulfur vulcanizing agents include "rubbermaker's" soluble sulfur; sulfur donating curing agents, such as an amine disulfide, polymeric polysulfide, or sulfur olefin adducts; and insoluble polymeric sulfur. Preferably, the sulfur vulcanizing agent is soluble sulfur or a mixture of soluble and insoluble polymeric sulfur. For a general disclosure of suitable vulcanizing agents and other components used in curing, *e.g.,* vulcanizing inhibitor and anti-scorching agents, one can refer to Kirk-Othmer, Encyclopedia of Chemical Technology, 3rd ed., Wiley Interscience, N.Y. 1982, Vol. 20, pp. 365 to 468, particularly Vulcanization Agents and Auxiliary Materials, pp. 390 to 402, or Vulcanization by A. Y. Coran, Encyclopedia of Polymer Science and Engineering, Second Edition (1989 John Wiley & Sons, Inc.), both of which are incorporated herein by reference. Vulcanizing agents can be used alone or in combination. Generally, the vulcanizing agents may be used in certain embodiments of the first-third and fourth-fifth embodiments in an amount ranging from 0.1 to 10 phr (*e.g.,* 0.1, 0.5, 1, 2, 3, 4, 5, 6, 7, 8, 9, or 10 phr), including from 1 to 7.5 phr (*e.g.,* 1, 2, 3, 4, 5, 6, 7, or 7.5 phr), including from 1 to 5 phr (*e.g.,* 1, 1.5, 2, 2.5, 3, 3.5, 4, 4.5, or 5 phr), and preferably from 1 to 3.5 phr (*e.g.,* 1, 1.5, 2, 2.5, 3, or 3.5 phr).

Vulcanizing accelerators are used to control the time and/or temperature required for vulcanization and to improve properties of the vulcanizate. Examples of suitable vulcanizing accelerators for use in certain embodiments of the first-third and fourth-fifth embodiments disclosed herein include, but are not limited to, thiazole vulcanization accelerators, such as 2-mercaptobenzothiazole, 2,2'-dithiobis(benzothiazole) (MBTS), N-cyclohexyl-2-benzothiazole-sulfenamide (CBS), N-tert-butyl-2-benzothiazole-sulfenamide (TBBS), and the like; guanidine vulcanization accelerators, such as diphenyl guanidine (DPG) and the like; thiuram vulcanizing accelerators; carbamate vulcanizing accelerators; and the like. Generally, the amount of the vulcanization accelerator used ranges from 0.1 to 10 phr (e.g., 0.1, 0.5, 1, 2, 3, 4, 5, 6, 7, 8, 9, or 10 phr), preferably 0.5 to 5 phr (*e.g.,* 0.5, 1, 1.5, 2, 2.5, 3, 3.5, 4, 4.5, or 5 phr). Preferably, any vulcanization accelerator used in the tire tread rubber compositions of the first-third and fourth-fifth embodiments excludes any thiurams such as thiuram monosulfides and thiuram polysulfides (examples of which include TMTM (tetramethyl thiuram monosulfide), TMTD (tetramethyl thiuram disulfide), DPTT (dipentamethylene thiuram tetrasulfide), TETD (tetraethyl thiuram disulfide), TiBTD (tetraisobutyl thiuram disulfide), and TBzTD (tetrabenzyl thiuram disulfide)); in other words, the tire tread rubber compositions of the first-third embodiments and fourth-fifth preferably contain no thiuram accelerators (*i.e*., 0 phr).

Vulcanizing activators are additives used to support vulcanization. Generally vulcanizing activators include both an inorganic and organic component. Zinc oxide is the most widely used inorganic vulcanization activator. Various organic vulcanization activators are commonly used including stearic acid, palmitic acid, lauric acid, and zinc salts of each of the foregoing. Generally, in certain embodiments of the first-third and fourth-fifth embodiments the amount of vulcanization activator used ranges from 0.1 to 6 phr (e.g., 0.1, 0.5, 1, 1.5, 2, 2.5, 3, 3.5, 4, 4.5, 5, 5.5, or 6 phr), preferably 0.5 to 4 phr (e.g., 0.5, 1, 1.5, 2, 2.5, 3 3.5, or 4 phr). In certain embodiments of the first-third and fourth-fifth embodiments, one or more vulcanization activators are used which includes one or more thiourea compounds (used in one of the foregoing amounts), and optionally in combination with one or more of the foregoing vulcanization activators. Generally, a thiourea compound can be understood as a compound having the structure (R¹)(R²)NS(=C)N(R³)(R⁴) wherein each of R¹, R², R³, and R⁴ are independently selected from H, alkyl, aryl, and N-containing substituents (*e.g.,* guanyl). Optionally, two of the foregoing structures can be bonded together through N (removing one of the R groups) in a dithiobiurea compound. In certain embodiments, one of R¹ or R ² and one of R³ or R⁴ can be bonded together with one or more methylene groups (-CH₂-) therebetween. In certain embodiments of the first-third and fourth-fifth embodiments, the thiourea has one or two of R¹, R², R³ and R⁴ selected from one of the foregoing groups with the remaining R groups being hydrogen. Exemplary alkyl include C1-C6 linear, branched or cyclic groups such as methyl, ethyl, propyl, iso-propyl, butyl, iso-butyl, pentyl, hexyl, and cyclohexyl. Exemplary aryl include C6-C12 aromatic groups such as phenyl, tolyl, and naphthyl. Exemplary thiourea compounds include, but are not limited to, dihydrocarbylthioureas such as dialkylthioureas and diarylthioureas. Non-limiting examples of particular thiourea compounds include one or more of thiourea, N,N'-diphenylthiourea, trimethylthiourea, N,N'-diethylthiourea (DEU), N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, and o-tolylthiourea. In certain embodiments of the first-third and fourth-fifth embodiments, the activator includes at least one thiourea compound selected from thiourea, N,N'-diethylthiourea, trimethylthiourea, N,N'-diphenylthiourea, and N-N'-dimethylthiourea.

Vulcanization inhibitors are used to control the vulcanization process and generally retard or inhibit vulcanization until the desired time and/or temperature is reached. Common vulcanization inhibitors include, but are not limited to, PVI (cyclohexylthiophthalmide) from Santogard. Generally, in certain embodiments of the first-third and fourth-fifth embodiments the amount of vulcanization inhibitor is 0.1 to 3 phr (e.g., 0.1, 0.5, 1, 1.5, 2, 2.5, or 3 phr), preferably 0.5 to 2 phr (e.g., 0.5, 1, 1.5, or 2 phr).

### Preparing The Rubber Compositions

The particular steps involved in preparing the tire tread rubber compositions of the first-third and fourth-fifth embodiments disclosed herein are generally those of conventionally practiced methods comprising mixing the ingredients in at least one non-productive master-batch stage and a final productive mixing stage. In certain embodiments of the first-third and fourth-fifth embodiments, the tire tread rubber composition is prepared by combining the ingredients for the rubber composition (as disclosed above) by methods known in the art, such as, for example, by kneading the ingredients together in a Banbury mixer or on a milled roll. Such methods generally include at least one non-productive master-batch mixing stage and a final productive mixing stage. The term non-productive master-batch stage is known to those of skill in the art and generally understood to be a mixing stage (or stages) where no vulcanizing agents or vulcanization accelerators are added. The term final productive mixing stage is also known to those of skill in the art and generally understood to be the mixing stage where the vulcanizing agents and vulcanization accelerators are added into the rubber composition. In certain embodiments of the first-third and fourth-fifth embodiments, the tire tread rubber composition is prepared by a process comprising more than one non-productive master-batch mixing stage.

In certain embodiments of the first-third and fourth-fifth embodiments, the tire tread rubber composition is prepared by a process wherein the master-batch mixing stage includes at least one of tandem mixing or intermeshing mixing. Tandem mixing can be understood as including the use of a mixer with two mixing chambers with each chamber having a set of mixing rotors; generally, the two mixing chambers are stacked together with the upper mixer being the primary mixer and the lower mixer accepting a batch from the upper or primary mixer. In certain embodiments of the first-third and fourth-fifth embodiments, the primary mixer utilizes intermeshing rotors and in other embodiments the primary mixer utilizes tangential rotors. Preferably, the lower mixer utilizes intermeshing rotors. Intermeshing mixing can be understood as including the use of a mixer with intermeshing rotors. Intermeshing rotors refers to a set of rotors where the major diameter of one rotor in a set interacts with the minor diameter of the opposing rotor in the set such that the rotors intermesh with each other. Intermeshing rotors must be driven at an even speed because of the interaction between the rotors. In contrast to intermeshing rotors, tangential rotors refers to a set of rotors where each rotor turns independently of the other in a cavity that may be referred to as a side. Generally, a mixer with tangential rotors will include a ram whereas a ram is not necessary in a mixer with intermeshing rotors.

Generally, the rubbers (or polymers) and at least one reinforcing filler (as well as any silane coupling agent and liquid plasticizer) will be added in a non-productive or master-batch mixing stage or stages. Generally, at least the vulcanizing agent component and the vulcanizing accelerator component of a cure package will be added in a final or productive mixing stage.

In certain embodiments of the first-third and fourth-fifth embodiments, the tire tread rubber composition is prepared using a process wherein at least one non-productive master batch mixing stage is conducted at a temperature of about 130 °C to about 200 °C. In certain embodiments of the first-third and fourth-fifth embodiments, the tire tread rubber composition is prepared using a final productive mixing stage conducted at a temperature below the vulcanization temperature in order to avoid unwanted pre-cure of the rubber composition. Therefore, the temperature of the productive or final mixing stage generally should not exceed about 120 °C and is typically about 40 °C to about 120 °C, or about 60 °C to about 110 °C and, especially, about 75 °C to about 100 °C. In certain embodiments of the first-third and fourth-fifth embodiments, the tire tread rubber composition is prepared according to a process that includes at least one non-productive mixing stage and at least one productive mixing stage. The use of silica fillers may optionally necessitate a separate re-mill stage for separate addition of a portion or all of such filler. This stage often is performed at temperatures similar to, although often slightly lower than, those employed in the masterbatch stage, *i.e.,* ramping from about 90°C to a drop temperature of about 150°C.

### Tire Tread Properties

The use of the tire tread rubber composition of the first-third embodiments disclosed herein, preferably result in a tire having improved or desirable tread properties including, but not limited to improved wear, as discussed in detail below. According to the first-third embodiments disclosed herein, additional improved or desirable properties may include maintained rolling resistance, preferably improved rolling resistance, and maintained cornering, preferably improved cornering. Additional desirable properties may include snow or ice traction, wet traction, dry handling, elongation at break (Eb), tensile at break (Tb) and TbxEb. By referring to maintained rolling resistance in the tire tread rubber composition of the first-third embodiments is meant that the rolling resistance is no more than 10% higher (*e.g.,* 10%, 9%, 8%, 7%, 6%, 5%, 4%, 3%, 2%, 1%, or even 0% higher) than the rolling resistance of a control tire tread rubber composition wherein the parts of linear polybutadiene rubber are replaced with an equivalent amount of branched polybutadiene rubber, preferably no more than 5% higher (*e.g.,* 5%, 4%, 3%, 2%, 1%, or even 0% higher) than the rolling resistance of a control tire tread rubber composition wherein the parts of linear polybutadiene rubber are replaced with an equivalent amount of branched polybutadiene rubber. By referring to improved rolling resistance in the tire tread rubber composition of the first-third embodiments is meant that the rolling resistance is at least 2% lower (*e.g.,* 1%, 2%, 3%, 4%, 5%, 6%, 7%, 8%, 9%, 10%, etc.) than the rolling resistance of a control tire tread rubber composition wherein the parts of linear polybutadiene rubber are replaced with an equivalent amount of branched polybutadiene rubber, preferably at least 5% lower (*e.g.,* 5%, 6%, 7%, 8%, 9%, 10%, etc.) or 5-10% lower than the rolling resistance of a control tire tread rubber composition wherein the parts of linear polybutadiene rubber are replaced with an equivalent amount of branched polybutadiene rubber. As discussed above, the branched polybutadiene rubber used in the control composition for the first-third embodiments has a cis bond content of at least 95% and a Tg of less than -101 °C, preferably -101 to -110 °C, less than - 105 °C, or -105 to -109 °C, and a T80 value of at least 5, preferably at least 6, as measured using a viscometer and a gel content of at least 5.5%, preferably at least 6%, more preferably at least 5.5%, as measured using a toluene immersion test, wherein the Mooney viscosity of the linear polybutadiene rubber and the branched polybutadiene rubber differ by no more than 5%, preferably no more than 3%, more preferably no more than 2.5%. While the foregoing properties may be measured by various methods, the values referred to herein for rolling resistance, snow or ice traction, wet traction, and dry handling refer to tan δ values measured at the following temperatures and according to the following procedures. Tan δ values can be measured with a dynamic mechanical thermal spectrometer (Eplexor^{®} 500N from Gabo Qualimeter Testanlagen GmbH of Ahiden, Germany) generally following the guidelines of ASTM D5992-96 (2011) and under the following conditions: measurement mode: tensile test mode; measuring frequency: 52 Hz; applying 0.2% strain from -50 to -5 °C and 1% strain from -5 to 65 °C; collecting data approximately every 1 °C in order to provide measurements at temperatures of -30 °C, 0 °C, 30°C, and 60 °C; sample shape: 4.75 mm wide x 29 mm long x 2.0 mm thick. Measurement is made upon a cured sample of rubber (cured for 15 minutes at 170°C). Samples are preferably taken from a slab of rubber sheet (rather than from a tire tread). A rubber composition's tan δ at -30 °C is indicative of its snow or ice traction (also referred to herein as winter performance) when incorporated into a tire tread, tan δ at 0 °C is indicative of its wet traction when incorporated into a tire tread, tan δ at 30 °C is indicative of its dry handling when incorporated into a tire tread and its tan δ at 60 °C is indicative of its rolling resistance when incorporated into a tire tread (with lower values considered to be more desirable, *i.e.,* having better rolling resistance than a higher value).

Measurements of E' (dynamic storage modulus) at different temperatures can provide an indication of various properties of a rubber composition when it is utilized as a tire tread (e.g., E' at 30 °C correlates to stiffness or cornering with a relatively higher E' indicating improved stiffness or cornering). When the rubber composition is incorporated into a tire tread, steering stability including cornering on a dry road surface is generally impacted by E' at higher temperatures (*e.g.,* 30 °C) with higher values preferred. The stiffness or cornering properties referred to herein can be quantified by measuring the E' at 30 °C of a sample rubber composition after curing at 170 °C for 15 minutes. E' measurements can be performed using Gabo equipment according to the following methods. Gabo measurements may be made using a dynamic mechanical thermal spectrometer (Eplexor^{®} 500N from Gabo Qualimeter Testanlagen GmbH of Ahiden, Germany) under the following conditions: measurement mode: tensile test mode, measuring frequency: 52 Hz, applying 0.2% strain from 50 to -5 °C and 1% strain from -5 to 65 °C, measuring temperatures (including *e.g.,* 30 °C, etc.), sample shape: 4.75 mm wide x 29 mm long x 2.0 mm thick. By referring above to maintained cornering in the tire tread rubber composition of the first-third embodiments is meant that the cornering or E' at 30 °C is at least 90-100% (*e.g.,* 90%, 91%, 92%, 93%, 94%, 95%, 96%, 97%, 98%, 99%, or 100%) of the cornering or E' at 30 °C of a control tire tread rubber composition, preferably 95-100% (*e.g.,* 95%, 96%, 97%, 98%, 99%, or 100%) of the cornering or E' at 30 °C of a control tire tread rubber composition. By referring to improved cornering in the tire tread rubber composition of the first-third embodiments is meant that the cornering or E' at 30 °C is greater than 100% (*e.g.,* 101%, 102%, 103%, 104%, 105%, etc.) of the cornering or E' at 30 °C of a control tire tread rubber composition wherein the parts of linear polybutadiene rubber are replaced with an equivalent amount of branched polybutadiene rubber, preferably 100-105% (*e.g.,* 101%, 102%, 103%, 104%, 105%) of the cornering or E' at 30 °C of a control tire tread rubber composition wherein the parts of linear polybutadiene rubber are replaced with an equivalent amount of branched polybutadiene rubber. As discussed above, the branched polybutadiene rubber used in the control composition for the first-third embodiments has a cis bond content of at least 95% and a Tg of less than -101 °C, preferably - 101 to -110 °C, less than -105 °C, or -105 to -109 °C, and a T80 value of at least 5, preferably at least 6, as measured using a viscometer and a gel content of at least 5.5%, preferably at least 6%, more preferably at least 6.5%, as measured using a toluene immersion test. In preferred embodiments, the Mooney viscosity of the linear polybutadiene rubber and the branched polybutadiene rubber differ by no more than 5%, preferably no more than 3%, more preferably no more than 2.5%.

The use of the tire tread rubber composition of the fourth-fifth embodiments disclosed herein, preferably result in a tire having improved or desirable tread properties including, but not limited to improved wear, as discussed in detail below. According to the fourth-fifth embodiments disclosed herein, additional improved or desirable properties may include maintained rolling resistance, preferably improved rolling resistance, and maintained cornering, preferably improved cornering. Additional desirable properties may include snow or ice traction, wet traction, dry handling, elongation at break (Eb), tensile at break (Tb) and TbxEb. By referring to maintained rolling resistance in the tire tread rubber composition of the fourth-fifth embodiments is meant that the rolling resistance is no more than 10% higher *(e.g.,* 10%, 9%, 8%, 7%, 6%, 5%, 4%, 3%, 2%, 1%, or even 0% higher) than the rolling resistance of a control tire tread rubber composition wherein the parts of non-functionalized linear polybutadiene rubber are replaced with an equivalent amount of branched polybutadiene rubber, preferably no more than 5% higher (*e.g.,* 5%, 4%, 3%, 2%, 1%, or even 0% higher) than the rolling resistance of a control tire tread rubber composition wherein the parts of non-functionalized linear polybutadiene rubber are replaced with an equivalent amount of branched polybutadiene rubber. By referring to improved rolling resistance in the tire tread rubber composition of the fourth-fifth embodiments is meant that the rolling resistance is at least 2% lower (*e.g.,* 1%, 2%, 3%, 4%, 5%, 6%, 7%, 8%, 9%, 10%, etc.) than the rolling resistance of a control tire tread rubber composition wherein the parts of non-functionalized linear polybutadiene rubber are replaced with an equivalent amount of branched polybutadiene rubber, preferably at least 5% lower (*e.g.,* 5%, 6%, 7%, 8%, 9%, 10%, etc.) or 5-10% lower than the rolling resistance of a control tire tread rubber composition wherein the parts of non-functionalized linear polybutadiene rubber are replaced with an equivalent amount of branched polybutadiene rubber. As discussed above, the branched polybutadiene rubber used in the control composition for the fourth-fifth embodiments has a cis bond content of at least 95% and a Tg of less than - 101 °C, preferably -101 to -110 °C, less than -105 °C, or -105 to -109 °C, and a T80 value of at least 9, preferably at least 10, as measured using a viscometer and a LCB index of at least 11, preferably at least 13 as measured using a rubber process analyzer. In preferred embodiments, the Mooney viscosity of the non-functionalized linear polybutadiene rubber and the branched polybutadiene rubber differ by no more than 5%, preferably no more than 3%, more preferably no more than 2.5%. While the foregoing properties may be measured by various methods, the values referred to herein for rolling resistance, snow or ice traction, wet traction, and dry handling refer to tan δ values measured at the designated temperatures (as discussed herein) and according to the above-described procedures.

By referring above to maintained cornering in the tire tread rubber composition of the fourth-fifth embodiments is meant that the cornering or E' at 30 °C is at least 90-100% (*e.g.,* 90%, 91%, 92%, 93%, 94%, 95%, 96%, 97%, 98%, 99%, or 100%) of the cornering or E' at 30 °C of a control tire tread rubber composition, preferably 95-100% (*e.g.,* 95%, 96%, 97%, 98%, 99%, or 100%) of the cornering or E' at 30 °C of a control tire tread rubber composition. By referring to improved cornering in the tire tread rubber composition of the fourth-fifth embodiments is meant that the cornering or E' at 30 °C is greater than 100% (e*.g.,* 101%, 102%, 103%, 104%, 105%, etc.) of the cornering or E' at 30 °C of a control tire tread rubber composition wherein the parts of non-functionalized linear polybutadiene rubber are replaced with an equivalent amount of branched polybutadiene rubber, preferably greater than 100 to 105% (*e.g.,* 101%, 102%, 103%, 104%, 105%) of the cornering or E' at 30 °C of a control tire tread rubber composition wherein the parts of non-functionalized linear polybutadiene rubber are replaced with an equivalent amount of branched polybutadiene rubber. E' at 30 °C is measured according to the above-described procedure. As discussed above, the branched polybutadiene rubber used in the control composition for the fourth-fifth embodiments has a cis bond content of at least 95% and a Tg of less than -101 °C, preferably -101 to -110 °C, less than -105 °C, or -105 to -109 °C, and a T80 value of at least 9, preferably at least 10, as measured using a viscometer and a LCB index of at least 11, preferably at least 13 as measured using a rubber process analyzer. In preferred embodiments, the Mooney viscosity of the linear polybutadiene rubber and the branched polybutadiene rubber differ by no more than 5%, preferably no more than 3%, more preferably no more than 2.5%.

In certain embodiments of the first and second embodiments and according to the third embodiment, the rubber composition has a value for tan δ at 60 °C of 0.18 to 0.23 (*e.g.,* 0.18, 0.19, 0.2, 0.21, 0.22, or 0.23), preferably 0.19 to 0.22 (*e.g.,* 0.19, 0.2, 0.21, or 0.22). A tan δ at 60 °C within one of the foregoing ranges can be understood as being indicative of a tire (or more specifically, a tire tread) with moderate rolling resistance (as opposed to a tire with low rolling resistance which would generally be indicated by a tan δ at 60 °C of 0.17 or less). In certain embodiments of the first and second embodiments and according to the third embodiment, the value for tan δ at 60 °C is combined with at least one of the following: (a) a value for tan δ at -30 °C of no more than 1.6 times (*e.g.,* 1.6, 1.5, 1.4, 1.3, 1.2, 1.1, etc. times) the tan δ at 60 °C value, preferably between 1.6 times and 1.3 times (*e.g.,* 1.6, 1.5, 1.4, or 1.3 times) the tan δ at 60 °C value; (b) a value for tan δ at 0 °C of at least 1.3 times (*e.g.,* 1.3, 1.4, 1.5, 1.6, 1.7, 1.8, 1.9, 2, etc. times) the tan δ at 60 °C value, preferably between 1.3 and 2 times (*e.g.,* 1.3, 1.4, 1.5, 1.6, 1.7, 1.8, 1.9, 2, etc. times) the tan δ at 60 °C value; or (c) a value for tan δ at 30 °C of at least 1.1 times (*e.g.,* 1.1, 1.2, 1.3, 1.4, 1.5, 1.6, 1.7, 1.8, 1.9, 2, 2.1, 2.2, etc. times) the tan δ at 60 °C value, preferably between 1.1 times to 2 times (*e.g.,* 1.1, 1.2, 1.3, 1.4, 1.5, 1.6, 1.7, 1.8, 1.9, or 2 times) the tan δ at 60 °C value; in certain such embodiments, the value for tan δ at 60 °C is combined with each of (a), (b), and (c). In certain embodiments of the first-third embodiments, one of the foregoing values for tan δ at 60 °C (*e.g.,* 0.18 to 0.23 or 0.19 to 0.22, etc.) is combined with (a) a value for δ at -30 °C of between 1.6 times and 1.3 times the tan δ at 60 °C value. In certain embodiments of the first-third embodiments, one of the foregoing values for tan δ at 60 °C (*e.g.,* 0.18 to 0.23 or 0.19 to 0.22, etc.) is combined with (b) a value for δ at 0 °C of between 1.3 and 2 times the tan δ at 60 °C value. In certain embodiments of the first-third embodiments, one of the foregoing values for tan δ at 60 °C (*e.g.,* 0.18 to 0.23 or 0.19 to 0.22, etc.) is combined with (c) a value for δ at 30 °C of between 1.1 and 2 times the tan δ at 60 °C value. In certain embodiments of the first-third embodiments, one of the foregoing values for tan δ at 60 °C (*e.g.,* 0.18 to 0.26 or 0.19 to 0.24, etc.) is combined with the more preferred values for tan δ at -30 °C, the more preferred values for tan δ at 30 °C, and the more preferred values for tan δ at 30 °C.

In certain embodiments of the first and second embodiments, and according to the third embodiment disclosed herein, the tire tread rubber composition has a value for tan δ at 60 °C of 0.18 to 0.23, preferably 0.19 to 0.22 and meets at least one of the following (*i.e*., (a)-(c), preferably each of the following: (a) has a value for tan δ at -30 °C of no more than 1.6 times the tan δ at 60 °C value, preferably between 1.6 times and 1.3 times the tan δ at 60 °C value; (b) has a value for tan δ at 30 °C of at least 1.3 times the tan δ at 60 °C value, preferably between 1.3 times and 2 times the tan δ at 60 °C value; or (c) has a value for tan δ at 0 °C of at least 1.1 times the tan δ at 60 °C value, preferably between 1.1 times and 2 times the tan δ at 60 °C value.

In certain embodiments of the fourth and fifth embodiments, the rubber composition has a value for tan δ at 60 °C of 0.18 to 0.23 *(e.g.,* 0.18, 0.19, 0.2, 0.21, 0.22, or 0.23), preferably 0.19 to 0.22 *(e.g.,* 0.19, 0.2, 0.21, or 0.22). A tan δ at 60 °C within one of the foregoing ranges can be understood as being indicative of a tire (or more specifically, a tire tread) with moderate rolling resistance (as opposed to a tire with low rolling resistance which would generally be indicated by a tan δ at 60 °C of 0.17 or less). In certain embodiments of the fourth and fifth embodiments, the value for tan δ at 60 °C is combined with at least one of the following: (a) a value for tan δ at -30 °C of no more than 1.7 times (*e.g.,* 1.7, 1.6, 1.5, 1.4, 1.3, 1.2, 1.1, etc. times) the tan δ at 60 °C value, preferably between 1.7 times and 1.3 times (*e.g.,* 1.7, 1.6, 1.5, 1.4, or 1.3 times) the tan δ at 60 °C value; (b) a value for tan δ at 0 °C of at least 1.3 times (*e.g.,* 1.3, 1.4, 1.5, 1.6, 1.7, 1.8, 1.9, 2, etc. times) the tan δ at 60 °C value, preferably between 1.3 and 2 times (*e.g.,* 1.3, 1.4, 1.5, 1.6, 1.7, 1.8, 1.9, 2, etc. times) the tan δ at 60 °C value; or (c) a value for tan δ at 30 °C of at least 1.1 times (e.g., 1.1, 1.2, 1.3, 1.4, 1.5, 1.6, 1.7, 1.8, 1.9, 2, 2.1, 2.2, etc. times) the tan δ at 60 °C value, preferably between 1.1 times to 2 times (*e.g.,* 1.1, 1.2, 1.3, 1.4, 1.5, 1.6, 1.7, 1.8, 1.9, or 2 times) the tan δ at 60 °C value; in certain such embodiments, the value for tan δ at 60 °C is combined with each of (a), (b), and (c). In certain embodiments of the fourth and fifth embodiments, one of the foregoing values for tan δ at 60 °C *(e.g.,* 0.18 to 0.23 or 0.19 to 0.22, etc.) is combined with (a) a value for δ at -30 °C of between 1.7 times and 1.3 times the tan δ at 60 °C value. In certain embodiments of the fourth and fifth embodiments, one of the foregoing values for tan δ at 60 °C *(e.g.,* 0.18 to 0.23 or 0.19 to 0.22, etc.) is combined with (b) a value for δ at 0 °C of between 1.3 and 2 times the tan δ at 60 °C value. In certain embodiments of the fourth and fifth embodiments, one of the foregoing values for tan δ at 60 °C *(e.g.,* 0.18 to 0.23 or 0.19 to 0.22, etc.) is combined with (c) a value for δ at 30 °C of between 1.1 and 2 times the tan δ at 60 °C value. In certain embodiments of the fourth and fifth embodiments, one of the foregoing values for tan δ at 60 °C *(e.g.,* 0.18 to 0.26 or 0.19 to 0.24, etc.) is combined with the more preferred values for tan δ at -30 °C, the more preferred values for tan δ at 30 °C, and the more preferred values for tan δ at 30 °C.

In certain embodiments of the fourth and fifth embodiments, the tire tread rubber composition has a value for tan δ at 60 °C of 0.18 to 0.23, preferably 0.19 to 0.22 and meets at least one of the following (*i.e.*, (a)-(c), preferably each of the following: (a) has a value for tan δ at -30 °C of no more than 1.7 times the tan δ at 60 °C value, preferably between 1.7 times and 1.3 times the tan δ at 60 °C value; (b) has a value for tan δ at 30 °C of at least 1.3 times the tan δ at 60 °C value, preferably between 1.3 times and 2 times the tan δ at 60 °C value; or (c) has a value for tan δ at 0 °C of at least 1.1 times the tan δ at 60 °C value, preferably between 1.1 times and 2 times the tan δ at 60 °C value.

In certain embodiments of the fourth and fifth embodiments, the tire tread rubber composition has specified properties as compared to a control tire tread rubber composition using branched polybutadiene. More specifically, in certain such embodiments, the tire tread rubber composition meets at least one of the following, preferably each of the following, as compared to a control tire tread rubber composition wherein the parts of non-functionalized linear polybutadiene rubber are replaced with an equivalent amount of branched polybutadiene rubber having a cis bond content of at least 95% and a Tg of less than -101 °C, preferably -101 to -110 °C, more preferably less than -105 °C or -105 to -109 °C, wherein the branched polybutadiene rubber has a T80 value of at least 9, preferably at least 10, as measured using a viscometer, and preferably also a LCB index of at least 11, preferably at least 13 as measured using a rubber process analyzer: (i) a value for tan δ at -30 °C that is within +/- 5% (*e.g.,* within +1%, within +2%, within +3%, within +4%, within +5%, the same, within -1%, within -2%, within -3%, within -4%, or within -5%), preferably within -2% (*e.g.,* within -2%, within 1%, or the same) of the tan δ at -30 °C of the control rubber composition; (ii) a value for tan δ at 0 °C that is within +/- 5% (*e.g.,* within +1%, within +2%, within +3%, within +4%, within +5%, the same, within -1%, within -2%, within -3%, within -4%, or within -5%), preferably within +3% (*e.g.,* within +1%, within +2%, within +3%, or the same) of the tan δ at 0 °C of the control rubber composition; (iii) a value for tan δ at 30 °C that is within +/- 5% (*e.g.,* within +1%, within +2%, within +3%, within +4%, within +5%, the same, within -1%, within -2%, within -3%, within -4%, or within -5%), preferably within +3% (*e.g.,* within +1%, within +2%, within +3%, or the same) of the tan δ at 30 °C of the control rubber composition; (iv) a value for tan δ at 60 °C that is within +/- 5%(*e.g.,* within +1%, within +2%, within +3%, within +4%, within +5%, the same, within -1%, within -2%, within -3%, within -4%, or within -5%), preferably within +/-3% (*e.g.,* within +1%, within +2%, within +3%, the same, within -1%, within -2%, or within -3%) of the tan δ at 60 °C of the control rubber composition. In preferred embodiments, the Mooney viscosity of the non-functionalized linear polybutadiene rubber and the branched polybutadiene rubber differ by no more than 5%, preferably no more than 3%, more preferably no more than 2.5%. By stating that a given value is within -5% than a corresponding value for the control rubber composition is meant that the given value is no more than 5% less than the corresponding value for the control rubber composition. For example, if the control rubber composition has a value of 100, then a given value of 96 (which is 4% less) is within -5% of the corresponding value for the control composition. By stating that a given value is within +5% than a corresponding value for the control rubber composition is meant that the given value is no more than 5% more than the corresponding value for the control rubber composition. For example, if the control rubber composition has a value of 100, then a given value of 103 is within +5% of the corresponding value for the control composition. Since measured values for tan δ at -60 °C and at -30 °C are both preferred to be lower for better rolling resistance of snow performance, respectively, a given value that is less than a corresponding control value shows an improvement. Conversely, since measured values for tan δ at 0 °C and at 30 °C are both preferred to be higher for better wet and dry performance, respectively, a given value that is higher than a corresponding control value shows an improvement. The wear performance of a tire tread rubber composition can be evaluated by various methods. However, the absolute wear values provided herein refer to DIN abrasion values that can be measured using standard methods including DIN ISO 4649, 2017 edition, or more preferably DIN ISO 53516. According to such method, the values represent the amount of material lost (in mm³) during the abrasion testing. Samples are preferably taken from a slab of rubber sheet (rather than from a tire tread). In alternative embodiments, samples for DIN abrasion testing are taken from a tire tread. When comparing two DIN abrasion values, a lower number indicates less material lost and corresponds to an improvement in wear. An improvement in wear can also be described as improved resistance to abrasion and is generally desirable in a tire tread since it leads to a tire having a longer lifespan (*e.g.,* having a higher predicted mileage rating). In certain preferred embodiments of the first-third embodiments, the tire tread rubber composition has a DIN abrasion (according to DIN ISO 4649, 2017 edition, more preferably DIN ISO 53516) of no more than 90 mm³ (*e.g.,* 90, 89, 88, 87, 86, 85, 84, 83, 82, 81, 80, 79, 78, 77, 76, 75, 74, 73, 72, 71, 70 mm³ or less), no more than no more than 85 mm³ (e.g., 85, 84, 83, 82, 81, 80, 79, 78, 77, 76, 75, 74, 73, 72, 71, 70, mm³ or less), no more than 80 mm³ (*e.g.,* 80, 79, 78, 77, 76, 75, 74, 73, 72, 71, 70, mm³ or less), no more than 75 mm³ (*e.g.,* 75, 74, 73, 72, 71, 70, mm³ or less), or 90 to 70 mm³ (including ranges within the foregoing), 85 to 70 mm³ (including ranges within the foregoing), 80 to 70 mm³ (including ranges within the foregoing), 95 to 80 mm³ (including ranges within the foregoing), or 90 to 80 mm³ (including ranges within the foregoing). In certain preferred embodiments of the fourth-fifth embodiments, the tire tread rubber composition has a DIN abrasion (according to DIN ISO 4649, 2017 edition, more preferably DIN ISO 53516) of no more than 95 mm³ (*e.g.,* 95, 94, 93, 92, 91, 90, 89, 88, 87, 86, 85, 84, 83, 82, 81, 80, 79, 78, 77, 76, 75, 74, 73, 72, 71, 70 mm³ or less), no more than 90 mm³ (*e.g.,* 90, 89, 88, 87, 86, 85, 84, 83, 82, 81, 80, 79, 78, 77, 76, 75, 74, 73, 72, 71, 70 mm³ or less), no more than no more than 85 mm³ (*e.g.,* 85, 84, 83, 82, 81, 80, 79, 78, 77, 76, 75, 74, 73, 72, 71, 70, mm³ or less), no more than 80 mm³ (*e.g.,* 80, 79, 78, 77, 76, 75, 74, 73, 72, 71, 70, mm³ or less), no more than 75 mm³ (*e.g.,* 75, 74, 73, 72, 71, 70, mm³ or less), or 95 to 70 mm³ (including ranges within the foregoing), 90 to 70 mm³ (including ranges within the foregoing), 85 to 70 mm³ (including ranges within the foregoing), 80 to 70 mm³ (including ranges within the foregoing), 95 to 80 mm³ (including ranges within the foregoing), or 90 to 80 mm³ (including ranges within the foregoing). In certain embodiments of the fourth-fifth embodiments, the tire tread rubber composition has a DIN abrasion (according to DIN ISO 4649, 2017 edition, more preferably DIN ISO 53516) of no more than 85 mm³ or no more than 90 mm³ or no more than 95 mm³, preferably no more than 90 mm³ or no more than 95 mm³ or no more than 100 mm³.

The tire tread rubber compositions of the first-third embodiments can be considered to be particularly useful in terms of providing a tire tread with improved wear resistance or wear performance, which improvement in wear is achieved by incorporating the linear polybutadiene rubber (as discussed above) into the tire tread rubber composition instead of a branched polybutadiene rubber (as also discussed above). By stating that the wear performance is improved is meant that the wear performance (as measured by DIN Abrasion according to methods such as ISO 23337:2016)) improved by at least 10% or in other words is at least 110% of a control (*e.g.,* 10%, 11%, 12%, 13%, 14%, 15%, 16%, 17%, 18%, 19%, 20%, 21%, 22%, 23%, 24%, 25%, 26%, 27%, 28%, 29%, 30% or more), and in certain instances an improvement in wear as compared to a control tire tread rubber composition wherein the parts of linear polybutadiene rubber are replaced with an equivalent amount of branched polybutadiene rubber of at least 15% (*e.g.,* 15%, 16%, 17%, 18%, 19%, 20%, 21%, 22%, 23%, 24%, 25%, 26%, 27%, 28%, 29%, 30% or more), or even at least 20% (*e.g.,* 20%, 21%, 22%, 23%, 24%, 25%, 26%, 27%, 28%, 29%, 30% or more), including ranges encompassing the foregoing such as 10-30%, 10-25%, 10-20%, 10-15%, 15-30%, 15-25%, 15-20%, 20-30%, 20-25%). As discussed above, the branched polybutadiene rubber used in the control composition has a cis bond content of at least 95% and a Tg of less than -101 °C, preferably -101 to -110 °C, less than -105 °C, or -105 to -109 °C, and a T80 value of at least 5, preferably at least 6, as measured using a viscometer and a gel content of at least 5.5%, preferably at least 6%, more preferably at least 6.5%, as measured using a toluene immersion test, wherein the Mooney viscosity of the linear polybutadiene rubber and the branched polybutadiene rubber differ by no more than 5%, preferably no more than 3%, more preferably no more than 2.5% and the improvement in wear resistance is measured by DIN abrasion. Alternatively, the foregoing improvements can also be described as being at least 110% (with 110% being 10% higher than 100%), at least 115% (with 115% being 15% higher than 100%), and at least 120% (with 120% being 20% higher than 100%) as compared to a control. As non-limiting examples, if a sample exhibited an abrasion loss of 0.0055 mg and its control exhibited an abrasion loss of 0.0050, the sample could be described as having a wear performance that is 95% of its control and if a sample exhibited an abrasion loss of 0.0054 mg and its control exhibited an abrasion loss of 0.0060 mg, the sample could be described as having a wear performance that is improved by 10% as compared to its control. According to the foregoing descriptions, a wear performance that is 100% of its control should be understood as having a wear performance that is equal to its control and the comparisons to control are calculated by dividing the control value by the sample value and multiplying by 100%.

The tire tread rubber compositions of the fourth and fifth embodiments can be considered to be particularly useful in terms of providing a tire tread with improved wear resistance or wear performance, which improvement in wear is achieved by incorporating the non-functionalized linear polybutadiene rubber (as discussed above) into the tire tread rubber composition instead of a branched polybutadiene rubber (as also discussed above). By stating that the wear performance is improved is meant that the wear performance (as measured by DIN Abrasion according to methods such as ISO 23337:2016)) improved by at least 10% or in other words is at least 110% of a control (*e.g.,* 10%, 11%, 12%, 13%, 14%, 15%, 16%, 17%, 18%, 19%, 20%, 21%, 22%, 23%, 24%, 25%, 26%, 27%, 28%, 29%, 30% or more), and in certain instances an improvement in wear as compared to a control tire tread rubber composition wherein the parts of non-functionalized linear polybutadiene rubber are replaced with an equivalent amount of branched polybutadiene rubber of at least 15% (*e.g.,* 15%, 16%, 17%, 18%, 19%, 20%, 21%, 22%, 23%, 24%, 25%, 26%, 27%, 28%, 29%, 30% or more), or even at least 20% (*e.g.,* 20%, 21%, 22%, 23%, 24%, 25%, 26%, 27%, 28%, 29%, 30% or more), including ranges encompassing the foregoing such as 10-30%, 10-25%, 10-20%, 10-15%, 15-30%, 15-25%, 15-20%, 20-30%, 20-25%). As discussed above, the branched polybutadiene rubber used in the control composition has having a cis bond content of at least 95% and a Tg of less than -101 °C, preferably -101 to -110 °C, more preferably less than -105 °C or -105 to -109 °C, wherein the branched polybutadiene rubber has a T80 value of at least 9, preferably at least 10, as measured using a viscometer, and preferably also a LCB index of at least 11, preferably at least 13 as measured using a rubber process analyzer, and the improvement in wear resistance is measured by DIN abrasion. In preferred embodiments, the Mooney viscosity of the non-functionalized linear polybutadiene rubber and the branched polybutadiene rubber differ by no more than 5%, preferably no more than 3%, more preferably no more than 2.5%. Alternatively, the foregoing improvements can also be described as being at least 110% (with 110% being 10% higher than 100%), at least 115% (with 115% being 15% higher than 100%), and at least 120% (with 120% being 20% higher than 100%) as compared to a control. As non-limiting examples, if a sample exhibited an abrasion loss of 0.0055 mg and its control exhibited an abrasion loss of 0.0050, the sample could be described as having a wear performance that is 95% of its control and if a sample exhibited an abrasion loss of 0.0054 mg and its control exhibited an abrasion loss of 0.0060 mg, the sample could be described as having a wear performance that is improved by 10% as compared to its control. According to the foregoing descriptions, a wear performance that is 100% of its control should be understood as having a wear performance that is equal to its control and the comparisons to control are calculated by dividing the control value by the sample value and multiplying by 100%.

In certain embodiments of the first-third and fourth-fifth embodiments, the rubber composition has a room temperature Eb of at least 450% (e.g., 450%, 455%, 460%, 465%, 470%, 475%, 480%, 485%, 490%, 495%, 500%, 505%, 510%, 515%, 520%, 525%, 530%, 535%, 540%, 545%, 550%, 555%, 560%, 565%, 570%, 575%, 580%, 585%, 590%, 595%, 600%, 605%, 610%, 615%, 620%, 625%, or more), preferably at least 475% (e.g., 475%, 480%, 485%, 490%, 495%, 500%, 505%, 510%, 515%, 520%, 525%, 530%, 535%, 540%, 545%, 550%, 555%, 560%, 565%, 570%, 575%, 580%, 585%, 590%, 595%, 600%, 605%, 610%, 615%, 620%, 625%, or more), more preferably at least 500% (*e.g.,* 500%, 505%, 510%, 515%, 520%, 525%, 530%, 535%, 540%, 545%, 550%, 555%, 560%, 565%, 570%, 575%, 580%, 585%, 590%, 595%, 600%, 605%, 610%, 615%, 620%, 625%, or more), or within the range of 450 to 625% or a sub-range within that range, within the range of 475 to 625% or a sub-range within that range, or within the range of 500 to 625% or a sub-range within that range. The foregoing room temperature Eb values refer to measurements made at 23 ° C. Eb can be measured following the guidelines, but not restricted to, the standard procedure described in ASTM D-412, with dumbbell-shaped samples having a cross-section dimension of 4 mm in width and 1.9 mm in thickness at the center. During measurement, specimens may be strained at a constant rate (20% per second) and the resulting force recorded as a function of extension (strain). Samples are preferably taken from a slab of rubber sheet (rather than from a tire tread).

In certain embodiments of the first-third embodiments, the rubber composition has a hot Eb or Eb at 100 °C of at least 375%, (*e.g.,* 375%, 380%, 385%, 390%, 395%, 400%, 405%, 410%, 415%, 420%, 425%, 430%, 435%, 440%, 445%, 450%, 455%, 460%, 465%, 470%, 475%, 480%, 485%, 490%, 495%, 499%, or more) or within a range of 375-499% or a sub-range within that range, preferably at least 400% (*e.g.,* 400%, 405%, 410%, 415%, 420%, 425%, 430%, 435%, 440%, 445%, 450%, 455%, 460%, 465%, 470%, 475%, 480%, 485%, 490%, 495%, 499%, or more) or within a range of 400-499% or a sub-range within that range. In certain embodiments of the fourth and fifth embodiments, the rubber composition has a hot Eb or Eb at 100 °C of at least 375%, (*e.g.,* 375%, 380%, 385%, 390%, 395%, 400%, 405%, 410%, 415%, 420%, 425%, 430%, 435%, 440%, 445%, 450%, 455%, 460%, 465%, 470%, 475%, 480%, 485%, 490%, 495%, 499%, or more) or within a range of 375-499% or a sub-range within that range, preferably at least 400% (*e.g.,* 400%, 405%, 410%, 415%, 420%, 425%, 430%, 435%, 440%, 445%, 450%, 455%, 460%, 465%, 470%, 475%, 480%, 485%, 490%, 495%, 499%, or more) or within a range of 400-499% or a sub-range within that range, preferably at least 425% (*e.g.,* 425%, 430%, 435%, 440%, 445%, 450%, 455%, 460%, 465%, 470%, 475%, 480%, 485%, 490%, 495%, 499%, or more) or within a range of 425-499% or a sub-range within that range. The foregoing hot Eb values refer to measurements made at 100 °C. Eb can be measured following the guidelines, but not restricted to, the standard procedure described in ASTM D-412, with dumbbell-shaped samples having a cross-section dimension of 4 mm in width and 1.9 mm in thickness at the center. During measurement, specimens may be strained at a constant rate (20% per second) and the resulting force recorded as a function of extension (strain). Generally, a hot Eb value for a given tread rubber composition will be lower (*i.e.,* less than) the room temperature Eb for that tread rubber composition. Samples are preferably taken from a slab of rubber sheet (rather than from a tire tread).

In certain embodiments of the first-third embodiments, the rubber composition has a hot EbxTb (both values determined at 100 °C) of at least 4000 (*e.g*., 4000, 4050, 4100, 4150 4200, 4250, 4300, 4350, 4400, 4450, 4500, 4550, 4600, 4650, 4700, or more) or 4000 to 4700 or a sub-range within that range, preferably at least 4200 (*e.g.,* 4200, 4250, 4300, 4350, 4400, 4450, 4500, 4550, 4600, 4650, 4700, or more) or 4000 to 4700 or a sub-range within that range. In certain embodiments of the first-third embodiments, the rubber composition has a hot EbxTb (both values determined at 100 °C) of at least 4500 (*e.g.,* 4000, 4500, 4550, 4600, 4650, 4700, 4750, 4800, 4850, 4900, 4950, 5000, 5050, 5100, 5150, or 5200, or more) or 4500 to 5200 or a sub-range within that range, preferably at least 5000 (*e.g.,* 5000, 5050, 5100, 5150, or 5200, or more) or 5000 to 5200 or a sub-range within that range. The hot TbxEb is calculated by multiplying the hot Tb with the hot Eb value and refers to measurements made at 100 ° C. Tb can be measured following the guidelines, but not restricted to, the standard procedure described in ASTM D-412, with dumbbell-shaped samples having a cross-section dimension of 4 mm in width and 1.9 mm in thickness at the center. During measurement, specimens may be strained at a constant rate (20% per second) and the resulting force recorded as a function of extension (strain).

### Tires and Tire Tread Types

It is specifically contemplated that the tire tread rubber compositions according to the first, third and fourth embodiments, as disclosed herein, will be utilized in a tire tread. Thus, also disclosed herein is a tire tread comprising (made from) the tire tread rubber composition according to the first, third or fourth embodiments, as discussed herein. As well, such a tire tread can be utilized in a tire (along with other components). Thus, also disclosed herein is a tire having a tread comprising (made from) the tire tread rubber composition according to the first, third or fourth embodiments, as discussed herein. As discussed below, the particular type of tire may vary. In certain embodiments, the tire which incorporates a tread made from the tire tread rubber composition according to the first-third or fourth-fifth embodiments is a passenger or light truck tire. In other embodiments, the tire which incorporates a tread made from the tire tread rubber composition according to the first-third or fourth-fifth embodiments is a retread tire.

As mentioned above, the first, third and fourth embodiments disclosed herein are directed to a tire tread rubber composition and the second and fifth embodiments are directed to a method for improving the wear resistance of a tire tread rubber composition. According to the first-third and fourth-fifth embodiments, the particular type of tire tread may vary. In certain embodiments of the first-third and fourth-fifth embodiments, the tire tread is a tread for a passenger or light truck vehicle (which can be referred to as a passenger tire tread and a light truck tire tread, respectively). In other embodiments of the first-third and fourth-fifth embodiments, the tire tread is a retread tire tread (which is for use in a retread tire that is capable of being retreaded). Retread tires are used on various vehicles including commercial transit vehicles such as tractor trailers, heavy duty trucks, as well as buses.

### Methods

Also disclosed herein, are methods for improving the wear resistance of a tire tread rubber composition which contains high cis polybutadiene as a majority amount by weight of 100 parts of an elastomer component, *i.e.,* the second and third embodiments disclosed herein. The method of the third embodiment comprises incorporating a linear polybutadiene rubber (in an amount of 55-80 parts, preferably 60-75 parts) having a cis bond content of at least 95% and a Tg of less than -101 °C, preferably -101 to -110 °C, less than -105 °C, or -105 to -109 °C, wherein the linear polybutadiene rubber has a T80 value of about 5 to about 1.5, preferably about 3.5 to about 2, as measured using a viscometer, a g ratio of at least 0.85 (e.g., 0.85, 0.86, 0.87, 0.88, 0.89, 0.9, 0.91, 0.92, 0.93, 0.94, 0.95, 0.96, 0.97, 0.98, 0.99, 1, 1.01, 1.02, 1.03, 1.04, 1.05 or higher) or 0.85 to 1.05, and a g' ratio of at least 0.95 (e.g., 0.95, 0.96, 0.97, 0.98, 0.99, 1, 1.01, 1.02, 1.03, 1.04, 1.05 or higher) or 0.95 to 1.05, as measured using gyration data and intrinsic viscosity data, respectively, using a GPC-MALS detector, into the tire tread rubber composition according to the first embodiment disclosed herein or according to the third embodiment disclosed herein, wherein the wear resistance is improved by at least 10%, preferably at least 15%, more preferably at least 20% as compared to a control tire tread rubber composition wherein the linear polybutadiene rubber is replaced with an equivalent amount of a branched polybutadiene rubber having a cis bond content of at least 95% and a Tg of less than -101 °C, preferably -101 to -110 °C, less than -105 °C, or -105 to -109 °C, wherein the branched polybutadiene rubber has a T80 value of at least 5, preferably at least 6, as measured using a viscometer and a gel content of at least 5.5%, preferably at least 6%, more preferably at least 6.5%, as measured using a toluene immersion test, wherein the Mooney viscosity of the linear polybutadiene rubber and the branched polybutadiene rubber differ by no more than 5%, preferably no more than 3%, more preferably no more than 2.5%, and wherein the wear resistance is measured by DIN abrasion. The method of the fifth embodiment comprises incorporating a non-functionalized linear polybutadiene rubber (in an amount of 55-80 parts, preferably 60-75 parts, more preferably 61-75 parts) having a cis bond content of at least 95% and a Tg of less than -101 °C, preferably -101 to -110 °C, less than -105 °C, or -105 to -109 °C, wherein the non-functionalized linear polybutadiene rubber has a T80 value of about 1 to about 7, about 1 to about 3, or about 3.5 to about 7, as measured using a viscometer, and preferably also a long chain branching (LCB) index of about 3 to about 9, about 3 to about 5, or about 5 to about 8.5, as measured using a rubber process analyzer, into the tire tread rubber composition according to the fourth embodiment disclosed herein, wherein the wear resistance is improved by at least 10%, preferably at least 15%, more preferably at least 20% as compared to a control tire tread rubber composition wherein the non-functionalized linear polybutadiene rubber is replaced with an equivalent amount of a branched polybutadiene rubber having a cis bond content of at least 95% and a Tg of less than -101 °C, preferably -101 to -110 °C, more preferably less than -105 °C or -105 to -109 °C, wherein the branched polybutadiene rubber has a T80 value of at least 9, preferably at least 10, as measured using a viscometer, and preferably also a LCB index of at least 11, preferably at least 13 as measured using a rubber process analyzer, and wherein the wear resistance is measured by DIN abrasion. In preferred embodiments, the Mooney viscosity of the non-functionalized linear polybutadiene rubber and the branched polybutadiene rubber differ by no more than 5%, preferably no more than 3%, more preferably no more than 2.5%. According to the method of the second embodiment, the tire tread rubber composition is according to the first embodiment disclosed herein or according to the third embodiment disclosed herein. According to the method of the fifth embodiment, the tire tread rubber composition is according to the fourth embodiment disclosed herein.

### EXAMPLES

The following examples are provided to illustrate specific and exemplary embodiments and/or features of the embodiments of the present disclosure. The examples are provided solely for the purposes of illustration and should not be construed as limitations of the present disclosure. Numerous variations over these specific examples are possible without departing from the spirit and scope of the presently disclosed embodiments. It should specifically be understood that tire tread rubber compositions according to the present disclosure can be made using different SBRs, different linear polybutadienes, different reinforcing silica filler, different (or no) carbon black, different hydrocarbon resin, and different liquid plasticizing agents, generally in connection with the teachings provided herein and as fully disclosed in the preceding paragraphs. It should also be understood that the foregoing ingredients can differ in relative amount, composition, or both from those used in the examples (*i.e.*, as fully as disclosed in the preceding paragraphs).

| **Table 1** | | | | |
|---|---|---|---|---|
| | | **Example 1** | **Example 2** | **Control** |
| **SBR component¹** | | | | |
| | 45-20 parts? | Yes | Yes | Yes |
| | 40-25 parts? | Yes | Yes | Yes |
| | 39-25 parts? | Yes | Yes | Yes |
| **BR component²** | | BR-1 | BR-2 | BR-3 |
| | 55-80 parts? | Yes | Yes | Yes |
| | 60-75 parts? | Yes | Yes | Yes |
| | Linear BR? | Yes | Yes | No |
| | Branched BR? | No | No | Yes |
| | T80 of 1-7? | Yes | Yes | No (≥ 10) |
| | T80 of 1-3? | No | Yes | No (≥ 10) |
| | T80 of 3.5-7? | Yes | No | No (≥ 10) |
| | LCB of 3-9? | Yes | Yes | No (≥ 15) |
| | LCB of 5-8.5? | Yes | Yes | No (≥ 15) |

| **Reinforcing silica filler** | | | | |
|---|---|---|---|---|
| | 80-120 phr? | Yes | Yes | Yes |
| | 85-110 phr? | Yes | Yes | Yes |
| | 85-100 phr? | Yes | Yes | Yes |

| **Carbon black filler** | | | | |
|---|---|---|---|---|
| | ≤ 15 phr? | Yes | Yes | Yes |
| | 5-10 phr? | Yes | Yes | Yes |

| **Hydrocarbon resin** | | | | |
|---|---|---|---|---|
| | 5-20 phr? | Yes | Yes | Yes |
| | 5-12 phr? | Yes | Yes | Yes |
| | Tg of 30 to 50 ° | Yes | Yes | Yes |

| **Liquid plasticizer?** | | | | |
|---|---|---|---|---|
| | 10-29 phr? | Yes | Yes | Yes |
| | 15-25 phr? | Yes | Yes | Yes |
| **Cure package?** | | Yes | Yes | Yes |
| | | | | |

| **DIN Abrasion Wear** | | | | |
|---|---|---|---|---|
| Improved by at least 10% versus control? | | Yes | Yes | Not applicable |
| Improved by at least 15% versus control? | | No | Yes | Not applicable |

| | | | | |
|---|---|---|---|---|
| ¹ Styrene-butadiene rubber with a Tg of -40 to -50 °C, a styrene monomer content of 20-40% by weight, and oil extended in an amount of 10-30 parts of oil per 100 parts of SBR. Extended oil combined with free oil for ranges listed in chart. ² Each of the BRs have a Tg in the range of -105 to -109 °C and a cis 1,4-bond content of at least 95%. | | | | |

Examples 1 and 2 are considered inventive examples. These inventive examples show that the use of a non-functionalized linear polybutadiene having properties as discussed herein (*i.e*., T80 and LCB index) provides an unexpected improvement in wear as compared to the use of a branched polybutadiene. The control example used the same amount of branched polybutadiene as the amount of non-functionalized linear polybutadiene present in Examples 1 and 2. The Mooney viscosity ML1+4 at 100 °C for the branched polybutadiene and the non-functionalized linear polybutadienes are all in the range of 40 to 55 and differ from each other by no more than 5%. The improvement in wear is particularly unexpected in view of the fact that the polybutadienes had similar Mooney viscosities and Examples 1 and 2 both had values for tan δ at 60 °C, tan δ at 30 °C, tan δ at 0 °C and tan δ at -30 °C that differed by no more than +/-5% from the corresponding value for the control.

This application discloses several numerical range limitations that support any range within the disclosed numerical ranges, even though a precise range limitation is not stated verbatim in the specification, because the embodiments of the compositions and methods disclosed herein could be practiced throughout the disclosed numerical ranges. With respect to the use of substantially any plural or singular terms herein, those having skill in the art can translate from the plural to the singular or from the singular to the plural as is appropriate to the context or application. The various singular or plural permutations may be expressly set forth herein for sake of clarity.

It will be understood by those within the art that, in general, terms used herein, and especially in the appended claims are generally intended as "open" terms. For example, the term "including" should be interpreted as "including but not limited to," the term "having" should be interpreted as "having at least," the term "includes" should be interpreted as "includes but is not limited to." It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (*e.g.,* "a" or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (*e.g.,* the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (*e.g.,* " a system having at least one of A, B, and C" would include but not be limited to systems that have A alone, B alone, C alone, A and B together, A and C together, B and C together, and/or A, B, and C together, etc.). It will be further understood by those within the art that virtually any disjunctive word or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

All references, including but not limited to patents, patent applications, and non-patent literature are hereby incorporated by reference herein in their entirety.

While various aspects and embodiments of the compositions and methods have been disclosed herein, other aspects and embodiments will be apparent to those skilled in the art. The various aspects and embodiments disclosed herein are for purposes of illustration and are not intended to be limiting, with the true scope and spirit being indicated by the claims.

## Claims

1. A tire tread rubber composition comprising:
(a) 100 parts of an elastomer component comprising
(i) 45-20 parts, preferably 40-25 parts, more preferably 39-25 parts of styrene-butadiene rubber, and
(ii) 55-80 parts, preferably 60-75 parts, more preferably 61-75 parts of non-functionalized linear polybutadiene rubber having a cis bond content of at least 95% and a Tg of less than -101 °C, preferably -101 to -110 °C, more preferably less than -105 °C or -105 to -109 °C, wherein the non-functionalized linear polybutadiene rubber has a T80 value of 1 to 7, as measured using a viscometer, and preferably also a long chain branching (LCB) index of 3 to 9, preferably 5 to 8.5, as measured using a rubber process analyzer;
(b) at least one reinforcing silica filler in an amount of 80-120, preferably 85-110 phr, more preferably 85-100 phr;
(c) no more than 15 phr of carbon black filler, preferably 5-10 phr of carbon black filler;
(d) 5-20 phr, preferably 5-15 phr, more preferably 5-12 phr, even more preferably 7-10 phr, of at least one hydrocarbon resin having a Tg of 20 to 70 °C, preferably 30 to 50 °C;
(e) 10-29 phr, preferably 15-25 phr, of at least one liquid plasticizer; and
(f) a cure package,
wherein the total amount of (d) and (e) is no more than 40 phr, preferably 15-40 phr, more preferably 20-35 phr, even more preferably 25-35 phr.

2. The tire tread rubber composition of claim 1, wherein the non-functionalized linear polybutadiene rubber of (ii) has a T80 value of 1 to 3.

3. The tire tread rubber composition of claim 1, wherein the non-functionalized linear polybutadiene rubber of (ii) has a T80 value of 3.5 to 7.

4. The tire tread rubber composition of claim 1, wherein the non-functionalized linear polybutadiene rubber of (ii) has a LCB index of 3 to 5.

5. The tire tread rubber composition of any one of claims 1 to 4, wherein the elastomer component is free of natural rubber and polyisoprene.

6. The tire tread rubber composition of any one of claims 1 to 5, where the elastomer component is free of branched polybutadiene rubber having a T80 value of at least 9, preferably at least 10, as measured using a viscometer, and a LCB index of at least 11, preferably at least 13, as measured using a rubber process analyzer.

7. The tire tread rubber composition of any one of claims 1 to 6, wherein the hydrocarbon resin of (d) comprises an aromatic resin, preferably having a Tg of 35 to 50 °C.

8. The tire tread rubber composition of any one of claims 1 to 7, wherein the non-functionalized linear polybutadiene rubber of (ii) has a gel content of no more than 4%, preferably no more than 3%, more preferably no more than 2%, and even more preferably no more than 1%, as measured using a toluene immersion test.

9. The tire tread rubber composition of any one of claims 1 to 8, wherein the non-functionalized linear polybutadiene rubber of (a)(ii) has a g ratio of at least 0.8, at least 0.85, at least 0.9, at least 0.95, at least 1, at least 1.05, or at least 1.1, and a g' ratio of at least 0.85, at least 0.9, at least 0.95, or at least 1, as measured using gyration data and intrinsic viscosity data, respectively, using a GPC-MALs detector.

10. The tire tread rubber composition of any one of claims 1 to 9, wherein the SBR of (a)(i) is non-functionalized.

11. The tire tread rubber composition of any one of claims 1 to 10, wherein the SBR of (a)(i) has a styrene monomer content of 20 to 40 weight %, preferably 25 to 35 weight %.

12. The tire tread rubber composition of any one of claims 1 to 11, wherein the SBR has a vinyl bond content of no more than 20% and a Tg of -40 to -50 °C.

13. The tire tread rubber composition of any one of claims 1 to 12, wherein the SBR of (i) is oil-extended with 10-40 parts, preferably 10-30 parts of at least one oil per 100 parts of SBR.

14. A tire including a tread comprising the tire tread rubber composition of any one of claims 1 to 13.

15. A method for improving the wear resistance of a tire tread rubber composition which contains high cis polybutadiene as a majority amount by weight of 100 parts of an elastomer component, the method comprising incorporating a non-functionalized linear polybutadiene rubber having a cis bond content of at least 95% and a Tg of less than -101 °C, preferably -101 to -110 °C, more preferably less than -105 °C or -105 to -109 °C, wherein the non-functionalized linear polybutadiene rubber has a T80 value of 1 to 7, 1 to 3, or 3.5 to 7, as measured using a viscometer, and preferably also a long chain branching (LCB) index of 3 to 9, 3 to 5, or 5 to 8, as measured using a rubber process analyzer, into the tire tread rubber composition of any one of claims 1 to 13, wherein the wear resistance is improved by at least 10%, preferably at least 15%, preferably at least 20% as compared to a control tire tread rubber composition wherein the parts of non-functionalized linear polybutadiene rubber are replaced with an equivalent amount of branched polybutadiene rubber having a cis bond content of at least 95% and a Tg of less than -101 °C, preferably -101 to -110 °C, more preferably less than - 105 °C or -105 to -109 °C, wherein the branched polybutadiene rubber has a T80 value of at least 9, preferably at least 10, as measured using a viscometer, and preferably also a LCB index of at least 11, preferably at least 13 as measured using a rubber process analyzer and, wherein the wear resistance is measured by DIN abrasion.
